(19) Europäisches Patentamt
European Patent Office
Office européen des brevets

(11) EP 2 545 992 A1

(12) **EUROPEAN PATENT APPLICATION**
published in accordance with Art. 153(4) EPC

(43) Date of publication:
16.01.2013 Bulletin 2013/03

(51) Int Cl.:
*B01J 35/02* (2006.01)    *B01J 27/18* (2006.01)
*C09D 5/16* (2006.01)     *C09D 7/12* (2006.01)
*C09D 201/00* (2006.01)

(21) Application number: 11753458.6

(22) Date of filing: 10.03.2011

(86) International application number:
PCT/JP2011/055710

(87) International publication number:
WO 2011/111800 (15.09.2011 Gazette 2011/37)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 21.04.2010 JP 2010098262
12.03.2010 JP 2010056759

(71) Applicant: Ohara Inc.
Chuo-ku
Sagamihara-shi
Kanagawa 252-5286 (JP)

(72) Inventor: FU, Jie
Sagamihara-shi
Kanagawa 252-5286 (JP)

(74) Representative: Maiwald Patentanwalts GmbH
Elisenhof
Elisenstrasse 3
80335 München (DE)

(54) **PHOTOCATALYST, SLURRY MIXTURE, FORMING MEMBER AND COATING, COATING FILM FORMING MEMBER, SINTERED BODY, GLASS-CERAMIC COMPOSITE, GLASS, BUILDING MATERIAL AND CLARIFICATION MATERIAL**

(57)    Disclosed is a photocatalyst stably having excellent photocatalytic activity. The photocatalyst contains a crystal having a NASICON structure. Here, the NASICON structure is represented by Formula $A_mE_2(XO_4)_3$ (in the formula, a primary element A is one or more selected from the group composed of Li, Na, K, Cu, Ag, Mg, Ca, Sr and Ba; a secondary element E is one or more selected from the group composed of Zn, Al, Fe, Ti, Sn, Zr, Ge, Hf, V, Nb, and Ta; a tertiary element X is one or more selected from the group composed of Si, P, S, Mo, and W, and a coefficient is 0 or more, and 3 or less).

FIG. 1

**Description**

TECHNICAL FIELD

The present invention relates to a photocatalyst, a slurry mixture, a forming member and a coating, a coating film forming member, a sintered body, a glass-ceramic composite, glass, a building material and a clarification material.

BACKGROUND ART

A photocatalyst is a material that absorbs light to become a state with high energy and uses the energy to cause a chemical reaction to a reactant. As the photocatalyst, metal ions, metal complexes or the like are used, but inorganic compounds of a semiconductor including particularly titanium dioxide ($TiO_2$) are known to have a high catalytic activity as a photocatalyst and are most frequently used. A compound having the photocatalytic activity (hereinafter, only referred to as a "photocatalytic compound" in some cases) produces electrons or holes when irradiated with an energy light having a bond gap energy or higher, and thus an oxidation-reduction reaction is strongly promoted in the vicinity of the photocatalytic compound. The oxidation-reduction power that a photocatalyst has a function of decomposing and removing and clarifying contamination or contaminants, odorous components and the like and may also use sunlight and the like and thus has received attention as an energy-free environmental clarification technology. Further, the surface of a formed body including a photocatalytic compound exhibits hydrophilic properties of being easily soaked in water by irradiation of light, and thus is known to have a so-called self-cleaning action of being washed with waterdrops such as rain and the like.
Here, for the purpose of obtaining responsiveness by light at various wavelengths or easily progressing a specific photocatalytic reaction, a technology for changing a crystal structure of a photocatalytic compound has been reviewed (e.g., refer to Patent Literatures 1 to 3).
On one hand, an inorganic compound having photocatalytic activity, such as titanium dioxide ($TiO_2$) and the like is a very fine powder and it is difficult to treat the compound as it is, and thus in most cases, the compound is made into a coating to be coated on the surface of a substrate, or is formed in the form of film by a method such as vacuum deposition, sputtering, plasma and the like to be used when the compound is actually used (refer to Patent Literatures 4 to 6).
However, when an inorganic titanium compound is applied or coated on the surface of a substrate, there is a concern in that the durability of the applied film or coating layer is not sufficient and the applied film or coating layer is peeled off from the substrate.
As a technology to collectively solve these problems, that is, problems relating to production of a crystal having photocatalytic characteristics and fixation thereof, there is a technology for precipitating a photocatalytic crystal such as $TiO_2$ and the like in glass (e.g., refer to Patent Literatures 7 and 8). A crystallized glass obtained by dispersing a photocatalytic crystal in the entire glass is advantageous in that there is almost no change over time such as cracks on the surface, peeling-off, or the like and characteristics of the crystal may be used semi-permanently.

Patent Literature 1: Japanese Patent Application Laid-Open No. 2004-283769
Patent Literature 2: Japanese Patent Application Laid-Open No. 2007-075678
Patent Literature 3: Japanese Patent Application Laid-Open No. 2000-189806
Patent Literature 4: Japanese Patent Application Laid-Open No. 2008-81712
Patent Literature 5: Japanese Patent Application Laid-Open No. 2007-230812
Patent Literature 6: Japanese Patent Application Laid-Open No. 9-315837
Patent Literature 7: Japanese Patent Application Laid-Open No. 2008-120655
Patent Literature 8: Japanese Patent Application Laid-Open No. 2009-57266

DISCLOSURE OF THE INVENTION

Problems to be Solved by the Invention

However, the technologies of Patent Literatures 1 to 3 focus attention on the size of the bandgap of the photocatalyst, but does not focus on the size of the photocatalytic activity, and have a problem in that the photocatalytic activity is weak and insufficient. Further, the photocatalysts of Patent Literatures 1 to 3 have a problem in that the photocatalytic activity becomes easily unstable.
The present invention has been made in consideration of the above problems, and an object of the present invention is to provide a photocatalyst stably having excellent photocatalytic activity, a slurry mixture using the same, a forming member, and a coating.

Further, another object of the present invention is to provide a material having photocatalytic characteristics as a bulk material without processing such as a thin film, coating or the like on the surface thereof. Specifically, another object of the present invention is to provide a glass ceramic having excellent durability and in which fine crystals having photocatalytic characteristics are present inside or on the surface of the material. In addition, yet another object of the present invention is to provide a method for preparing the same glass ceramic and a photocatalytically functional material having excellent photocatalytic activity and durability, to which the glass ceramic is applied.

Means for Solving the Problems

The present inventors have intensively studied to solve the above-described problem, and as a result, have found that by containing a crystal having a NASICON (sodium super-ionic conductor) structure in a photocatalyst, the photocatalytic activity of the photocatalyst may be enhanced and the heat resistance of the photocatalyst may be enhanced, thereby completing the present invention.

The present inventors have intensively studied to solve the above-described problem, and as a result, have found that the crystal having a NASICON structure has excellent photocatalytic characteristics, and a material and a product having excellent photocatalytic functions may be provided by producing the crystal having a NASICON structure in glass, thereby completing the present invention. Specifically, the present invention provides the followings.

(1) A photocatalyst containing a crystal having a NASICON structure.

(2) The photocatalyst described in (1), in which the NASICON structure is represented by Formula $A_mE_2(XO_4)_3$ (in the formula, a primary element A is one or more selected from the group composed of Li, Na, K, Cu, Ag, Mg, Ca, Sr, and Ba; a secondary element E is one or more selected from the group composed of Zn, Al, Fe, Ti, Sn, Zr, Ge, Hf, V, Nb, and Ta; a tertiary element X is one or more selected from the group composed of Si, P, S, Mo, and W; and a coefficient m is 0 or more, and 5 or less).

(3) The photocatalyst described in (2), including one or more selected from Ti, Zr, and V, as the secondary element.

(4) The photocatalyst described in (2) or (3), including one or more selected from P, S, Mo, and W, as the tertiary element.

(5) The photocatalyst described in any one of (1) to (4), further containing a compound crystal including one or more components selected from Zn, Ti, Zr, W, and P.

(6) The photocatalyst described in (5), in which the compound crystal contains one or more crystals selected from $TiO_2$, $WO_3$, ZnO, $TiP_2O_7$, and solid solutions thereof.

(7) The photocatalyst described in any one of (1) to (6), wherein crystals included in the photocatalyst have an average particle diameter in a range of 3 nm or more, and 10 $\mu$m or less.

(8) The photocatalyst described in any one of (1) to (7), in which a catalytic activity is exhibited by light at a wavelength from an ultraviolet region to a visible region.

(9) The photocatalyst described in (8), in which a decomposition activation index of methylene blue based on Japanese Industrial Standards JIS R 1703-2:2007 is 3.0 nmol/l/min or more.

(10) The photocatalyst described in any one of (1) to (9), in which a contact angle between a surface irradiated by light at a wavelength from the ultraviolet region to the visible region and a waterdrop is 30° or less.

(11) The photocatalyst described in any one of (1) to (10), in which a content of one or more non-metal element components selected from the group composed of F components, Cl components, Br components, S components, N components, and C components is 20% or less by mass based on a total mass of the photocatalyst.

(12) The photocatalyst described in any one of (1) to (11), wherein at least one metal particle selected from the group composed of Ag, Au, Pd, Re, and Pt is included in an amount of 5% or less by mass based on a total mass of the photocatalyst.

(13) The photocatalyst described in any one of (1) to (12), in which rare earth components and/or transition metal components are included in an amount of from 0% by mass to 20% by mass and from 0% by mass to 10% by mass, based on a total mass of the photocatalyst.

(14) The photocatalyst described in any one of (1) to (10), in which the photocatalyst is composed of glass ceramic having photocatalytic activity.

(15) The photocatalyst described in (14), in which the photocatalyst contains 3% by mole to 70% by mole of one or more components selected from $SiO_2$ components, $GeO_2$ components, $P_2O_5$ components, and $B_2O_3$, 0.1% by mole to 60% by mole of one or more components selected from $Rn_2O$ components, RO components, $Cu_2O$, and $Ag_2O$, and 0.1% by mole to 90% by mole of one or more components selected from ZnO components, $Al_2O_3$ components, $Fe_2O_3$ components, $TiO_2$ components, $SnO_2$ components, $ZrO_2$ components, $HfO_2$ components, $V_2O_5$ components, $Nb_2O_5$ components, $Ta_2O_5$ components, $MoO_2$ components, and $WO_3$ components, based on a total material mass of a glass having a composition in terms of oxides (in the formula, Rn is one or more selected from Li, Na, K, Rb, and Cs, and R is one or more selected from Be, Mg, Ca, Sr, and Ba).

(16) The photocatalyst described in (14) or (15), in which the photocatalyst contains 0% by mole to 30% by mole of $Bi_2O_3$ components and/or $TeO_2$ components, 0% by mole to 30% by mole of $Ln_2O_3$ components (Ln is one or more selected from Y, Ce, La, Nd, Gd, Dy and Yb), 0% by mole to 10% by mole of MxOy components (M is one or more selected from Cr, Mn, Co and Ni, and each of x and y is the smallest natural number satisfying x:y = 2:(a valence of M)), and 0% by mole to 5% by mole of $As_2O_3$ components and/or $Sb_2O_3$ components, based on a total material mass of a glass having a composition in terms of oxides.

(17) The photocatalyst described in any one of (14) to (16), in which the photocatalyst contains one or more non-metal element components selected from the group composed of F components, Cl components, Br components, S components, N components, and C components in an amount of 20% or less by mass as an external division based on a total mass of the photocatalyst in terms of oxides.

(18) The photocatalyst described in any one of (14) to (17), in which the photocatalyst contains at least one metal component selected from the group composed of Au, Pd, Re, and Pt in an amount of 5.0% or less by mass based on a total mass of the photocatalyst in terms of oxides.

(19) The photocatalyst described in any one of (14) to (18), further containing an apatite crystal.

(20) The photocatalyst described in (19), in which the apatite crystal is represented by Formula $Q_5(ZO_4)_3D$ (in the formula, Q is one or more selected from the group composed of Ca, Sr, Ba, Al, Y, La, Ti, Na, K, and Cu, Z is one or more selected from the group composed of P, Si, Al, and V, and D is one or more selected from the group composed of F, Cl, Br, OH, O, S, and N) .

(21) The photocatalyst described in any one of (14) to (20), in which the photocatalyst has a powder granulated shape or fiber shape.

(22) A slurry mixture containing the photocatalyst described in any one of (1) to (21).

(23) A slurry mixture containing the photocatalyst described in any one of (1) to (21) and a solvent.

(24) The slurry mixture described in (23), in which a content of the photocatalyst is 2% by mass or more based on the total mixture.

(25) A forming member containing the photocatalyst described in any one of (1) to (21).

(26) A coating containing the photocatalyst described in any one of (1) to (21).

(27) A coating film forming member formed by applying the coating described in (16) on a member.

(28) The coating film forming member described in (27), in which the member is composed of metal, ceramics, graphite, glass, stone, cement, concrete or combinations thereof, or a laminated body thereof.

(29) A sintered body formed by sintering crushed glass, including the photocatalyst described in any one of (1) to (21).

(30) A glass ceramic composite including a substrate and a glass ceramic layer provided on the substrate, in which the glass ceramic layer includes the photocatalyst described in any one of (1) to (21).

(31) A glass in which a crystal having photocatalytic activity is produced from the glass by heating to become the photocatalyst glass ceramic described in any one of (1) to (21).

(32) The glass described in (31), in which the glass has a powder granulated shape or fiber shape.

(33) A slurry mixture containing the glass described in (31) or (32).

(34) A building material containing the photocatalyst described in any one of (1) to (21) at least on a surface thereof.

(35) A clarification material containing the photocatalyst described in any one of (1) to (21) at least on a surface thereof.

Effects of the Invention

According to the present invention, by containing a crystal having a NASICON structure in a photocatalyst, it is possible to enhance the photocatalytic activity of the photocatalyst and the heat resistance of the photocatalyst. For that reason, it is possible to provide a photocatalyst having excellent photocatalytic activity and a small variation in photocatalytic activity caused by sintering conditions, a slurry mixture using the same, a forming member, and a coating.

Further, in a photocatalyst composed of particularly glass ceramic, a crystal having a NASICON structure having photocatalytic activity is homogeneously present inside and on the surface thereof, and even though the surface is cut off, the performance does not easily deteriorate, and thus a photocatalytic material having a considerably excellent durability is produced. In addition, the glass ceramic has a high degree of freedom when the size or shape thereof is processed, and may be used in various items requiring photocatalytic functions. Accordingly, a photocatalyst composed of glass ceramic is useful as a photocatalytically functional material.

Furthermore, according to the method for preparing a photocatalyst of the present invention, it is possible to produce a crystal having a NASICON structure in glass by controlling the blending composition of raw materials and the temperature of heat treatment, and thus it is possible to readily prepare a photocatalyst useful as a photocatalytically functional material on an industrial scale by including excellent photocatalytic activity without using a special equipment.

BRIEF DESCRIPTION OF THE DRAWINGS

FIG. 1 is an XRD pattern of a photocatalyst in Example A1.

FIG. 2 is a view illustrating a change in coloration by methylene blue before and after the irradiation of ultraviolet rays on the photocatalyst in Example A1.

FIG. 3 is an XRD pattern of a sintered body in Example A7.

FIG. 4 is a graph illustrating the test results of methylene blue decomposition activity of the sintered body in Example A7.

FIG. 5 is an XRD pattern of a sintered body in Example A9.

FIG. 6 is a graph illustrating the test results of hydrophilic properties of the sintered body in Example A9.

FIG. 7 is an XRD pattern of a particulate after heating in Example A13.

FIG. 8 is an XRD pattern of glass ceramics in Examples B1, B2, and B26.

FIG. 9 is a graph illustrating the test results of methylene blue decomposition activity of the glass ceramic in Example B1.

FIG. 10 is a graph illustrating the test results of hydrophilic properties of glass ceramic in Example B13.

FIG. 11 is a graph illustrating the test results of hydrophilic properties of glass ceramic in Example B14.

FIG. 12 is a graph illustrating the test results of hydrophilic properties of glass ceramic in Example B15.

FIG. 13 is a graph illustrating the test results of hydrophilic properties of glass ceramic in Example B16.

FIG. 14 is an XRD pattern of glass ceramic in Examples B19 to B21.

FIG. 15 is an XRD pattern of glass ceramic in Example B23.

FIG. 16 is a graph illustrating the test results of methylene blue decomposition activity of glass ceramics in Examples B4, B5, B17, and B18.

FIG. 17 is a graph illustrating the test results of hydrophilic properties of glass ceramics in Examples B1, B19, and B20.

FIG. 18 is a graph illustrating the test results of hydrophilic properties of glass ceramics in Examples B1, B19, and B20, after the irradiation of ultraviolet rays is stopped.

FIG. 19 is a graph illustrating the test results of hydrophilic properties of glass ceramic in Example B23.

FIG. 20 is an XRD pattern of glass ceramic in Example B52.

FIG. 21 is a graph illustrating the test results of methylene blue decomposition activity of Example B53.

FIG. 22 is a graph illustrating the test results of methylene blue decomposition activity of Example B26.

FIG. 23 is an XRD pattern of a sintered body in Example B58.

FIG. 24 is a graph illustrating the test results of hydrophilic properties of the sintered body in Example B58.

PREFERRED MODE FOR CARRYING OUT THE INVENTION

Hereinafter, an embodiment of the present invention will be described, but the present invention is not limited thereto.

The photocatalyst of the present invention contains a crystal having a NASICON structure (hereinafter, referred to as a "NASICON crystal" in some cases). The NASICON crystal structure is a structure that may be represented by Formula $A_mE_2(XO_4)3$ to be described below and that forms a three-dimensional network structure by connecting an $EO_6$ octahedron and an $XO_4$ tetrahedron to share a vertex. In the structure, there are two sites at which the A ion may be present and these sites form a continuous three-dimensional tunnel. The greatest characteristic of the crystal structure is that the A ion readily moves in the crystal. That is, the NASICON crystal has been focused as an electrolyte material in the related art in terms of the chemical stability and excellent ion conductivity thereof. In the present invention, a photocatalyst may take the structure to enhance the photocatalytic activity of the photocatalyst and enhance the heat resistance of the photocatalyst, thereby obtaining a photocatalyst stably having excellent photocatalytic activity. Here, it is assumed that the photocatalyst of the present invention may enhance the photocatalytic activity because the A ion readily moves in the crystal, reducing the probability of recombination of electrons and holes generated by the irradiation of light. Further, it is assumed that the photocatalyst of the present invention may enhance the heat resistance because the NASICON crystal has no phase transition and is stable to heat, and it is difficult for photocatalytic characteristics to be lost due to heating conditions such as sintering and the like.

In addition, the glass ceramic mentioned in the present invention is a material obtained by subjecting glass to heat treatment to precipitate a crystal phase in the glass phase and thus is also referred to as a crystallized glass. The glass ceramic may include not only a material composed of a glass phase and a crystal phase, but also a material in which all of the glass phase are transformed to a crystal phase, that is, a material with 100% by mass of a crystal amount (degree of crystallization) in the material. In general, an engineered ceramic or ceramic sintered body, to which a pulverulent body of glass is added, is referred to as a "glass ceramic" in some cases, but it is difficult for the ceramic to form a pore-free complete sintered body. Therefore, the glass ceramic mentioned in the present invention may be distinguished from these glass ceramics depending on the presence of these pores (for example, porosity). In the glass ceramic mentioned in the present invention, the particle diameter of crystals, the kind of precipitated crystal and the degree of crystallization may be controlled by controlling the crystallization process.

Hereinafter, embodiments of the photocatalyst of the present invention will be described in detail, but the present invention is not limited to the following embodiments and may be modified and implemented within the desired scope of the present invention. In addition, with respect to the points of the explanations, any overlapping description may be appropriately omitted, but the spirit of the invention is not limited.

NASICON Crystal

A NASICON crystal which the photocatalyst of the present invention has is represented by Formula $A_m E_2 (XO_4)_3$ (in the formula, a primary element A is one or more selected from the group composed of Li, Na, K, Cu, Ag, Mg, Ca, Sr, and Ba; a secondary element E is one or more selected from the group composed of Zn, Al, Fe, Ti, Sn, Zr, Ge, Hf, V, Nb, and Ta; a tertiary element X is one or more selected from the group composed of Si, P, S, Mo, and W; and a coefficient m is 0 or more, and 5 or less). The compound represented by the Formula stably takes a NASICON structure, and thus photocatalytic characteristics may be easily enhanced.

Here, the primary element A is preferably one or more selected from the group composed of Li, Na, K, Cu, Ag, Mg, Ca, Sr, and Ba. These ions are present at sites for forming a tunnel in the crystal and thus may readily move in the crystal. For that reason, the probability of recombination of electrons and holes generated by the irradiation of light is reduced, and thus the photocatalytic characteristics of the NASICON crystal are improved. In particular, when at least one of Cu and Ag is included as the primary element A, high antibiotic properties may be exhibited along with the above-described photocatalytic characteristics without irradiation of light, and thus it is more preferred that any one of them is included. Further, in the primary element A, for example, $Li_2CO_3$, $LiNO_3$, LiF, $Na_2O$, $Na_2CO_3$, $NaNO_3$, NaF, $Na_2S$, $Na_2SiF_6$, $K_2CO_3$, $KNO_3$, KF, $KHF_2$, $K_2SiF_6$, CuO, $Cu_2O$, CuCl, $Ag_2O$, AgCl, $MgCO_3$, $MgF_2$, $CaCO_3$, $CaF_2$, $Sr(NO_3)_2$, $SrF_2$, $BaCO_3$, $Ba(NO_3)_2$, and the like may be used as a raw material.

Further, it is preferred that the secondary element E is one or more selected from the group composed of Zn, Al, Fe, Ti, Sn, Zr, Ge, Hf, V, Nb, and Ta. These are components which are indispensable to a stable NASICON crystal structure and are involved in the formation of the conduction band of the crystal to form a bandgap having a range from 2.5 eV to 4 eV. For that reason, it is possible to obtain a photocatalyst which responds not only to ultraviolet rays, but also to visible rays by containing at least one element of them. Further, from the viewpoint of enhancing the photocatalytic efficiency, it is more preferred to include one or more selected from Ti, Zr, Fe, and V and most preferred to include Ti. In particular, the bandgap is in a range from 2.8 eV to 3.4 eV by including Ti, and thus a photocatalyst which responds to both ultraviolet rays and visible rays may be readily obtained. Here, the stoichiometric ratio of one or more selected from Ti, Zr, Fe, and V to the entire secondary element E is preferably 0.1, more preferably 0.3, and most preferably 0.5, as the lower limit. In particular, the photocatalytic characteristics may be enhanced more easily by increasing the stoichiometric ratio of one or more selected from Ti, Zr, and V to the entire secondary element E. In addition, in the secondary element E, for example, ZnO, $ZnF_2Al_2O_3$, $Al(OH)_3$, $AlF_3$, FeO, $Fe_2O_3$, $TiO_2$, SnO, $SnO_2$, $SnO_3$, $ZrO_2$, $ZrF_4$, $GeO_2$, $Hf_2O_3$, $Fe_2O_3$, $V_2O_3$, $Nb_2O_5$, $Ta_2O_5$, and the like may be used as a raw material.

Furthermore, it is preferred that the tertiary element X includes one or more selected from Si, P, S, Mo, and W. These elements are components which are indispensable to a stable NASICON crystal structure, and have an effect capable of adjusting the size of the bandgap of the NASICON crystal. For that reason, it is preferred to contain at least one of these elements. Among them, it is more preferred to include one or more selected from Si, P, S, Mo, and W from the viewpoint that the NASICON crystal is readily formed. Further, when a photocatalyst is formed from glass ceramic, it is most preferred to include P from the viewpoint that the crystal may be easily produced from glass. In addition, in the tertiary element X, for example, $SiO_2$, $K_2SiF_6$, $Na_2SiF_6$, $Al(PO_3)_3$, $Ca(PO_3)_2$, $Ba(PO_3)_2$, $Na(PO_3)$, $BPO_4$, $H_3PO_4$, NaS, $Fe_2S_3$, $CaS_2$, $WO_3$, $MoO_3$ and the like may be used as a raw material.

The coefficient m in the Formula is appropriately set depending on the kind of E or X, but is in a range from 0 to 5, and more preferably from 0 to 4. As m is within the range, the NASICON crystal structure is maintained, and thus the thermal and chemical stability is enhanced, the deterioration in photocatalytic characteristics caused by the change in environment is reduced, and it is difficult for the degradation in the photocatalytic characteristics caused by heating to occur when the NASICON crystal is complexed with other materials. Here, when m exceeds 5, the NASICON structure may not be maintained, and thus the photocatalytic characteristics are degraded.

Examples of the NASICON crystal include $RnTi_2(PO_4)_3$, $R_{0.5}Ti_2(PO_4)_3$, $RnZr_2(PO_4)_3$, $R_{0.5}Zr_2(PO_4)_3$, $RnGe_2(PO_4)_3$, $R_{0.5}Ge_2(PO_4)_3$, $Rn_4AlZn(PO_4)_3$, $Rn_3TiZn(PO_4)_3$, $Rn_3V_2(PO_4)_3$, $Al_{0.3}Zr_2(PO_4)_3$, $Rn_3Fe(PO_4)_3$, $RnNbAl(PO_4)_3$, $La_{1/3}Zr_2(PO_4)_3$, $Fe_2(MoO_4)_3$, $Fe_2(SO_4)_3$, $Rn_4Sn_2(SiO_4)_3$, $Rn_4Zr_2(SiO_4)_3$, $Cu_4Zr_2(SiO_4)_3$, $Ag_4Zr_2(SiO_4)_3$, $R_2Zr_2(SiO_4)_3$, $NbTi(PO_4)_3$, $RnZr_2(Si_{2/3}P_{1/3}O_4)_3$, $RTiCr(PO_4)_3$, $RTiFe(PO_4)_3$, $RTiIn(PO_4)_3$, and $ZnTiFe(PO_4)_3$ (in the formula, Rn is one or more selected from the group composed of Li, Na, K, and Cu, and R is one or more selected from the group composed of Mg, Ca, Sr, and Ba).

Further, the bandgap energy may be adjusted by using the solid solutions thereof, thereby making it possible to improve the responsiveness to light. The solid solution in the present invention refers to a state in which two or more metal solids or non-metal solids are dissolved at an atomic level in each other and present as an entirely uniform solid phase, and may refer to a mixed crystal in some cases. There are an invasion-type solid solution in which elements smaller than the interval of crystal lattices are introduced, a substitution-type solid solution in which elements are replaced with parent phase atoms to be introduced, and the like by a dissolution method of solute atoms. Further, hereinafter, in the present specification, the above-described NASICON crystal having photocatalytic characteristics and solid solution crystals thereof are collectively expressed as a "photocatalytic crystal" in some cases.

The photocatalyst of the present invention preferably includes a crystal phase including crystals composed of one or more of the NASICON crystal and solid solutions thereof preferably in a range from 1% by volume to 99% by volume based on the entire volume thereof. The photocatalyst may have good photocatalytic characteristics by containing the crystal phase in an amount of 1% or more. On one hand, when the crystal phase is contained in an amount of 99% or less, for example, the glass phase is removed by etching using acid and the like, and thus the degree of exposure of the crystals on the surface thereof is increased, and the specific surface area is increased, thereby further enhancing the photocatalytic characteristics.

In particular, in a state in which the photocatalyst is composed of glass ceramic, the amount of the crystal phase based on the entire glass ceramic may be freely selected according to the use purpose of glass ceramic, which considers the transparency to be important, gives priority to the photocatalytic characteristics, or the like. The amount of the crystal phase which is precipitated in glass may be controlled by controlling the heat treatment conditions. When the amount of the crystal phase is large, the photocatalytic function tends to be enhanced, whereas the mechanical strength or transparency of the entire glass ceramic may degrade, and thus the amount of the crystal phase is preferably in a range of 99% by volume or less, more preferably in a range of 97% by volume or less, and most preferably in a range of 95% by volume or less. On one hand, when the amount of the crystal phase is small, effective photocatalytic characteristics may not be elicited, and thus the amount of the crystal phase is preferably in an amount of 1% by volume or more, more preferably 3% by volume or more, and most preferably 5% by volume or more.

Compound crystal

The photocatalyst of the present invention may contain other compound crystals along with the NASICON crystal. Accordingly, characteristics such as photocatalytic characteristics, mechanical characteristics or the like that the NASICON crystal has are adjusted, and thus the photocatalyst may be easily used for a desired use. Here, the compound crystal is appropriately selected according to the desired characteristics. However, it is preferred to contain a compound crystal including one or more components selected from Zn, Ti, Zr, W, and P. As these compound crystals are present in the vicinity of the NASICON crystal, photocatalytic characteristics of the photocatalyst may be further enhanced. It is more preferred to contain one or more crystals selected from $TiO_2$, $WO_3$, $ZnO$, $TiP_2O_7$, and solid solutions thereof among them. The amount of crystals that have photocatalytic characteristics is increased by containing these crystals, and thus the photocatalytic characteristics of the photocatalyst may be further enhanced. In addition, when $TiO_2$ is contained, it is more preferred that a crystal composed of anatase or rutile $TiO_2$ is included. The inherent photocatalytic activity of each crystal may be imparted to the photocatalyst by allowing these crystals to coexist.

In the photocatalyst of the present invention, the NASICON crystal shows high photocatalytic characteristics as a simple substance even though the photocatalyst per se does not contain these crystals that have photocatalytic characteristics. That is, the possibility that the catalytic activity may be controlled is increased even by controlling the composition of raw materials or heat treatment conditions such that components constituting the NASICON crystal are substituted with various combinations. Further, it becomes difficult for the photocatalytic characteristics to be lost even by heating during the resultant crystallization, and thus a photocatalyst having high photocatalytic characteristics may be easily obtained. Therefore, the crystal phase of the photocatalyst of the present invention preferably has the NASICON crystal as a main crystal phase and more preferably has only the NASICON crystal phase.

Further, the compound crystal may be a NASICON crystal produced or one artificially applied to a raw material composition of the photocatalyst, or a by-product during the production process of the NASICON crystal.

Here, the content of the compound crystal may be appropriately set according to the desired characteristics. Here, when the amount of the compound crystal is extremely small, it is difficult to adjust photocatalytic characteristics, mechanical characteristics and the like. On one hand, when the amount of the photocatalytic crystal is in excess, the heat resistance as the entire photocatalyst is easily impaired. Thus, the lower limit of the amount of the compound crystal to be mixed is preferably 0.5% by mass, more preferably 3.0% by mass and most preferably 10.0% by mass, based on the total mass of the photocatalyst. On the other hand, the upper limit of the amount of the compound crystal to be mixed is preferably 95.0% by mass, more preferably 80.0% by mass and most preferably 60.0% by mass, based on the total mass of the photocatalyst.

For the average particle size of the NASICON crystal and/or compound crystal to be included in the photocatalyst, the average particle diameter is preferably 3 nm or more and 10 $\mu$m or less and more preferably 10 nm or more and 10 $\mu$m or less, when the spherical approximation is adopted. Among them, particularly, in order to elicit effective photocatalaytic characteristics, the size of the crystal is preferably from 5 nm to 10 $\mu$m, more preferably from 10 nm to 3 $\mu$m, even more preferably from 10 nm to 1 $\mu$m, and most preferably from 10 nm to 300 nm. The crystal particle size and the average value thereof may be estimated by using, for example, the Scherrer's formula: $D = 0.9\lambda/(\beta\cos\theta)$ in the half width of the diffraction peak of X-ray diffraction device (XRD).

Here, D is the size of the crystal, $\lambda$ is the wavelength of X-ray, and $\theta$ is a Bragg angle (approximately half of the diffraction angle $2\theta$). In particular, when the diffraction peak of XRD is weak or the diffraction peak is overlapped with another peak, from an area of the crystal particles measured by using a scanning electron microscope (SEM) or a transmission electron microscope (TEM), an estimate may be made even by assuming the area to be a circle to calculate the diameter thereof. When the particle size average value of the crystal is calculated by using a microscope, it is preferred that diameters of 100 or more crystals are randomly measured. In addition, the size of the NASICON crystal and/or compound crystal may be controlled to a desired size by controlling, for example, the particle size of a raw material when the NASICON crystal is formed or heat treatment conditions in the sintering process. In particular, in a state in which the photocatalyst is composed of glass ceramic, it is possible to control the size of precipitated crystals by controlling heat treatment conditions.

Further, it is preferred that the photocatalyst of the present invention (more preferably, the photocatalyst composed of glass ceramic) contains an apatite crystal along with the NASICON crystal having photocatalytic activity. The apatite crystal is highly compatible with organic materials and has a property of adsorbing organic materials. That is, the NASICON crystal acts as a catalyst for an organic material adsorbed by the apatite crystal, and thus the photocatalytic activity that the NASICON crystal has may be further enhanced.

Here, it is preferred that the apatite crystal included in the photocatalyst of the present invention is represented by Formula $Q_5(ZO_4)_3D$ (in the formula, Q is one or more selected from the group composed of Ca, Sr, Ba, Al, Y, La, Ti, Na, K, and Cu, Z is one or more selected from the group composed of P, Si, Al and V, and D is one or more selected from the group composed of F, Cl, Br, OH, O, S, and N), and in particular, fluorapatite ($Ca_5(PO_4)_3F$), hydroxyapatite ($Ca_5(PO_4)_3(OH)$), and solid solutions thereof are more preferred. In the photocatalyst of the present invention, the apatite crystal is highly compatible with organic materials and has an action of adsorbing organic materials. Therefore, an organic material may be easily brought in contact with the photocatalyst crystal by allowing the apatite crystal to be present in the photocatalyst along with the photocatalytic crystal, thereby enhancing the photocatalytic action.

Here, particularly in the state of glass ceramic, the crystallization rate of glass ceramic by volume is preferably 1%, more preferably 5%, and most preferably 10%, as the lower limit, and preferably 99%, more preferably 97%, and most preferably 95%, as the upper limit.

The photocatalyst of the present invention may contain rare earth components. These rare earth components are dissolved as a solid solution in the NASICON crystal or present in the vicinity thereof to improve photocatalytic characteristics, and may be arbitrarily added to the photocatalyst. However, when the sum of the contents of rare earth components exceeds 30%, the stability of the photocatalyst significantly deteriorates. Therefore, the total amount of rare earth components is preferably 30%, more preferably 20%, and most preferably 10%, as the upper limit based on the total mass of the photocatalyst. Examples of rare earth components used as the photocatalyst of the present invention include one or more selected from the group composed of Y, La, Ce, Pr, Nd, Pm, Sm, Eu, Gd, Tb, Dy, Ho, Er, Tm, Yb, and Lu. These rare earth components may be introduced into glass ceramic by using, for example, $La_2O_3$, $La(NO_3)_3 \cdot XH_2O$ (X is any integer), $Gd_2O_3$, $GdF_3$, $Y_2O_3$, $YF_3$, $CeO_2$, $CeF_3$, $Nd_2O_3$, $DY_2O_3$, $Yb_2O_3$, $Lu_2O_3$, and the like as a raw material.

Further, the photocatalyst of the present invention may contain transition metal components. These transition metal components are dissolved as a solid solution in the NASICON crystal or present in the vicinity thereof to contribute to the improvement of photocatalytic characteristics, and absorb visible rays at a certain range of wavelengths to impart an appearance color to the photocatalyst, and are arbitrary components in the photocatalyst. In particular, it is possible to enhance the stability of the photocatalyst and readily control the appearance color of the photocatalyst by adjusting the total amount of the transition metal components to 10% or less. Therefore, the total amount of transition metal components is preferably 10%, more preferably 5%, and most preferably 3%, as the upper limit based on the total mass of a composition in terms of oxides. In addition, when these components are added, the amount to be added is preferably 0.01%, more preferably 0.03%, and most preferably 0.05%, as the lower limit. Examples of the transition metal components used as the photocatalyst of the present invention include one or more selected from the group composed of Cr, Mn, Co, and Ni.

In particular, in the state of glass ceramic, components, which are materials obtained by subjecting glass to heat treatment to precipitate the crystal phase from the glass and constitute the above-described NASICON crystal, depend on components that the glass contains. Therefore, in order to obtain a desired crystal, it is necessary to contain the components required for the crystal in the glass. However, according to the kind of components to be blended and the amount thereof, in many cases, vitrification is not achieved at first or crystals other than a desired crystal are precipitated even through vitrification is achieved. For that reason, in determining the glass composition, it is necessary to solve a problem in that glass is obtained and a desired crystal is precipitated.

Components of Glass Ceramic

Thereafter, when the photocatalyst of the present invention is composed of glass ceramic, components of the glass ceramic will be described. The content of each of the components is represented by % by mole in terms of oxides, unless particularly specified. Here, the "composition in terms of oxides" is a composition in which, when it is assumed that an oxide, a complex salt, metal fluoride and the like, which are used as a raw material of the component constituting glass, are all decomposed and converted into an oxide during the melting thereof, each component contained in glass is represented by setting the total material amount of the produced oxide to 100% by mole.

$SiO_2$ components constitute a network structure of glass and enhance the stability and chemical durability of glass, constitute the NASICON crystal, and may be arbitrarily added to glass ceramic. However, when the contents of $SiO_2$ components exceed 70%, the meltability of glass deteriorates. Therefore, the contents of $SiO_2$ components are preferably 70%, more preferably 65%, and most preferably 60%, as the upper limit. Further, when $SiO_2$ components are contained, in order to exhibit the effects of the components, the contents thereof are preferably 0.1%, more preferably 0.5%, and most preferably 1%, as the lower limit. $SiO_2$ components may be introduced into glass ceramic by using, for example, $SiO_2$, $K_2SiF_6$, $Na_2SiF_6$, and the like as a raw material.

$GeO_2$ components are arbitrary components that have functions similar to those of the $SiO_2$ and constituting components of the NASICON crystal. The amount of $GeO_2$ components, which is approximately equivalent to the amount of $SiO_2$, may be contained in glass ceramic, but are very expensive, and thus it is not preferred in terms of costs that the components are used in large amounts. $GeO_2$ components may be introduced into glass ceramic by using, for example, $GeO_2$, and the like as a raw material.

$P_2O_5$ components constitute the network structure of glass and constituting components of the NASICON crystal. $P_2O_5$ components may be arbitrarily added, but a desired NASICON crystal having photocatalytic activity tends to be easily precipitated by preparing the glass ceramic in a phosphate-based glass including $P_2O_5$ components as a main component of the network structure. Further, the heat treatment temperature, at which the crystal is precipitated in glass, may be decreased by blending $P_2O_5$ components. However, when the content of $P_2O_5$ exceeds 70%, it is difficult to precipitate a NASICON crystal having a desired photocatalyst. Therefore, the contents of $P_2O_5$ components are preferably 70%, more preferably 60%, and most preferably 55%, as the upper limit. In addition, $P_2O_5$ components are not essential, but in order to take the above-described benefits of phosphate-based glass, the contents thereof are preferably 0.1%, more preferably 0.5%, and most preferably 1%, as the lower limit.

Here, $P_2O_5$ components are also components that may impart adsorptivity on organic materials to the glass ceramic by precipitating an apatite crystal such as $Ca_5(PO_4)_3F$ and the like in glass. In particular, a larger amount of apatite crystals may be produced along with a larger amount of the NASICON crystal having photocatalytic activity by preparing the glass ceramic into a phosphate-based glass. In particular, it is possible to precipitate apatite crystals and NASICON crystals at a lower heat treatment temperature by blending $P_2O_5$ components in large amounts. However, when the content of $P_2O_5$ exceeds 70%, it is difficult to precipitate apatite crystals. Therefore, when $P_2O_5$ components are added from the viewpoint of precipitating apatite crystals, the contents of $P_2O_5$ components are, as % by mole, preferably 3%, more preferably 5%, and most preferably 10%, as the lower limit, and preferably 70%, more preferably 60%, and most preferably 50%, as the upper limit.

$P_2O_5$ components may be introduced into glass ceramic by using, for example, $Al(PO_3)_3$, $Ca(PO_3)_2$, $Ba(PO_3)_2$, $NaPO_3$, $BPO_4$, $H_3PO_4$, and the like as a raw material.

$B_2O_3$ components constitute the network structure of glass, enhance the stability of glass, and may be arbitrarily added. However, when the content thereof exceeds 70%, it strongly tends to be difficult to precipitate a desired NASICON crystal having photocatalytic activity. Therefore, the contents of $B_2O_3$ components are preferably 70%, more preferably 65%, and most preferably 60%, as the upper limit. When $B_2O_3$ components are contained, in order to exhibit the effects of the components, the contents thereof are preferably 0.1%, more preferably 0.5%, and most preferably 1%, as the lower limit. $B_2O_3$ components may be introduced into glass ceramic by using, for example, $H_3BO_3$, $Na_2B_4O_7$, $Na_2B_4O_7 \cdot 10H_2O$, $BPO_4$, and the like as a raw material.

It is preferred that the glass ceramic contains at least one or more components selected from $SiO_2$ components, $GeO_2$ components, $P_2O_5$ components, and $B_2O_3$ components in a range of 3% or more and 70% or less. In particular, by setting the total amount of $SiO_2$ components, $GeO_2$ components, $B_2O_3$ components, and $P_2O_5$ components to 70% or less, the meltability, stability and chemical durability of glass are improved and it is difficult to generate cracks on the glass ceramic after heat treatment, thereby simply obtaining a glass ceramic having a higher mechanical strength. Therefore, the total amount thereof ($SiO_2$ + $GeO_2$ + $B_2O_3$ + $P_2O_5$) is preferably 70%, more preferably 65%, and most preferably 60%, as the upper limit, based on the total material mass of a composition in terms of oxides. Further, when the total amount of these components is less than 3%, it is difficult to obtain glass, and thus the amount added is preferably 3% or more, more preferably 5% or more, and most preferably 10% or more.

$Li_2O$ components, $Na_2O$ components, and $K_2O$ components improve the meltability and stability of glass, and may be arbitrarily added. Further, the components are constituting components of the NASICON crystal and have the effects of bring photocatalytic activity and decreasing the glass transition temperature to suppress the heat treatment temperature at a lower level when a NASICON crystal having photocatalytic characteristics is produced. However, when the contents of $Li_2O$ components, $Na_2O$ components and/or $K_2O$ components exceed 60%, the stability of glass rather deteriorates and it is also difficult to precipitate the NASICON crystal. Therefore, each of the contents of $Li_2O$ components, $Na_2O$ components, and $K_2O$ components is preferably 60%, more preferably 58%, and most preferably 55%, as the upper limit based on the total material mass of a composition in terms of oxides. In addition, when $Li_2O$ components, $Na_2O$ components and/or $K_2O$ components are contained, in order to exhibit the effects thereof, the contents of components to be contained are preferably 0.1%, more preferably 0.5%, and most preferably 1.0%, as the lower limit. $Li_2O$ components, $Na_2O$ components, and $K_2O$ components may be introduced into glass ceramic by using, for example, $Li_2CO_3$, $LiNO_3$, $LiF$, $Na_2O$, $Na_2CO_3$, $NaNO_3$, $NaF$, $Na_2S$, $Na_2SiF_6$, $K_2CO_3$, $KNO_3$, $KF$, $KHF_2$, $K_2SiF_6$ and the like as a raw material.

$Rb_2O$ components and $Cs_2O$ components improve the meltability and stability of glass, and may be arbitrarily added. Further, the components decrease the glass transition temperature to suppress the heat treatment temperature at a lower level. Further, in particular, $Cs_2O$ components allow the NASICON crystal to be easily produced. However, when the contents of $Rb_2O$ components and/or $Cs_2O$ components exceed 20%, the stability of glass rather deteriorates and it is also difficult to precipitate a desired NASICON crystal. Therefore, each of the contents of $Rb_2O$ components and $Cs_2O$ components is preferably 20%, more preferably 10%, and most preferably 5%, as the upper limit based on the total material mass of a composition in terms of oxides. $Rb_2O$ components and $Cs_2O$ components may be introduced into glass ceramic by using, for example, $Rb_2CO_3$, $RbNO_3$, $Cs_2CO_3$, $CsNO_3$ and the like as a raw material.

It is preferred that the glass ceramic contains at least one or more components selected from $Rn_2O$ (in the formula, Rn is one or more selected from the group composed of Li, Na, K, Rb, and Cs) components in an amount of 60% or less. In particular, by setting the total amount of $Rn_2O$ components to 60% or less, the stability of glass is improved and the NASICON crystal is easily precipitated, thereby securing the catalytic activity of glass ceramic. Therefore, the total amount of $Rn_2O$ components is preferably 60%, more preferably 58%, and most preferably 55%, as the upper limit. In addition, when $Rn_2O$ components are contained, the total amount thereof in order to exhibit the effects thereof is preferably 0.1%, more preferably 0.5%, and most preferably 1%, as the lower limit.

MgO components and CaO components improve the meltability and stability of glass, and may be arbitrarily added. Further, these components are constituting components of the NASICON crystal and bring photocatalytic activity to the glass ceramic by precipitating the NASICON photocatalytic crystal in glass. Along with the effects, these components have the effects of decreasing the glass transition temperature to suppress the heat treatment temperature at a lower level when a NASICON crystal is produced. However, when the contents of MgO components and/or CaO components exceed 60%, the stability of glass rather deteriorates and it is also difficult to precipitate the NASICON crystal. Therefore, each of the contents of MgO components and CaO components is preferably 60%, more preferably 58%, and most preferably 55%, as the upper limit based on the total material mass of a composition in terms of oxides. MgO components and CaO components may be introduced into glass ceramic by using, for example, $MgCO_3$, $MgF_2$, $CaCO_3$, $CaF_2$ and the like as a raw material.

Here, CaO components decrease the glass transition temperature to allow apatite crystals and photocatalytic crystals to be easily produced and suppress the heat treatment temperature at a lower level. However, when the contents of CaO components exceed 60%, the stability of glass rather deteriorates and unnecessary crystals are easily produced, thereby making it difficult to precipitate apatite crystals. Therefore, particularly from the viewpoint of precipitating apatite crystals, the contents of CaO components are, as % by mole, preferably 1%, more preferably 3%, and most preferably 5%, as the lower limit, and preferably 60%, more preferably 50%, and most preferably 40%, as the upper limit.

SrO components and BaO components improve the meltability and stability of glass, and may be arbitrarily added. Further, the components have the effects of bring photocatalytic activity as constituting components of the NASICON crystal and decreasing the glass transition temperature to suppress the heat treatment temperature at a lower level when a NASICON crystal is produced. However, when the contents of SrO components and/or BaO components exceed 60%, the stability of glass rather deteriorates and it is also difficult to precipitate the NASICON crystal. Therefore, each of the contents of SrO components and BaO components is preferably 60%, more preferably 58%, and most preferably 55%, as the upper limit based on the total material mass of a composition in terms of oxides. SrO components and BaO components may be introduced into glass ceramic by using, for example, $Sr(NO_3)_2$, $SrF_2$, $BaCO_3$, $Ba(NO_3)_2$, $BaF_2$, and the like as a raw material.

It is preferred that the glass ceramic contains at least one or more components selected from RO (in the formula, R is one or more selected from the group composed of Mg, Ca, Sr, and Ba) components in an amount of 60% or less. In particular, by setting the total amount of RO components to 60% or less, the stability of glass is improved and a desired NASICON crystal having photocatalytic activity is easily precipitated, thereby securing the photocatalytic activity of glass ceramic. Therefore, the total amount of RO components is preferably 60%, more preferably 58%, and most preferably 55%, as the upper limit. Further, when RO components are contained, the total amount thereof in order to exhibit the effects thereof are preferably 0.1%, more preferably 0.5%, and most preferably 1%, as the lower limit.

The $Cu_2O$ components and $Ag_2O$ components have effects of bringing photocatalytic activity in the same manner as in the above-described alkali and alkaline earth components, and it is possible to exhibit high antibiotic properties without further irradiating light by containing these components, and thus these components may be arbitrarily added. However, when the contents of $Cu_2O$ components and $Ag_2O$ components exceed 50%, the stability of glass deteriorates and it is also difficult to precipitate the NASICON crystal. Therefore, the contents of $Cu_2O$ components and $Ag_2O$ components are preferably 50%, more preferably 45%, and most preferably 40%, as the upper limit. Further, when these components are contained, the total amount thereof in order to exhibit the effects thereof is preferably 0.1%, more preferably 0.5%, and most preferably 1%, as the lower limit. These components may be introduced into glass ceramic by using, for example, $CuO$, $Cu_2O$, $CuCl$, $Ag_2O$, $AgCl$, and the like as a raw material.

Further, it is preferred that the glass ceramic contains at least one or more components selected from RO (in the formula, R is one more components selected from the group composed of Mg, Ca, Sr, and Ba) components, $Rn_2O$ (in the formula, Rn is one or more selected from the group composed of Li, Na, K, Rb, and Cs) components, $Cu_2O$ components, and $Ag_2O$ components in an amount of 0.1% or more. By containing at least one component of them, the stability of glass is improved and the glass transition temperature (Tg) is decreased, and thus it is difficult for cracks to occur and a glass ceramic having a high mechanical strength may be readily obtained. In addition, RO components, $Rn_2O$ components, $Cu2O$ components, and $Ag_2O$ components constitute a NASICON crystal to contribute to the photocatalytic activity of glass ceramic. Therefore, the contents thereof are at least 0.1% or more, more preferably 0.5% or more, and most preferably 1% or more. On one hand, when the total amount of RO components and $Rn_2O$ components is larger than 60%, the stability of glass deteriorates and it is difficult to precipitate a desired NASICON crystal. Therefore, the total amount thereof ($RO + Rn_2O + Cu_2O + Ag_2O$) is preferably 60%, more preferably 58%, and most preferably 55%, as the upper limit based on the total material mass of a composition in terms of oxides.

ZnO components improve the meltability and stability of glass and bring photocatalytic activity as constituting components of the NASICON crystal. In addition, these components have the effects of decreasing the glass transition temperature to suppress the heat treatment temperature at a lower level when a NASICON crystal is produced. These components may be arbitrarily added to glass ceramic. However, when the contents of ZnO components exceed 60%, the glass is easily devitrified and the like, the stability of glass rather deteriorates, and it is also difficult to precipitate a NASICON crystal. Therefore, the contents of ZnO components are preferably 60%, more preferably 55%, and most preferably 50%, as the upper limit based on the total material mass of a glass ceramic with a composition in terms of oxides. ZnO components may be contained in glass ceramic by using, for example, ZnO, $ZnF_2$, and the like as a raw material.

$Al_2O_3$ components enhance the stability of glass and the chemical durability of glass ceramic and promote the precipitation of the NASICON crystal from glass, and may be arbitrarily added. Further, these components have the effects of constituting a NASICON crystal for themselves to bring photocatalytic activity. Further, these components have the effects of enhancing the orientation of the crystal phase of glass ceramic, in particular, the orientation of the NASICON crystal. However, when the content thereof exceeds 40%, the dissolution temperature is significantly increased and it becomes difficult to achieve vitrification. Therefore, the contents of $Al_2O_3$ components are preferably 40%, more preferably 35%, and most preferably 30%, as the upper limit. On one hand, when $Al_2O_3$ components are added, in order to exhibit the effects of the components, the contents thereof are preferably 0.1%, more preferably 0.5%, and most preferably 1%, as the lower limit. $Al_2O_3$ components may be introduced into glass ceramic by using, for example, $Al_2O_3$, $Al(OH)_3$, $AlF_3$, and the like as a raw material.

$Fe_2O_3$ components enhance the stability of glass and the chemical durability of glass ceramic, promote the precipitation of the NASICON crystal from glass, and may be arbitrarily added because these components constitute a NASICON crystal for themselves to bring photocatalytic activity. However, when the contents thereof exceed 60%, it becomes difficult to achieve vitrification. Therefore, the contents of $Fe_2O_3$ components are preferably 60%, more preferably 55%, and most preferably 50%, as the upper limit. On one hand, when $Fe_2O_3$ components are added, in order to exhibit the effects of the components, the contents thereof are preferably 0.005%, more preferably 0.01%, and most preferably 0.05%, as the lower limit. $Fe_2O_3$ components may be introduced into glass ceramics by using, for example, $Fe_2O_3$, $Fe_2O_4$, and the like as a raw material.

$TiO_2$ components crystallize glass and allow a NASICON crystal and/or $TiO_2$ crystal to be precipitated from glass, and thus bring photocatalytic activity, and are arbitrary components. However, when the contents of $TiO_2$ components exceed 90%, it becomes very difficult to achieve vitrification. Therefore, the contents of $TiO_2$ components are preferably 90%, more preferably 80%, and most preferably 75%, as the upper limit. On one hand, when $TiO_2$ components are added, in order to exhibit the effects of the components, the contents thereof are preferably 0.1%, more preferably 0.5%, and most preferably 1%, as the lower limit. $TiO_2$ components may be introduced into glass ceramic by using, for example, $TiO_2$, and the like as a raw material.

SnO components are components having the effects of promoting the precipitation of a NASICON crystal and being dissolved as a solid solution in the NASICON crystal to improve photocatalytic characteristics. In addition, when these components are added along with Au or Pt ions with an action of enhancing photocatalytic activity to be described below, these components serve as a reducing agent to indirectly contribute to the improvement of photocatalytic activity, and may be arbitrarily added. However, when the contents of these components exceed 20%, the stability of glass deteriorates and photocatalytic characteristics are also easily degraded. Therefore, the total content of SnO components is preferably 20%, more preferably 15%, and most preferably 10%, as the upper limit. Furthermore, when SnO components are added, the content to be added is preferably 0.01%, more preferably 0.05%, and most preferably 0.1%, as the lower limit. SnO components may be introduced into glass ceramic by using, for example, SnO, $SnO_2$, $SnO_3$, and the like as a raw material.

$ZrO_2$ components have the effects of enhancing the chemical durability of glass ceramic and constituting a NASICON crystal to bring photocatalytic activity, and may be arbitrarily added. However, when the contents of $ZrO_2$ components exceed 20%, it becomes difficult to achieve vitrification. Therefore, the contents of $ZrO_2$ components are preferably 20%, more preferably 15%, and most preferably 10%, as the upper limit. Further, when $ZrO_2$ components are added, the amount to be added is preferably 0.01%, more preferably 0.05%, and most preferably 0.1%, as the lower limit. $ZrO_2$ components may be introduced into glass ceramic by using, for example, $ZrO_2$, $ZrF_4$, and the like as a raw material.

$HfO_2$ components have the effects of constituting a NASICON crystal to bring photocatalytic activity and may be arbitrarily added. However, when the contents of $HfO_2$ components exceed 10%, it becomes difficult to achieve vitrification. Therefore, the contents of $HfO_2$ components are preferably 10%, more preferably 5%, and most preferably 3%, as the upper limit. Further, when $HfO_2$ components are added, the amount to be added is preferably 0.01%, more preferably 0.03%, and most preferably 0.05%, as the lower limit. $HfO_2$ components may be introduced into glass ceramic by using, for example, $HfO_2$, and the like as a raw material.

$V_2O_5$ components have the effects of constituting a NASICON crystal to bring photocatalytic activity and may be arbitrarily added. However, when the contents of $V_2O_5$ components exceed 70%, it becomes difficult to achieve vitrification. Therefore, the contents of $V_2O_5$ components are preferably 70%, more preferably 65%, and most preferably 60%, as the upper limit. Further, when $V_2O_5$ components are added, in order to exhibit the effects thereof, the content thereof is preferably 0.01%, more preferably 0.03%, and most preferably 0.05%, as the lower limit. $V_2O_5$ components may be introduced into glass ceramic by using, for example, $V_2O_5$, and the like as a raw material.

$Nb_2O_5$ components, $Ta_2O_5$ components, $MoO_3$ components, and $WO_3$ components enhance the stability of glass, and may be arbitrarily added. Further, these components have the effects of constituting a NASICON crystal for themselves to bring photocatalytic activity. In addition, in particular, $Nb_2O_5$ components, $MoO_3$ components, and $WO_3$ components enhance the meltability of glass.

However, when the contents of $Nb_2O_5$ components and/or $MoO_3$ components exceed 60%, the stability of glass significantly deteriorates. Therefore, the contents of $Nb_2O_5$ components are preferably 60%, more preferably 50%, and most preferably 40%, as the upper limit.

Further, when the contents of $Ta_2O_5$ components exceed 50%, the stability of glass significantly deteriorates. Therefore, the contents of $Ta_2O_5$ components are preferably 50%, more preferably 40%, and most preferably 30%, as the upper limit.

In addition, when the contents of $MoO_3$ components exceed 60%, the stability of glass significantly deteriorates. Therefore, the contents of $MoO_3$ components are preferably 60%, more preferably 55%, and most preferably 50%, as the upper limit.

Furthermore, when the contents of $WO_3$ components exceed 70%, the stability of glass significantly deteriorates. Therefore, the contents of $WO_3$ components are preferably 70%, more preferably 65%, and most preferably 60%, as the upper limit.

On one hand, when $Nb_2O_5$ components, $Ta_2O_5$ components, $MoO_3$ components and $WO_3$ components are added, in order to exhibit the effects thereof, the contents of components to be contained are preferably 0.1%, more preferably 0.5%, and most preferably 1%, as the lower limit.

$Nb_2O_5$ components, $Ta_2O_5$ components, $MoO_3$ components, and $WO_3$ components may be introduced into glass ceramic by using, for example, $Nb_2O_5$, $Ta_2O_5$, $MoO_3$, and $WO_3$ and the like as a raw material.

$Bi_2O_3$ components and $TeO_2$ components improve the meltability and stability of glass, and may be arbitrarily added. Further, these components decrease the glass transition temperature to allow a NASICON crystal to be readily produced and suppress the heat treatment temperature at a lower level. However, when the contents of $Bi_2O_3$ components and/or $TeO_2$ components exceed 30%, the stability of glass deteriorates and it is difficult to precipitate the NASICON crystal. Therefore, each of the contents of $Bi_2O_3$ components and $TeO_2$ components is preferably 30%, more preferably 20%, and most preferably 10%, as the upper limit. $Bi_2O_3$ components and $TeO_2$ components may be introduced into glass ceramic by using, for example, Bi2O3, TeO2, and the like as a raw material.

$Ln_2O_3$ components (in the formula, Ln is one or more selected from the group composed of Y, La, Ce, Pr, Nd, Pm, Sm, Eu, Gd, Tb, Dy, Ho, Er, Tm, Yb, and Lu) enhance the chemical durability of glass ceramic, are dissolved as a solid solution in the NASICON crystal or present in the vicinity thereof to improve photocatalytic characteristics, and may be arbitrarily added. However, when the sum of the contents of $Ln_2O_3$ components exceeds 30%, the stability of glass significantly deteriorates. Therefore, the total amount of $Ln_2O_3$ components are preferably 30%, more preferably 20%, and most preferably 10%, as the upper limit.

$M_xO_y$ components (in the formula, M is one or more selected from the group composed of Cr, Mn, Co, and Ni, and each of x and y is the smallest natural number satisfying x:y = 2:a valence of M. In particular, it is preferred that the valence of Cr is 3, the valence of Mn is 2, the valence of Co is 2, and the valence of Ni is 2) are dissolved as a solid solution in the NASICON photocatalytic crystal or present in the vicinity thereof to contribute to the improvement of photocatalytic characteristics, and absorb visible rays at a certain range of wavelengths to impart an appearance color to the glass ceramic, and are arbitrary components in the glass ceramic. In particular, it is possible to enhance the stability of the glass ceramic and readily control the color of the appearance of the glass ceramic by adjusting the total amount of $M_xO_y$ components to 10% or less. Therefore, the total amount of $M_xO_y$ components are preferably 10%, more preferably 5%, and most preferably 3%, as the upper limit. In addition, when these components are added, the amount to be added is preferably 0.01%, more preferably 0.03%, and most preferably 0.05%, as the lower limit.

$As_2O_3$ components and/or $Sb_2O_3$ components clarify and degas glass, serve as a reducing agent when added along with Ag or Au or Pt ions having an action of enhancing photocatalytic activity to be described below and thus indirectly contribute to the improvement of photocatalytic activity, and may be arbitrarily added. However, when the total content of these components exceeds 5%, the stability of glass deteriorates and photocatalytic characteristics are also easily degraded. Therefore, the sum of the contents of $As_2O_3$ components and/or $Sb_2O_3$ components is preferably 5%, more preferably 3%, and most preferably 1%, as the upper limit. $As_2O_3$ components and $Sb_2O_3$ components may be introduced into glass ceramic by using, for example, $As_2O_3$, $As_2O_5$, $Sb_2O_3$, $Sb_2O_5$, $Na_2H_2Sb_2O_7 \cdot 5H_2O$, and the like as a raw material.

In addition, components that clarify and degas glass are not limited to the above-described $As_2O_3$ components and $Sb_2O_3$ components, and clarifying agents or degassing agents known in the field of glass manufacture, such as, for example, $CeO_2$ components, $TeO_2$ components, and the like, or combinations thereof may be used.

$Ga_2O_3$ components enhance the stability of glass, promote the precipitation of a NASICON crystal from glass, contribute to the improvement of photocatalytic characteristics by dissolving $Ga^{3+}$ ions as a solid solution in the NASICON crystal, and may be arbitrarily added. However, when the content thereof exceeds 30%, the dissolution temperature is significantly increased and it becomes difficult to achieve vitrification. Therefore, the contents of $Ga_2O_3$ components are preferably 30%, more preferably 20%, and most preferably 10%, as the upper limit. $Ga_2O_3$ components may be introduced into glass ceramic by using, for example, $Ga_2O_3$, $GaF_3$, and the like as a raw material.

$In_2O_3$ components have effects similar to those of the above-described $Ga_2O_3$ and may be arbitrarily added. $In_2O_3$ components are expensive, and thus the contents thereof are preferably 30%, more preferably 20%, and most preferably 10%, as the upper limit. $In_2O_3$ components may be introduced into glass ceramic by using, for example, $In_2O_3$, $InF_3$, and the like as a raw material.

In the glass ceramic, components other than the above components may be added within a range of not impairing the characteristics of glass ceramic, if necessary.

However, lead compounds such as PbO and the like and each component of Th, Cd, Tl, Os, Se, and Hg recently tend to be refrained from being used as a hazardous chemical substance, and measures need to be taken for environmental protection, ranging from the production process of glass ceramic and processing process thereof to disposal after products are manufactured. Therefore, when an influence on the environment is considered to be important, it is preferred that these components are not substantially contained except for an inevitable incorporation. Accordingly, materials that contaminate the environment are not substantially included in glass ceramic. For that reason, the glass ceramic may be manufactured, processed, and disposed without taking any special measures for environmental protection. Non-Metal Element Components and Metal Element Components

The photocatalyst of the present invention may contain at least one non-metal element component selected from the group composed of F components, Cl components, Br components, N components, and C components. These components are dissolved as a solid solution in the NASICON photocatalytic crystal or present in the vicinity thereof to improve the photocatalytic characteristics, and may be arbitrarily added. Further, particularly, F components are also constituting components of the fluorapatite, and thus apatite crystals may be readily formed by containing F components. However, when the sum of the contents of these non-metal element components exceeds 20.0%, mechanical characteristics of the photocatalyst significantly deteriorate and the photocatalytic characteristics are also easily degraded. In addition, particularly in the state of glass ceramic, accordingly, the stability of glass ceramic significantly deteriorates. Therefore, in order to secure good mechanical characteristics and photocatalytic characteristics, the sum of the contents of non-metal element components is preferably 20.0%, more preferably 10.0%, even more preferably 5.0%, and most preferably 3.0%, as the upper limit based on the total mass of the photocatalyst. Here, particularly for the glass ceramic, it is also preferred that the mass ratio of the contents of non-metal element components as an external division based on the total mass of the glass ceramic with a composition in terms of oxides is 20.0% or less in the same manner as in the sum of the contents of non-metal element components based on the total mass of the photocatalyst. In addition, the mass ratio of the contents of each component as an external division represents the mass of each component as % by mass (% by mass as an external division based on the mass in terms of oxides) when all of the cationic components constituting the glass ceramic are assumed to be composed of oxides which are combined with oxygen which balances electric charge and the mass of the entire glass composed of these oxides is assigned as 100%.

It is preferred that these non-metal element components are introduced in the form of fluoride, chloride, bromide, sulfide, nitride, carbide, and the like of the primary element A or the secondary element B into raw materials, and it is more preferred that these non-metal element components are introduced in the form of fluoride, chloride, bromide, sulfide, nitride, carbide, and the like of an alkali metal or alkaline earth metal into raw materials. On one hand, non-metal element components may be added in the form of fluoride, chloride, bromide, sulfide, nitride, carbide, and the like of the metal element component to be mentioned below to the raw materials of the NASICON crystal, and may be added to the produced NASICON crystal. Accordingly, photocatalytic characteristics are improved by both non-metal element components and metal elements, and thus a photocatalyst with more enhanced photocatalytic characteristics may be obtained.

Raw materials for non-metal element components are not particularly limited, but may be introduced into the photocatalyst by using, for example, $ZrF_4$, $AlF_3$, $NaF$, $CaF_2$, and the like as a raw material for F components, NaCl, AgCl, and the like as a raw material for Cl components, NaBr, and the like as a raw material for Br components, NaS, $Fe_2S_3$, $CaS_2$, and the like as a raw material for S components, $AlN_3$, $SiN_4$, and the like as a raw material for N components, and TiC, SiC, ZrC, and the like as a raw material for C components. Further, these raw materials may be added either alone or in combination of two or more thereof.

The photocatalyst of the present invention may contain at least one metal element component selected from Au components, Pd components, Re components, and Pt components. These metal element components are present in the vicinity of the NASICON crystal to improve photocatalytic activity and may be arbitrarily added. However, when the sum of the contents of these metal element components exceeds 10.0%, mechanical characteristics of the photocatalyst significantly deteriorate and the photocatalytic characteristics are also easily degraded. In addition, particularly in the state of glass ceramic, accordingly, the stability of glass ceramic significantly deteriorates. Therefore, the sum of the contents of metal element components is preferably 10.0%, more preferably 5.0%, more preferably 3.0%, and most preferably 1.0%, as the upper limit based on the total mass of the photocatalyst. Further, when these components are added, the amount to be added is preferably 0.005%, more preferably 0.01%, and most preferably 0.03%, as the lower limit. Here, particularly for the glass ceramic, it is also preferred that the mass ratio of the contents of metal element components as an external division based on the total mass of the glass ceramic with a composition in terms of oxides is 10.0% or less in the same manner as in the sum of the contents of metal element components based on the total mass of the photocatalyst. For the metal element components, for example, $AuCl_3$, $PtCl_2$, $PtCl_4$, $H_2PtCl_6$, $PdCl_2$, and the like may be used as a raw material.

Here, the particle diameter or shape of metal element components may be appropriately set according to the composition of the NASICON crystal, and the like, but in order to maximally exhibit the photocatalytic function of the NASICON crystal, the average particle diameter of metal element components may be as small as possible. Therefore, the upper limit of the average particle diameter of metal element components is preferably 5.0 $\mu$m, more preferably 1.0 $\mu$m, and most preferably 0.1 $\mu$m. Physical Properties of Photocatalyst

In the photocatalyst of the present invention, the catalytic activity is exhibited by light at any one wavelength from an ultraviolet region to a visible region or light at a wavelength in which these are combined. More specifically, when light at any one wavelength from an ultraviolet region to a visible region is irradiated, it is preferred that the catalyst has characteristics of decomposing organic materials such as methylene blue, and the like. By exhibiting the catalytic activity, contaminants, bacteria, and the like attached to the surface of the photocatalyst are decomposed by an oxidation or reduction reaction, and thus the photocatalyst may be used for antifouling use, antibacterial use or the like. Here, the decomposition activation index of methylene blue of the photocatalyst is preferably 3.0 nmol/L/min or more as a value based on a Japanese Industrial Standards JIS R 1703-2:2007, more preferably 3.5 nmol/L/min or more, even more preferably 4.0 nmol/L/min or more, further preferably 5.0 nmol/L/min or more, and most preferably 7.0 nmol/L/min or more. Further, light at an ultraviolet region mentioned in the present invention is an invisible electromagnetic wave of which is shorter than visible rays and longer than X-rays, and the wavelength thereof is in a range about from 10 nm to 400 nm. In addition, light at a visible region mentioned in the present invention is an electromagnetic wave of which wavelength is visible to the human eyes among electromagnetic waves, and the wavelength thereof is in a range about from 400 nm to 700 nm. Furthermore, the photocatalyst mentioned in the present invention is not limited to those having a decomposition activation index of 5.0 nmol/L/min or more, and refers to those comprehensively having characteristics of decomposing organic materials.

Further, the photocatalyst of the present invention has excellent heat resistance. Accordingly, when the photocatalyst is subjected to heat treatment at high temperatures, or even when the photocatalyst is subjected to heat treatment for a long time, it becomes difficult for photocatalytic characteristics to be lost, and thus the width of the temperature, at which the photocatalyst may be used, may broaden, or the width of the applied product may broaden. That is, it is possible to a photocatalyst having stable photocatalytic characteristics without depending on the conditions or numbers of heat treatment such as sintering, and the like. Here, after a heating test to perform heating in the air at 900°C for 1 hour, the decomposition activation index of methylene blue of the photocatalyst is preferably 3.0 nmol/L/min or more, more preferably 4.0 nmol/L/mol, and most preferably 5.0 nmol/L/mol or more.

Further, it is preferred that in the photocatalyst of the present invention, the surface thereof shows hydrophilic properties. More preferably, it is preferred that the contact angle between the surface on which light at a wavelength from an ultraviolet region to a visible region is irradiated and the waterdrop is 30° or less. Accordingly, the surface of the photocatalyst has a self-cleaning action and thus may be readily washed with water, and the degradation in photocatalytic characteristics caused by contamination may be suppressed. Here, when light at any one wavelength from an ultraviolet region to a visible region or light at a wavelength in which these are combined is irradiated, the contact angle between the surface of the photocatalyst and the waterdrop is preferably 30° or less, more preferably 25° or less, and most preferably 20° or less.

Manufacturing Method of Photocatalyst

Hereinafter, a suitable method capable of suitably manufacturing the photocatalyst of the present invention will be described.

The manufacturing method may use a solid phase method including, for example, a mixing process of mixing a raw material composition and a sintering process of sintering the mixed raw material composition to produce a NASICON crystal. Accordingly, each component included in the mixed raw material compositions is diffused into each other to cause a solid-phase reaction to form a NASICON crystal, and thus the density per unit volume of the NASICON crystal is increased and a photocatalyst having excellent mechanical strength may be obtained.

Hereinafter, details of each process will be described.

Mixing Process

In the mixing process, a predetermined raw material composition is mixed. Specifically, a raw material composition of the primary element A, the secondary element E, and the tertiary element X is combined and uniformly mixed according to the stoichiometric ratio of a desired NASICON crystal.

Here, the raw material composition used may contain a glass phase or a crystal phase. In particular, the raw material composition may contain the glass phase to enhance the fluidity of the raw material composition in the sintering process. For that reason, the chemical reaction in the sintering process may be readily progressed. On one hand, the raw material composition contains a crystal phase to make the crystal phase easily become a core during the crystal growth of the product in the sintering process. For that reason, the sintering process may be readily performed in a shorter time than usual.

For the mixed raw material composition, the particle size and/or particle size distribution may be adjusted by a ball mill and the like, if necessary. Accordingly, the particle size of the raw material composition is provided, and thus the solid phase reaction in the sintering process may be readily progressed. Therefore, a NASICON crystal having a desired stoichiometric ratio may be readily produced. The particle diameter of the raw material composition may be appropriately set according to whether the solid phase reaction in the sintering process readily takes place and the like. Specifically, it is preferred that the average particle diameter is as small as possible from the viewpoint that the sintering time in the sintering process may be shortened. Therefore, the upper limit of the average particle diameter of the raw material composition is preferably 100 $\mu$m, more preferably 50 $\mu$m, and most preferably 10 $\mu$m. In addition, the value of D50 (cumulative 50% diameter) may be used when the average particle diameter of the raw material composition is measured by, for example, a laser diffraction scattering method. Specifically, values measured by the particle size distribution measuring device MICROTRAC (MT3300EXII) manufactured by Nikkiso Co., Ltd. may be used.

Sintering Process

In the sintering process, a NASICON crystal is produced by heating the raw material composition to perform the sintering. Here, the specific process of the sintering process is not particularly limited, but may include a process of slowly heating a powder and granular material at a set temperature, a process of maintaining the powder and granular material at the set temperature for a predetermined time, and a process of slowly cooling the powder and granular material at room temperature.

Here, it is preferred that the raw material composition is formed to a predetermined thickness dimension to be disposed on a substrate. Accordingly, a photocatalyst having the NASICON crystal may be formed to have a desired shape and thickness. Here, when the raw material composition is disposed on a substrate, from the viewpoint of imparting sufficient mechanical strength to the photocatalyst, the thickness thereof is preferably 0.05 mm, more preferably 0.1 mm, and most preferably 0.3 mm, as the lower limit. However, when the photocatalyst is used in a powdered shape (for example, when kneaded with other materials), and the like, the thickness thereof is not limited to the range. On one hand, when the raw material composition is formed, from the viewpoint of shortening the sintering time and reducing the formation of cracks into the photocatalyst the thickness, the thickness thereof is preferably 3 mm, more preferably 2 mm, and most preferably 1 mm, as the upper limit.

Here, before sintering the raw material composition disposed on the substrate, it is preferred to perform calcination by heating the composition at a temperature of 200°C or higher. Accordingly, moisture, organic materials, and the like included in the raw material composition are decomposed and gasified and then discharged, and thus the adhesion between particles of the raw material composition is enhanced, and a NASICON crystal may be readily formed. In this case, the lower limit of the calcination temperature is preferably 200°C, more preferably 250°C, and most preferably 300°C from the viewpoint that the decomposition of organic materials may be sufficiently achieved. On one hand, the upper limit of the calcination temperature is preferably 1,200°C, more preferably 1,150°C, and most preferably 1,000°C because the suppression of evaporation of organic materials is reduced by the melting of the raw material composition. The calcination time is different according to the kinds of impurities included in the raw material composition, but it is preferred that the calcination is performed for, for example, 2 to 12 hours.

Conditions of sintering in the sintering process may be appropriately set according to the composition of the raw material composition and the like. Specifically, the ambient temperature during the sintering may be appropriately selected in a temperature range of 1,400°C or lower in consideration of the heat resistance of the substrate Therefore, the upper limit of the sintering temperature is preferably 1,400°C, more preferably 1,350°C, and most preferably 1,300°C.

The sintering time in the sintering process may be set according to the composition of the raw material composition, the sintering temperature, and the like. If the temperature increase rate is slowed down, heating may be performed only until the sintering temperature in some cases, but it is preferred that the sintering time is set as a short period at high temperatures and as a long period at low temperatures as a target. Specifically, the lower limit is preferably 30 minutes, more preferably 1 hour, and most preferably 2 hours, from the viewpoint that the NASICON crystal may be grown to some degree and a sufficient amount of the NASICON crystal may be precipitated. On one hand, when the sintering time exceeds 24 hours, there is a concern in that a target NASICON crystal phase is extremely increased, and thus sufficient photocatalytic characteristics may not be obtained. Therefore, the upper limit of the sintering time is preferably 24 hours, more preferably 18 hours, and most preferably 12 hours. Further, the sintering time mentioned herein refers to the length of the period in which the sintering temperature during the sintering process is maintained at a certain (for example, the set temperature) temperature or higher.

It is preferred that the sintering process is performed in the atmosphere while air is exchanged with the air in, for example, a gas furnace, a microwave furnace, an electric furnace, and the like. However, the above-described process is not limited to these conditions and may be performed under the inert gas atmosphere, the reducing gas atmosphere, and the oxidizing gas atmosphere.

Further, the Manufacturing method of the photocatalyst is not limited to the above-described solid phase method, and may use a liquid phase method including a sol-gel method, and the like. A crystal phase having an uniform particle diameter is formed by using the liquid phase method and thus may be dissolved in a solvent, a binder and the like to obtain an uniform slurry mixture. In addition, an organic metal salt solution may be used as a raw material and may be sprayed in the flame to form a photocatalyst or a raw material composition thereof in the form of particulate. Accordingly, a photocatalyst in the form of particulate may be obtained without being ground, and thus the application to a substrate or the manufacture of a forming member may be readily performed.

Manufacturing Method of Glass Ceramic

Thereafter, when the photocatalyst of the present invention is composed of glass ceramic, a manufacturing method of glass ceramic will be described by exemplifying specific processes. However, the manufacturing method of glass ceramic is not limited to the method shown as follows.

The manufacturing method of glass ceramic may include a melting process of mixing raw materials to obtain the melt thereof, a cooling process of cooling the melt to obtain glass, a reheating process of increasing the temperature of the glass to a crystallization temperature region, a crystallization process of maintaining the temperature within the crystallization temperature region to produce crystals, and a recooling process of reducing the temperature out of the crystallization temperature region to obtain a crystal dispersed glass.

Melting Process

The melting process is a process of mixing raw materials having the above-described compositions to obtain the melt thereof. More specifically, raw materials are combined such that each component of the glass ceramic is within a predetermined content range, and a mixture manufactured by uniformly mixing the raw materials is introduced into a platinum crucible, a quartz crucible, or an alumina crucible, melted in a temperature range from 1,200°C to 1,600°C in an electric furnace for 1 to 24 hours, and homogenized while being stirred to prepare the melt thereof. Further, the melting conditions of the raw materials are not limited to the temperature range, and may be appropriately set according to the composition and blending amount of the raw material composition.

Cooling Process

The cooling process is a process of cooling the melt obtained in the melting process and vitrifying the melt to manufacture glass. Specifically, a vitrified glass body is formed by flowing out the melt to appropriately cool the melt. Here, the conditions of vitrification are not particularly limited, and may be appropriately set according to the composition and amount of the raw material, and the like. Further, the shape of the glass body obtained in the present process is not particularly limited, and may be a plate shape, a particle shape, and the like, but a plate shape is preferred in that the glass body may be rapidly and massively manufactured.

Reheating Process

The reheating process is a process of increasing the temperature of the glass obtained in the cooling process to the crystallization temperature region. In the process, the temperature increase rate and temperature greatly affect the formation of crystals or the size of crystals, and thus it is important to precisely control the temperature increase rate and temperature.

Crystallization Process

The crystallization process is a process of maintaining the crystals in the crystallization temperature region for a predetermined time to produce a NASICON crystal. In the crystallization process, crystals may be maintained in the crystallization temperature region for a predetermined time to form a NASICON crystal having a desired size from the nano to the micron unit, which is uniformly dispersed in the glass body. The crystallization temperature region is, for example, a temperature region exceeding the glass transition temperature. The glass transition temperature is different for each glass composition, and thus it is preferred to set a crystallization temperature according to the glass transition temperature. Further, the crystallization temperature region is preferably a temperature region which is 10°C or higher than the glass transition temperature, more preferably 20°C or higher, and most preferably 30°C or higher. The lower limit of a crystallization temperature region is preferably 500°C, more preferably 550°C, and most preferably 600°C. On the other hand, when the crystallization temperature is extremely high, an unknown phase other than a target phase strongly tends to be precipitated and photocatalytic characteristics are readily lost, and thus the upper limit of the crystallization temperature region is preferably 1,150°C, more preferably 1,100°C, and most preferably 1,050°C. In this process, the temperature increase rate and temperature greatly affect the size of crystals, and thus it is important to suitably control the temperature increase rate and temperature according to the composition or the heat treatment temperature. In addition, the heat treatment time for crystallization needs to be set under conditions that crystals are grown to some degree according to the composition of glass, heat treatment temperature, and the like and a sufficient amount of crystals may be precipitated. The heat treatment time may be set in various ranges according to the crystallization temperature. If the temperature increase rate is slowed down, heating may be performed only until the heat treatment temperature in some cases, but it is preferred that the heat treatment time is set as a short period at high temperatures and as a long period at low temperatures as a target. The crystallization procedure may include a one-step heat treatment procedure and a two-step or more heat treatment procedure.

Recooling Process

The recooling process is a process of reducing the temperature out of the range of crystallization temperature to obtain a crystal dispersed glass having a NASICON crystal, after the crystallization is completed.

Etching Process

The glass ceramic after the production of crystals may have high photocatalytic characteristics in the state of the glass ceramic per se or in the state in which mechanical processing such as grinding, and the like has been performed, but the glass phase around the crystal phase is removed and the specific surface area of the crystal phase exposed to the surface is increased by performing etching on the glass ceramic, and thus it is possible to further enhance photocatalytic characteristics of the glass ceramic. Further, it is possible to obtain a porous body in which the NASICON crystal phase remains by controlling the solution used in the etching process or the etching time. Here, examples of the etching method include methods such as dry etching, wet etching by immersion in a solution, combinations thereof, and the like. The acid or alkaline solution used in the immersion is not particularly limited as long as the solution may erode the surface of the glass ceramic, and for example, an acid (hydrofluoric acid, hydrochloric acid, and the like) including fluorine or chlorine may be used. In addition, the etching process may be performed by spraying hydrogen fluoride gas, hydrogen chloride gas, hydrofluoric acid, hydrochloric acid, and the like on the surface of the glass ceramic.

In the method, a forming process may be provided if necessary to process glass or glass ceramic into any shape.

As described above, a NASICON crystal having the photocatalytic activity is uniformly precipitated inside of the glass ceramic obtained on the surface thereof, and thus the glass ceramic obtained has excellent photocatalytic activity and excellent durability. Therefore, like a photocatalytically functional member in the related art, in which a photocatalytic layer is provided only on the surface of the substrate, the photocatalytic activity is not lost due to the peeling-off of the photocatalytic layer. Further, even though the surface is cut off, the NASICON crystal present inside thereof is exposed, and thus the photocatalytic activity is maintained. In addition, the glass ceramic may be prepared in the form of molten glass and thus has a high degree of freedom when the size or shape thereof is processed, and may be processed in various items requiring photocatalytic functions.

Further, according to the manufacturing method of the glass ceramic, the NASICON crystal may be produced by controlling the blending composition of raw materials and the heat treatment temperature, and thus efforts required for refinement of crystal particles, which has been a big problem in the photocatalyst technology, are not required and furthermore, glass ceramic having excellent photocatalytic activity may be readily prepared on the industrial scale.

Photocatalyst

The glass ceramic thus prepared may be processed as it is or in any shape to be used as a photocatalyst. Here, the "photocatalyst" may be, for example, a bulk state or powdered shape, and the shape does not matter. Further, the photocatalyst may be any photocatalyst having any one of an action of decomposing organic materials by light such as ultraviolet ray, and the like and an action of decreasing the contact angle with respect to water to impart hydrophilic properties, or both the activities. The photocatalyst may be used as, for example, a photocatalytic material, a photocatalytic member (for example, clarification material of water, air clarification material, and the like), a hydrophilic material, a hydrophilic member (for example, window, mirror, panel, tile, and the like), and the like.

The glass ceramic thus prepared may be formed in any shape such as, for example, a plate shape, a powder state, or the like to be used as a photocatalytically functional glass ceramic formed body for the use such as various machines, devices, equipment and the like. In particular, it is preferred that the glass ceramic is used for the use such as tile, window frame, building material, and the like. Accordingly, the surface of the glass ceramic formed body having a photocatalytic function and bacteria attached to the surface of the glass ceramic formed body is sterilized, and thus the surface may be sanitarily maintained when the glass ceramic is used for these uses. Further, the surface of the glass ceramic formed body has hydrophilic properties, and thus contamination attached to the surface of the glass ceramic formed body may be readily washed with raindrops and the like when the glass ceramic is used for these uses.

Further, the glass ceramic formed body of the present invention may be processed into various shapes according to the use. In particular, the exposed area of the NASICON crystal is increased by adopting, for example, a powder particle shape such as glass bead, and the like or the form of glass fiber, and thus the photocatalytic activity of the glass ceramic formed body may be further enhanced. Hereinafter, as representative embodiments of the glass ceramic, a powder and granular material, a glass ceramic fiber, a slurry mixture, a glass ceramic sintered body, a glass ceramic complex, and the like will be described as an example.

Photocatalytic powder and granular material

The photocatalytic powder and granular material in the present invention is a formed body in a granule or powder state, such as beads containing NASICON crystals, and the like. Hereinafter, the powder and granular material will be described by exemplifying glass ceramic beads.

In general, a microsphere (diameter ranging from several $\mu$m to several mm) made of glass refers to a glass bead. In many cases, industrial beads are made by using glass for benefits such as durability and the like, and examples of the representative uses thereof include a coating used in road signal plates or pavement marking lines, a reflective cross, a filtering material, a blast polishing material, and the like. When glass beads are incorporated into a road marking coating, a reflective cross, and the like to be dispersed, light emanating from lights or lamps of a car goes through the beads and then is reflected to the original place (retro-reflection), thereby enhancing the visibility. Due to these functions of glass beads, glass beads are also used in jogging clothes, vests for construction, bike driver vests, and the like. Contamination attached to signal plates or lines is decomposed by photocatalytic functions of glass ceramic beads, obtained from incorporating the glass ceramic beads into a coating, and thus a clean state may always be maintained and the maintenance time may be greatly reduced. In addition, it is possible for glass ceramic beads to have a retro-reflection function and a photocatalytic function simultaneously by adjusting the composition, the size of precipitated crystals, and the amount of crystals. Further, in order to obtain glass ceramic beads with higher retro-reflectivity, the refractive index of the glass matrix phase and/or crystal phase constituting the beads is preferably in a range from 1.8 to 2.1, and in particular, more preferably approximately 1.9.

For other uses, industrial glass beads are used as a filtering material. Unlike sand, stone, and the like, glass beads are produced onto all the spheres and the filling factor or porosity may also be calculated, and thus glass beads may be widely used either alone or in combination with other filtering materials. The glass ceramic beads have photocatalytic functions along with the inherent functions of glass beads. In particular, even though a membrane, a coating layer, and the like are not provided, photocatalytic characteristics are collectively exhibited, and thus the catalytic activity does not deteriorate due to the peeling-off, time required for exchange or maintenance may be reduced, and the glass ceramic beads are suitably used in, for example, a filter and a clarification device. Further, a filter member and a clarification member using photocatalytic functions have the configuration to be adjacent to a membrane which is a light source in a device in many cases, but beads of glass ceramic may be simply placed in a container, and the like in the device, and thus the members may be appropriately used.

In addition, glass beads have excellent chemical stability and are also produced onto spherical shapes, and thus glass beads do not significantly impair work pieces and are used in a material for blast polishing. The blast refers to performing cleaning, plastering, peening, and the like by spraying a grain material to collide with the surface of a work piece. The glass ceramic beads have photocatalytic functions along with the merits, and thus it is also possible to simultaneously perform the blast and a processing to which photocatalytic reactions are applied.

The particle diameter of glass ceramic beads may be appropriately determined according to the use thereof. For example, when glass ceramic beads are blended with a coating, glass beads may have a particle diameter of 100 $\mu$m to 2,500 $\mu$m and preferably 100 $\mu$m to 2,000 $\mu$m. When glass ceramic beads are used in a reflective cross, glass beads may have a particle diameter of 20 $\mu$m to 100 $\mu$m and preferably 20 $\mu$m to 50 $\mu$m may be manufactured. When glass ceramic beads are used in a filtering material, glass beads may have a particle diameter of 30 $\mu$m to 8,000 $\mu$m and preferably 50 $\mu$m to 5,000 $\mu$m.

Thereafter, a manufacturing method of glass ceramic beads will be described. The manufacturing method of glass ceramic beads may include a melting process of mixing raw materials to obtain the melt thereof, a forming process of using the melt or glass obtained from the melt to form a bead body, and a crystallization process of increasing the temperature of the bead body to a crystallization temperature region exceeding the glass transition temperature and maintaining the bead body at the temperature for a predetermined time to precipitate a desired crystal. Further, the general manufacturing method of glass ceramic may also be applied to specific examples within a range which does not contradict itself, and thus this will be appropriately cited to omit the overlapping description.

Melting Process

The melting process may be performed in the same manner as in the manufacturing method of the glass ceramic.

Forming Process

Thereafter, a microgranular bead body is formed from the melt obtained in the melting process. There are various methods of forming the bead body, and an appropriate method may be selected among them. In general, the bead body may be formed according to the process of glass melt or glass → grinding → particle size adjustment → spheroidization. In the grinding process, a granulated glass is obtained by grinding solidified glass after cooling, introducing melt phase glass into water to perform water granulation, performing grinding with ball mills, or the like. Thereafter, examples of a method of using a sieve or the like so as to adjust the particle size and then performing forming onto spherical shapes include a method of reheating particles to perform a forming on spherical shapes by using the surface tension, a method of putting particles into a drum along with a powder material such as graphite, and the like to perform a forming on spherical shapes by using physical forces while rotating the drum, and the like. Further, it is also possible to use a method of achieving the spheroidization directly from molten glass without being subjected to the grinding process. Examples thereof include a method of spraying molten glass in the air to achieve the spheroidization by using the surface tension, a method of achieving the spheroidization by slicing molten glass flowed out from an outflow nozzle with a member such as a rotating cutting tool, a method of adding molten glass dropwise to a fluid to achieve the spheroidization during the dropping, and the like. Normally, beads after the forming are manufactured as a product by again adjusting the particle size. As a method of forming glass on spherical shapes, an optimal method may be selected among these methods in consideration of viscosity of glass, readiness of devitrification, or the like at the forming temperature. Here, it is also possible to omit the process of performing the forming on spherical shapes and process the glass as a powdered body having a desired particle size. Further, a method of grinding glass is not particularly limited, but grinding may be performed by using, for example, ball mills, jet mills, and the like. In addition, it is also possible to perform a grinding process by exchanging the kind of grinding machine until a target particle diameter is obtained.

Crystallization Process

The bead body obtained in the process is reheated to perform a crystallization process of precipitating a desired crystal. The crystallization process may be performed under the same conditions as those in the manufacturing method of the glass ceramic. If a desired crystal is obtained, the bead body is cooled out of the range of crystallization temperature to obtain a glass ceramic bead in which crystals are dispersed.

The glass ceramic beads or powder after the crystallization process is performed to produce crystals may have high photocatalytic characteristics even in the state as it is, but it is possible to further enhance photocatalytic characteristics because the glass phase around the crystal phase is removed and the specific surface area of the crystal phase to be exposed to the surface is increased by performing an etching process on the beads or powder. Further, it is possible to obtain a porous body in which only the photocatalytic crystal phase remains by controlling the solution used in the etching process or the etching time. The etching process may be performed in the same manner as in the manufacturing method of the glass ceramic.

Photocatalytic Fiber

Further, the photocatalyst of the present invention, particularly, a photocatalyst composed of glass ceramic may be processed in a fiber shape. The photocatalytic fiber has general properties of glass fiber. That is, the photocatalytic fiber has merits in physical properties, such as high tensile strength and specific strength, high elastic modulus and specific elastic modulus, high dimensional stability, high heat resistance, being inflammable, and high chemical resistance, compared to those of general fibers, and may be used for various uses in which these are used. In addition, the photocatalytic fiber has the photocatalytic crystal present inside the fiber or on the surface thereof, and thus a fiber structural body, which has photocatalytic characteristics along with the above-described merits and may be applied to a wide range of fields, may be provided. Here, the fiber structural body refers to a three-dimensional structural body with fibers formed of fabrics, organized materials, stacked materials, or a complex thereof, and examples thereof include non-woven fabrics.

Curtains, sheets, papering crosses, mosquito nets, clothes, insulation materials, and the like are used for a use, in which heat resistance and inflammability of glass fiber may be used, but when the photocatalytic fiber is used, the deodorization function, the contamination decomposition function, and the like resulting from the photocatalytic actions may be imparted to the items in the above-described use so as to greatly reduce the time for cleaning or maintenance.

Further, the glass fiber is used as a filtering material due to the chemical resistance in many cases, but the photocatalytic fiber not only performs filtering, but also decomposes odor materials, contamination, bacteria, and the like in a material to be treated by the photocatalytic reaction, and thus a clarification device and a filter with a more aggressive clarification function may be provided. Further, the deterioration in characteristics resulting from the peeling-off and release of the photocatalytic layer scarcely occurs, thereby contributing to the elongation of life spans of these products.

Thereafter, the manufacturing method of the photocatalytic fiber will be described. The manufacturing method of the photocatalytic fiber may include a melting process of mixing raw materials to obtain the melt thereof, a spinning process of using the melt or glass obtained from the melt to perform a forming in a fiber shape, and a crystallization process of increasing the temperature of the fiber to a crystallization temperature region exceeding the glass transition temperature and maintaining the fiber at the temperature for a predetermined time to precipitate a desired crystal. In addition, the general manufacturing method of glass ceramic may also be applied to specific examples within a range which does not contradict itself, and thus this will be appropriately cited to omit the overlapping description.

Melting Process

The melting process may be performed in the same manner as in the manufacturing method of the glass ceramic.

Spinning Process

Thereafter, a glass fiber is formed from the melt obtained in the melting process. A forming method of a fibrous body is not particularly limited, but forming may be performed by using a known method. When a type of fiber (long fiber) which is continuously wound by a winder is formed, the fiber may be spun by a known DM method (direct melt method) or MM method (marble melt method), and when a short fiber having a fiber length of approximately several tens of cm is formed, a centrifugal method may be used, or the long fiber may be cut. The fiber diameter may be appropriately selected according to the use. However, as the fabric gets thinner, the flexibility of the fabric is enhanced and the touch of the fabric becomes excellent, but the production efficiency of spinning deteriorates, and thus the costs are increased. On the contrary, when the fabric gets extremely thick, the spinning productivity becomes excellent, but processablity or handling deteriorates. When a fibrous product such as fiber and the like is prepared, the fiber diameter is preferably in a range from 3 to 24 $\mu$m, and when a stacked structural body suitable for the use of a clarification device, a filter, and the like, is prepared, the fiber diameter is preferably 9 $\mu$m or more. Thereafter, according to the use, the fiber may be prepared in a cotton shape, or a fibrous structural body such as roving, cross, and the like may be made.

Crystallization Process

Thereafter, a crystallization process of reheating the fiber or fibrous structural body obtained in the process and precipitating a desired crystal inside the fiber and on the surface thereof is performed. The crystallization process may be performed under the same conditions as those in the manufacturing method of the glass ceramic. When the desired crystal is obtained, a photocatalytic fiber or fibrous structural body composed of glass ceramic fibers with photocatalytic crystals dispersed may be obtained by cooling the crystals out of the range of the crystallization temperature.

The photocatalytic fiber after the crystallization process is performed to produce crystals may have high photocatalytic characteristics even in the state as it is, but it is possible to further enhance photocatalytic characteristics of the photocatalyic fiber because the glass phase around the crystal phase is removed and the specific surface area of the crystal phase to be exposed to the surface is increased by performing an etching process on the photocatalytic fiber. Further, it is possible to obtain a porous body fiber in which only the photocatalytic crystal phase remains by controlling the solution used in the etching process or the etching time. The etching process may be performed in the same manner as in the manufacturing method of the glass ceramic.

When the photocatalyst of the present invention is processed in the form of bead, powder, or fiber, it becomes easy to incorporated the photocatalyst into a liquid phase material such as coating, and the like. Further, when the photocatalyst is used in a clarification member such as a filter, and the like, it becomes easy to fill the photocatalyst in a container, thereby broadening the range of use.

Slurry Mixture

The photocatalytic powder and granular material and/or photocatalytic fiber thus obtained may be mixed with any solvent, and the like to prepare a slurry mixture. In addition, a slurry mixture may be prepared by grinding the photocatalyst of the present invention to form a photocatalytic powder and granular material and mixing the powder and granular material with any solvent, and the like. Accordingly, it becomes easy, for example, to perform the application on a substrate, thereby allowing various substrates to have the photocatalyst. Specifically, a slurry may be prepared by adding preferably an inorganic or organic binder and/or a solvent to the photocatalytic powder and granular material or the photocatalytic fiber.

The inorganic binder is not particularly limited, but preferably has properties of transmitting ultraviolet rays or visible rays and examples thereof include particulates such as a silicate-based binder, a phosphate-based binder, an inorganic colloidal binder, alumina, silica, zirconia, and the like.

As the organic binder, general-purpose binders which are commercially available as, for example, a forming assistant for press forming or rubber press, extrusion forming and injection forming may be used. Specific examples thereof include acrylic resins, ethyl cellulose, polyvinyl butyral, methacrylic resins, urethane resins, butyl methacrylate, vinyl-based copolymers and the like.

As the solvent, for example, known materials such as water, methanol, ethanol, propanol, butanol, isopropyl alcohol (IPA), acetic acid, dimethyl formamide, acetonitrile, acetone, polyvinyl alcohol (PVA), and the like may be used. Among them, particularly, from the viewpoint of reducing the environmental load, alcohol or water is preferably used.

Further, in order to obtain a homogenized slurry, a solvent may be used in combination with an appropriate amount of a dispersant. The dispersant is not particularly limited, but examples thereof include hydrocarbons such as toluene, xylene, benzene, hexane, cyclohexane, and the like, ethers such as cellosolve, carbitol, tetrahydrofuran (THF), dioxolane, and the like, ketones such as acetone, methyl ethyl ketone, methyl isobutyl ketone, cyclohexanone, and the like, esters such as methyl acetate, ethyl acetate, n-butyl acetate, amyl acetate, and the like, and the like, and these may be used either alone or in combination of two or more thereof.

In the slurry mixture, additive components and the like other than the above-described components may be blended because, for example, the curing rate or specific weight is regulated according to the use thereof.

The content of the photocatalytic powder and granular material and/or photocatalytic fiber in the slurry mixture may be appropriately set according to the use thereof. For that reason, the content thereof in the slurry mixture is not particularly limited, but is preferably 2% by mass, more preferably 3% by mass, and most preferably 5% by mass, as the lower limit, for example, from the viewpoint of exhibiting sufficient photocatalytic characteristics. Further, from the viewpoint of securing fluidity and functionality as a slurry, the content is preferably 80% by mass, more preferably 70% by mass, and most preferably 65% by mass, as the upper limit.

As described above, the slurry mixture may be prepared by dispersing the photocatalytic powder and granular material and/or the photocatalytic fiber in a solvent. In addition, the manufacturing method of the slurry mixture may also have a process of removing aggregates of the glass powder and granular material. As the particle diameter of the glass powder and granular materials gets smaller, the surface energy is increased, and thus the glass powder and granular materials tend to be easily aggregated. When the glass powder and granular materials are aggregated, it is impossible to obtain a homogenized dispersion in the slurry mixture, and thus a desired photocatalytic activity may not be obtained in some cases. For that reason, it is preferred to provide a process of removing the aggregates of glass powder and granular materials. The removal of the aggregates may be performed, for example, by filtering the slurry mixture. The filtering of the slurry mixture may be performed by using a filtering material such as, for example, a mesh having a predetermined aperture, and the like.

The photocatalytic powder and granular material obtained by the above-described method and the slurry mixture containing the same may be blended with, for example, a coating, a mixture which is capable of forming/solidification, and the like as a photocatalytically functional material and then the resulting mixture may be used. In particular, it is preferred to blend the photocatalytic powder and granular material or the slurry mixture with a coating and use the resulting mixture. Accordingly, a coating film formed by applying a coating on a member may enhance photocatalytic characteristics and the chemical stability, and thus a coating film forming member having excellent photocatalytic characteristics and weatherability may be obtained.

A substrate for forming a coating film is appropriately selected according to wettability with a coating material and the like in addition to desired mechanical characteristics or heat resistance. That is, metal (for example, aluminum, copper, zinc and nickel), ceramic, graphite, glass, wood, stone, cloth, cement, plastic (for example, acrylic material and PET), concrete, and the like may be used. Among them, it is preferred that the substrate is composed of particularly, metal, ceramic, graphite, glass (particularly, Pyrex glass (registered trademark) or quartz glass), stone, cement, concrete or combination thereof, or a stacked body thereof. Further, it is possible to further enhance the adhesiveness of a covering to a substrate by performing a heating process after forming the coating film. Further, an undercoat may be formed on the substrate before the covering process, but adverse effects of components included in the manufacturing method of a covering body on photocatalytic characteristics are slight. For that reason, it is preferred that a coating containing the photocatalyst is directly applied on the surface of a substrate. Examples of the glass include glass for indoor environment clarification (decomposition of contaminants), such as fluorescent light, a window, and the like, glass for water quality clarification, such as a water tank, a fish preserve, and the like, antifouling glass, such as glass for preventing the windshield of a vehicle from being clouded, a CRT (Braun tube display), an LCD (liquid crystal monitor), a PDP (plasma display panel) screen, a window, a mirror, glasses, and the like, lens for antifouling and mold prevention in a camera and optical equipment, and the like. Examples of the plastic include equipment and the peripheral products thereof, such as AV equipment, a computer, a mouse, a keyboard, a remote control, a floppy disk (registered trademark), and the like, and plastic for antifouling, antibiosis, and mold prevention, used in built-in items of a vehicle and home appliances used in furniture, a kitchen, a bathtub, a bathroom, and the like. Examples of the metal include stainless steel for antifoluling, antibiosis, and mold prevention, used in a clothes-drying platform, a clothes pole, a kitchen, a work bench in a laboratory and the like, a dining room, a ventilation fan, and the like, an antifouling and antibiosis-treated doorknob, and the like. For the use of wood, there are antifouled furniture, antibiotic entertainment facilities in a park, and the like. Examples of a building material such as ceramic including tile, cement, concrete, stone, and the like include an antifouling-treated exterior wall material, a roof, a floor material, and the like, an interior wall material having indoor environment clarification (decomposition of contaminants) properties, various built-in items treated with antifouling, antibiosis, and mold prevention, and the like. As paper, antibiosis treated stationery, and the like may be used. Examples of the fibers such as film, and the like include a transparent antibacterial film for packaging food, a transparent ethylene gas decomposition film for preserving vegetables, a film for clarifying environment and water quality, and the like. As described above, various substrates have effects of antifouling, environmental clarification, antibiosis, and mold prevention and thus may be used for many purposes other than the exemplified uses if the substrates are under conditions capable of irradiation of ultraviolet rays generated from solar light, fluorescent light, and the like. Examples of an inorganic material underlayer include silica, alumina, and the like.

Glass, Glass Powder and Granular Material, and Glass Fiber (Before Crystallization)

The glass of the present invention is heated to produce a crystal phase having a photocatalytic activity in the glass and thus becomes the glass ceramic. That is, the glass of the present invention may be used as a precursor of the photocatalyst. The non-crystallized glass may take various forms exemplified as above, for example, a form such as a bead shape, a fiber shape, a plate shape, a powder particle shape, and the like, or a form of a complex with a substrate or a slurry mixture containing glass, and the like.

In the process of preparing the above-described glass ceramic, photocatalytic powder and granular material, and photocatalytic fiber, it is possible to obtain a formed body in a shape of a glass-state bulk material, a powder and granular material, and a fiber without being subjected to a crystallization process. Before a glass ceramic as a photocatalyst is crystallized, glass produces a crystal phase by heating (heat treatment) and thus has substantially the same composition range as that of the glass ceramic. The non-crystallized glass, glass powder and granular material, and glass fiber are a potential photocatalytically functional material which readily precipitates crystals having photocatalytic characteristics by performing a heat treatment, for example, after a slurry mixture is applied to the above-described glass materials to any substrate by application, or after the above-described glass materials are formed as a solidified forming material (that is, in the step of a coating film forming material or a solidified forming material). The non-crystallized glass and the processed material thereof do not yet have a photocatalytic activity and thus have excellent convenience in storage or handling. Specifically, even though the above-described non-crystallized glass materials are stored in a state of being brought into contact with or mixed with, for example, any organic material, there is no concern in that the organic material may be decomposed by the photocatalytic activity. Moreover, an ever-stable photocatalytic function may be imparted to the product by precipitating the crystal of the photocatalyst by performing a heat treatment immediately before application to a substrate and the like, or in the step of a coating film forming material or solidified forming material (that is, the step of products being manufactured).

Forming Member

A forming member with any shape may be formed by heating the photocatalyst of the present invention to solidify a photocatalytic powder and granular material in which the photocatalyst is ground. In this case, even though a NASICON crystal included in the photocatalyst is heated during the solidification, it is difficult to cause a transition to another crystal phase. That is, the degree of freedom of selecting a shape may be increased during the forming while the degradation in photocatalytic characteristic by heating is suppressed during the solidification, and thus a photocatalytically functional forming member having various shapes may be formed while having the desired photocatalytic characteristics.

Here, the forming member may be formed of, for example, only the photocatalyst, may include a substrate, and may also contain any binder, and the like.

Further, a method of forming a forming member is not particularly limited, but, for example, a method of sintering a formed photocatalyst or a method of performing pressing while heating the formed photocatalyst may be used. Accordingly, particles constituting the photocatalyst are combined with each other, and thus the mechanical strength of the forming member may be increased. In addition, it is also possible to manufacture a forming member by first preparing the photocatalyst in the form of the above-described slurry mixture, and then forming the photocatalyst in a desired shape.

The sintering temperature and time in the sintering or heating press may be appropriately set according to the composition of the photocatalyst or the kind or amount of additive mixed in the photocatalyst, and the like. Among them, the sintering temperature may be appropriately selected in a temperature range of 1,600°C or lower. When the sintering temperature exceeds 1,600°C, a crystal phase having a NASICON structure may be easily transferred to another crystal phase. Therefore, the upper limit of the sintering temperature is preferably 1,600°C, more preferably 1,500°C, and most preferably 1,400°C.

Further, the sintering time in the sintering or heating press needs to be set according to the sintering temperature, but it is preferred that the sintering time is set as a short period at high temperatures and as a long period at low temperatures.

As described above, the photocatalyst of the present invention contains a NASICON crystal having photocatalytic characteristics and thus is useful as a photocatalytically functional material having excellent photocatalytic activity and excellent heat resistance. Further, the photocatalyst of the present invention is easily processed even in any form of, for example, a slurry shape, a solid shape, and the like. Therefore, the photocatalyst of the present invention may be provided into the most appropriate form according to the use thereof, or the kind or shape of substrate to be applied, and may be applied to various photocatalytically functional members or hydrophilic members.

Glass Ceramic Sintered Body

A glass ceramic sintered body is sintered by solidifying a glass material in a powder particle shape and/or a fiber shape and at least contains a NASICON crystal, and the crystal phase thereof is uniformly dispersed inside the glass ceramic sintered body and on the surface thereof. The manufacturing method of the glass ceramic sintered body includes a vitrification process, a grinding process, a forming process, and a sintering process, as main processes. Hereinafter, the details of each process will be described.

Vitrification Process

In the vitrification process, a glass body is prepared by melting a predetermined raw material composition to be vitrified. Specifically, the raw material composition is introduced into a container composed of platinum or a refractory product, and is heated to high temperatures to be melted. A vitrified glass body is formed by flowing out the molten glass thus obtained so as to be appropriately cooled. The conditions of melting and vitrification may be performed in accordance with the melting process and cooling process in the manufacturing method of the glass ceramic.

Grinding Process

In the grinding process, the glass body is ground to manufacture a ground glass. The particle diameter or shape of the ground glass may be appropriately set according to the degree of precision required in shape and dimension of the formed body manufactured in the forming process. For example, when the ground glass is accumulated on any substrate in the later process and then is sintered, the average particle diameter of the ground glass may be a unit in several tens of mm. On one hand, when the glass ceramic is formed in a desired shape or mixed with another crystal, it is difficult for the glass ceramic to be formed when the average particle diameter of the ground glass is extremely large, and thus it is preferred that the average particle diameter is as small as possible. Therefore, the upper limit of the average particle diameter of the ground glass is preferably 100 $\mu$m, more preferably 50 $\mu$m, and most preferably 10 $\mu$m. Further, the value of D50 (cumulative 50% diameter) when the average particle diameter of the ground glass is measured by, for example, a laser diffraction scattering method. Specifically, values measured by the particle size distribution measuring device MICROTRAC (MT3300EXII) from Nikkiso Co., Ltd. may be used.
In addition, a method of grinding a glass body is not particularly limited, but grinding may be performed by using, for example, ball mills, jet mills, and the like.

Addition Process

Any component may be mixed with the ground glass to include an addition process of increasing the amount of component. The process is any process which may be performed, for example, between the grinding process and a forming process. The addition process may be performed in accordance with the addition process described in the above method for preparing the glass powder and granular material. Examples of components added include crystalline raw materials such as $TiO_2$, $WO_3$, ZnO, and the like, or adsorption components which help the photocatalytic activity, antibacterial components, and the like.

Forming Process

The forming process is a process of forming the ground glass on a formed body with a desired shape. When a glass ceramic sintered body is prepared into a desired shape, it is preferred that a press forming is used, in which crushed glass is put into a mold to be pressurized. Further, ground glass may also be accumulated on a refractory product and then formed. In this case, a binder may also be used.

Sintering Process

In the sintering process, a glass formed body is heated to manufacture a sintered body. Accordingly, a glass ceramic is formed by combining particles of the glass body constituting the sintered body with each other and simultaneously producing a NASICON crystal. Further, for example, when the formed body is prepared into a mixture in which another photocatalytic crystal and/or a co-catalytic component are added to the ground glass, more functions are imparted to the glass ceramic. For that reason, a higher photocatalytic activity may be obtained.
The specific sequence of the sintering process is not particularly limited, but the sintering process may also include a process of preheating a formed body, a process of slowly heating the formed body to a set temperature, a process of maintaining the formed body at the set temperature for a predetermined time, and a process of slowly cooling the formed body at room temperature.
The conditions of sintering may be appropriately set according to the composition of a glass body constituting the formed body. In the sintering process, crystals are produced from glass, and thus it is necessary that conditions such as a heat treatment temperature, and the like coincide with the crystallization conditions of glass constituting the sintered body. When the sintering temperature is extremely low, a sintered body having a desired crystal may not be obtained, and thus sintering needs to be performed at a temperature at least higher than the glass transition temperature (Tg) of the glass body. Specifically, the lower limit of the sintering temperature is the glass transition temperature (Tg) of the glass body or higher, preferably Tg + 50°C or higher, more preferably Tg + 100°C or higher, and most preferably Tg + 150°C or higher. On the other hand, when the sintering temperature is extremely high, the precipitation of the NASICON crystal is reduced and simultaneously a crystal other than a target is precipitated, and thus the photocatalytic activity strongly tends to be greatly reduced. Therefore, the upper limit of the sintering temperature is preferably Tg of the glass body + 600°C or lower, more preferably Tg + 500°C or lower, and most preferably Tg + 450°C or lower.

Further, when the formed body contains ZnO, $WO_3$, $TiO_2$, and the like, which are crystalline, it is necessary to set the sintering conditions in consideration of the amount of crystals such as ZnO, $WO_3$, $TiO_2$, and the like, the crystal size, the crystal type, and the like.

Further, it is necessary to set the lower limit of the sintering time according to the sintering temperature, but it is preferred that the lower limit of the sintering time is set as a short period at high temperatures and as a long period at low temperatures. Specifically, the lower limit thereof is preferably 3 minutes, more preferably 20 minutes, and most preferably 30 minutes, in that sintering may be sufficiently performed. On one hand, when the sintering time exceeds 24 hours, there is a concern in that a desired crystal is extremely increased or other crystals are produced, and thus sufficient photocatalytic characteristics may not be obtained. Therefore, the upper limit of the sintering time is preferably 24 hours, more preferably 19 hours, and most preferably 18 hours. In addition, the sintering time mentioned herein refers to the length of the period in which the sintering temperature is maintained at a certain (for example, the set temperature) temperature or higher during the sintering process.

It is preferred that the sintering process is performed, for example, while air is exchanged with the air in a gas furnace, a microwave furnace, an electric furnace, and the like. However, the process is not limited to these conditions and may be performed, for example, under the inert gas atmosphere, the reducing gas atmosphere, the oxidizing gas atmosphere, and the like.

A glass ceramic sintered body formed by the sintering process may contain a crystal composed of one or more of $TiO_2$, $WO_3$ and solid solutions thereof, adsorption components, and antibacterial components along with ZnO crystals in the crystal phase. In this case, it is more preferred that a crystal composed of anatase or rutile $TiO_2$ is contained. The glass ceramic sintered body may have a high photocatalytic function by containing these crystals. Among them, particularly, anatase $TiO_2$ crystals have a higher photocatalytic function than rutile $TiO_2$ crystals, and thus may impart a higher photocatalytic function to the glass ceramic sintered body.

Glass Ceramic Complex

In the present invention, the glass ceramic complex (hereinafter, referred to as the "complex" in some cases) includes a glass ceramic layer obtained by subjecting glass to heat treatment to produce crystals and a substrate, and among them, the glass ceramic layer is a layer specifically composed of amorphous solids and crystals. The glass ceramic layer at least has a NASICON crystal, and the crystal phase is uniformly dispersed inside the glass ceramic and on the surface thereof.

The manufacturing method of the glass ceramic complex according to the present invention includes a process (sintering process) of sintering ground glass at least obtained from a raw material composition on a substrate to form a glass ceramic layer containing a NASICON crystal. Preferred embodiments of the method of the present invention may include a vitrification process of preparing a glass body by melting a raw material composition to be vitrified, a grinding process of grinding the glass body to manufacture ground glass, and a sintering process of sintering the ground glass on a substrate to form a glass ceramic layer.

In addition, in the present embodiment, the "ground glass" is obtained by grinding a glass body obtained from a raw material composition, and is used as the meaning including glass obtained by precipitating crystals in a ground material of amorphous glass, a ground material of glass ceramic having crystals, and a ground material of glass. That is, the "ground glass" has or does not have crystals. When the ground glass has crystals, the ground glass may be prepared by subjecting the glass body to heat treatment to precipitate crystals and then grinding the crystals, and the ground glass may be prepared by grinding the glass body and then subjecting the glass body to heat treatment to precipitate crystals in the ground glass. Furthermore, when the "ground glass" does not include crystals, crystals may be precipitated by disposing the ground glass on a substrate and controlling the sintering temperature (crystallization treatment).

Here, the crystallization treatment may be performed, for example, at each timing of (a) after the vitrification process is completed and before the grinding process is initiated, (b) after the grinding process is completed and before the sintering process is initiated, and (c) simultaneously with the sintering process. Among them, from the viewpoint that the sintering of the glass ceramic layer is readily performed and a binder is unnecessary, the throughput is improved due to simplification of the process, energy is saved, and the like, it is preferred that the crystallization treatment is performed during the sintering simultaneously with the sintering process in (c). However, when a substrate having a low heat resistance may be used as a substrate constituting a complex, it is preferred that the crystallization is performed at the timing of (a) after the vitrification process is completed and before the grinding process is initiated, or (b) after the grinding process is completed and before the sintering process is initiated.

Hereinafter, the details of each process will be described. Further, the manufacturing method of glass ceramic sintered body may also be applied to the embodiments within a range which does not contradict itself, and thus this will be appropriately cited to omit the overlapping description.

(Vitrification Process)

The vitrification process may be performed in the same manner as in the above-described manufacturing method of the glass ceramic sintered body.

Grinding Process

In the grinding process, the glass body is ground to manufacture a ground glass. A glass body has a relatively small particle diameter by manufacturing ground glass and thus is readily applied on a substrate. Further, the glass body is manufactured into a ground glass and thus is readily mixed with other components. The particle diameter or shape of the ground glass may be appropriately set according to the kind of substrate, surface characteristics required for a complex, and the like. Specifically, when the average particle diameter of the ground glass is extremely large, it is difficult to form a glass ceramic layer with a desired shape on a substrate, and thus it is preferred that the average particle diameter is as small as possible. Therefore, the upper limit of the average particle diameter of the ground glass is preferably 100 $\mu$m, more preferably 50 $\mu$m, and most preferably 10 $\mu$m. In addition, the value of D50 (cumulative 50% diameter) when the average particle diameter of the ground glass is measured by, for example, a laser diffraction scattering method may be used as. Specifically, values measured by the particle size distribution measuring device MICROTRAC (MT3300EXII) from Nikkiso Co., Ltd. may be used.
Further, a method for grinding a glass body is not particularly limited, but grinding may be performed by using, for example, ball mills, jet mills, and the like.

Addition Process

The addition process may be performed in the same manner as in the above-described manufacturing method of the glass ceramic sintered body.

Sintering Process

In the sintering process, a complex is manufactured by disposing the ground glass on a substrate and then heating the substrate to perform sintering. Accordingly, a glass ceramic layer having a NASICON crystal phase is formed on the substrate. Here, the specific sequence of the sintering process is not particularly limited, but the sintering process may also include a process of disposing the ground glass on a substrate, a process of slowly heating the ground glass disposed on the substrate to a set temperature, a process of maintaining the ground glass at the set temperature for a predetermined time, and a process of slowly cooling the ground glass at room temperature.

Disposition on Substrate

First, the ground glass is disposed on a substrate. Accordingly, photocatalytic characteristics and hydrophilic properties may be imparted to a wider substrate. Here, the material of the substrate to be used is not particularly limited, but it is preferred that an inorganic material such as, for example, glass, ceramic, and the like, metal, or the like is used in that it is easy for the material to be complexed with a NASICON crystal.
In order to dispose the ground glass on a substrate, it is preferred that a slurry containing the ground glass is disposed at a predetermined thickness and dimension on the substrate. Accordingly, a glass ceramic layer having photocatalytic characteristics may be readily formed on the substrate. Here, the thickness of the glass ceramic layer to be formed may be appropriately set according to the use of the complex. It is also one of the characteristics of the method of the present invention to set the thickness of the glass ceramic layer in a comprehensive range. From the viewpoint of allowing the glass ceramic layer to have sufficient durability such that the glass ceramic layer is not peeled off, the thickness thereof is, for example, preferably 500 $\mu$m or less, more preferably 200 $\mu$m or less, and most preferably 100 $\mu$m or less. Examples of the method for disposing a slurry on a substrate include a doctor blade method, a calendar method, an application method such as spin coat, dip coating, and the like, a printing method such as ink jet, bubble jet (registered trademark), offset, and the like, a die coater method, a spray method, an injection forming method, an extrusion forming method, a rolling method, a press forming method, a roll forming method, and the like.
Further, the method for disposing the ground glass on a substrate is not limited to the above-described method for using a slurry, and a powder of the ground glass may be directly placed on the substrate. In addition, when the ground glass disposed on the substrate already includes crystals by heat treatment, the ground glass may be disposed by being mixed with organic or inorganic binder components without being subjected to a sintering process according to the degree of crystallization thereof, or with a binder layer interposed between the ground glass and the substrates, and may be dried solidification. In this case, in terms of durability of the photocatalytic action, it is preferred that an inorganic binder is used.

Sintering Process

The conditions of sintering in the sintering process may be appropriately set according to the composition of a glass body constituting the ground glass, the kind and amount of materials to be added, or the like. Specifically, for the ambient temperature during the sintering, two controls to be described below may be performed according to the state of the ground glass disposed on the substrate.

A first sintering method is performed when a desired NASICON crystal phase having photocatalytic activity is already produced onto the ground glass disposed on the substrate, and for example, when a crystallization treatment is performed on the glass body or the ground glass. The sintering temperature in this case may be appropriately selected in a temperature range of 1,100°C or lower while considering the heat resistance of the substrate, but when the sintering temperature exceeds 1,100°C, the NASICON crystal phase produced is easily transferred to another crystal phase. Therefore, the upper limit of the sintering temperature is preferably 1,100°C, more preferably 1,050°C, and most preferably 1,000°C.

A second sintering method is performed when the ground glass disposed on the substrate is not subjected to crystallization treatment and the ground glass does not have the NASICON crystal phase. In this case, it is necessary to perform the crystallization treatment of glass simultaneously with the sintering. When the sintering temperature is extremely low, a sintered body having a desired crystal phase may not be obtained, and thus sintering needs to be performed at a temperature at least higher than the glass transition temperature (Tg) of the glass body. Specifically, the lower limit of the sintering temperature is the glass transition temperature (Tg) of the glass body, preferably Tg + 50°C, more preferably Tg + 100°C, and most preferably Tg + 150°C. On the other hand, when the sintering temperature is extremely high, the NASICON crystal phase is decreased and photocatalytic characteristics tend to be lost, and thus the upper limit of the sintering temperature is preferably Tg of the glass body + 600°C, more preferably Tg + 500°C, and most preferably Tg + 450°C.

Further, the sintering time needs to be set according to the composition of glass, the sintering temperature, or the like. If the temperature increase rate is slowed down, heating may be performed only until the heat treatment temperature in some cases, but it is preferred that the heat treatment time is set as a short period at high temperatures and as a long period at low temperatures as a target. Specifically, the lower limit thereof is preferably 3 minutes, more preferably 5 minutes, and most preferably 10 minutes, in that the crystal may be grown to some degree and a sufficient amount of the crystal may be precipitated. On one hand, when the heat treatment time exceeds 24 hours, there is a concern in that a desired crystal is extremely increased or other crystals are produced, and thus sufficient photocatalytic characteristics may not be obtained. Therefore, the upper limit of the sintering time is preferably 24 hours, more preferably 19 hours, and most preferably 18 hours. Further, the sintering time herein refers to the length of the period in which the sintering temperature is maintained at a certain (for example, the set temperature) temperature or higher during the sintering process.

Use of Photocatalyst

In the photocatalyst of the present invention, a NASICON crystal phase having photocatalytic activity is precipitated inside thereof and on the surface thereof, and thus the photocatalyst of the present invention has excellent photocatalytic activity and visible ray responsiveness and excellent heat resistance. That is, the photocatalyst of the present invention may be processed in various items requiring a photocatalytic function.

For example, when the photocatalyst of the present invention is used in a building material, the building material contains the photocatalytic crystal as a NASICON crystal at least on the surface thereof. The photocatalyst using a NASICON crystal as a photocatalytic crystal shows photocatalytic activity even at a lower light amount, and it is difficult that the phase transition by heat occurs. For that reason, the photocatalyst of the present invention is suitable under an environment where the light amount is small or for an use requiring heat resistance, and may provide a building material with a high photocatalytic activity and the manufacturing method thereof.

In particular, even though a building material containing an alkaline metal component as a substrate or a material to be mixed is used, the stability or chemical stability to heat is so high compared to titanium oxide in the related art that it is extremely difficult for photocatalytic characteristics to be reduced by the phase transition, and thus the building material may be used for a comprehensive purpose. In particular, when titanium oxide in the related art is used on the surface of glass, sodium ions included in glass are diffused (move) with the passage of time to react with titanium oxide and are changed into a separate compound (sodium titanate) which does not show a photocatalytic activity in some cases, but the photocatalyst of the present invention contains a NASICON crystal, and thus it is difficult for photocatalytic characteristics to be lost. That is, as a substrate which forms the photocatalyst of the present invention, it is also preferred that a material containing alkaline metal components is used. Accordingly, even though an alkaline metal component included in the substrate is eluted to a covering, it is difficult for photocatalytic characteristics or super-hydrophilic properties of the covering to be lost and rather, photocatalytic characteristics or super-hydrophilic properties may be readily enhanced. For that reason, high photocatalytic characteristics or super-hydrophilic properties may be brought into a wider range of materials. Examples of the material containing alkaline metal components include glazed tile or soda glass.

Further, it is also preferred that the photocatalyst of the present invention is used in a clarification material. Accordingly, high photocatalytic activity is exhibited even in a much lower amount of light, and thus it is possible to provide a clarification material which may maintain high photocatalytic activity even though the photocatalyst is used for the purpose of clarifying liquid or gas, in which contaminants are dissolved or diffused.

Here, it is preferred that the clarification material is made by forming the above-described covering containing a NASICON crystal on a substrate (filter main body) composed of a porous body having internal communication spaces. By using a porous body in a substrate, the surface area may be maintained at a high level and a significantly high porosity such as, for example, 80 to 90% may be secured. For this reason, it is possible to provide a high performance clarification material in which the contact efficiency of liquid or gas to be clarified with the NASICON crystal is high, the ultraviolet ray transmittance is excellent, and a pressure loss is small.

A material for the substrate to be used in the clarification material is appropriately selected according to the wettability with a coating material. More specifically, metal (for example, aluminum, copper, zinc and nickel), ceramic, graphite, glass, wood, stone, cloth, cement, plastic (for example, acrylic material and PET), concrete, and the like may be used. Among them, it is preferred that the substrate is composed of particularly, metal, ceramic, graphite, glass (in particular, Pyrex glass (registered trademark) or quartz glass), stone, cement, concrete or combination thereof, or a stacked body thereof. Accordingly, a substrate having heat resistance may be used, and thus the adhesiveness of a covering to a substrate may be further enhanced by increasing the heating temperature in the heating process.

In particular, a porous body to become a substrate for a clarification material may be composed of a metal porous body, a ceramic porous body, a graphite porous body, a glass porous body, or a stacked body thereof. Among them, it is more preferred that the substrate is composed of a ceramic porous body with a three-dimensional network shaped skeleton structure having internal communication spaces. Accordingly, it is possible to increase the mechanical strength of the porous body while increasing the porosity of the porous body, and thus it is easy for a liquid or gas to be washed with water to pass through a clarification material and the breakdown or deterioration caused by friction with the object to be washed with water may be reduced. Here, when the substrate is composed of a porous body, it is preferred that a covering containing the NASICON crystal is formed on the surface of the substrate and the inside of pores. Accordingly, it is possible to increase the area on which the NASICON crystal is formed and enhance the photocatalytic activity inside the pores where it is difficult for ultraviolet light or visible rays to reach, and thus it is possible to further enhance the clarification action of the clarification material.

Here, the clarification material may be a clarification material with the NASICON crystal in a substrate composed of supporting fibers maintained in a support. Further, an almost spherical NASICON crystal and a covering photocatalytic crystal which is formed on a coating film composed of a porous ceramic which covers the surface of the NASICON crystal may be used instead of the NASICON crystal. In addition, the clarification material may be a clarification material including the NASICON crystal on the surface of a substrate composed of a porous material having a plurality of micropores on the surface thereof.

EXAMPLES

Hereinafter, the present invention will be described in more detail with reference to Examples, but the present invention is not limited by the following Examples. Examples (Nos. A1 to A6):

The composition of the NASICON crystal in the Examples (Nos. A1 to A6) of the present invention and the results of degree of decoloration of methylene blue by the NASICON crystal when ultraviolet rays are irradiated (with ultraviolet irradiation) and when ultraviolet rays are not irradiated (without ultraviolet irradiation) are shown in Table 1 and Table 2.

In the Examples (Nos. A1 to A6) of the present invention, a high purity raw material (for example, $TiO_2$, $ZrO_2$, $Fe_2O_3$, $NaH_2PO_4$, $Mg(PO_3)_2$, $NH_4H_2PO_4$, $Al(OH)_3$, $SiO_2$, and the like), such as an oxide, a hydroxide, a carbonate, a nitrate, a fluoride, a chloride, a metaphosphoric acid compound, and the like, corresponding to each raw material of the primary element A, the secondary element E, and the tertiary element X, was selected, and was weighed and uniformly mixed such that the molar ratio of the primary element A, the secondary element E, and the tertiary element X is equal to the stoichiometric ratio described in each Example, and then calcination was performed in the air in a temperature range from 300°C to 700°C for 2 to 12 hours. Subsequently, the particle size was made at 10 $\mu$m or less by grinding the calcined raw material composition with jet mills. The raw material composition was heated in the air to a temperature range from 700°C to 1,300°C, maintained at the temperature for 2 to 12 hours to perform sintering, and then ground with ball mills to obtain a powder sample with a particle size of 10 $\mu$m or less.

Here, the kind of crystal phase produced in the powder samples obtained in the Examples (Nos. A1 to A6) was identified by an X-ray diffraction apparatus (manufactured by Philips Inc., tradename: X'Pert-MPD).

Further, the photocatalytic characteristics of powder samples in the Examples (Nos. A1 to A6) were evaluated as follows. That is, 0.5 g of the sample was taken and put into a container made of polystyrene, a methylene blue aqueous solution at a concentration of 0.01 mmol/L was injected into the container, and then ultraviolet ray (manufactured by Toshiba Litec Co., Ltd., model number: FL10BLB) at a luminous intensity of 1 mW/cm$^2$ was irradiated over 3 to 10 hours. Moreover, the colors of the sample before and after the ultraviolet irradiation were compared with each other with the naked eyes, and the decomposition performance of methylene blue was evaluated in accordance with the following five-step criteria. Further, for comparison, the change in color of the sample when ultraviolet rays were not irradiated was evaluated along with the case where ultraviolet rays were irradiated. Criteria

5: Slightly thin and almost no change
4: Slightly thin
3: Thin
2: Significantly thin
1: Close to transparent and almost transparent

[Table 1]

|  |  | Example | | |
|---|---|---|---|---|
|  |  | A1 | A2 | A3 |
| Crystal phase | | $NaTi_2(PO_4)_3$ | $Na_{1.2}Al_{0.2}Ti_{1.8}(PO_4)_3$ | $NaZr_{0.2}Ti_{1.8}(PO_4)_3$ |
| Methylene blue Decomposition performance | Without ultraviolet irradiation | 3 | 3 | 3 |
| | With ultraviolet irradiation | 1 | 1 | 1 |

[Table 2]

|  |  | Example | | |
|---|---|---|---|---|
|  |  | A4 | A5 | A6 |
| Crystal phase | | $Na_{1.3}Ti_2(Si_{0.1}P_{0.9}O_4)_3$ | $Mg_{0.5}Ti_2(PO_4)_3$ | $Na_{1.1}Fe_{0.1}Ti_{1.8}(PO_4)_3$ |
| Methylene blue Decomposition performance | Without ultraviolet irradiation | 3 | 5 | 3 |
| | With ultraviolet irradiation | 1 | 2 | 1 |

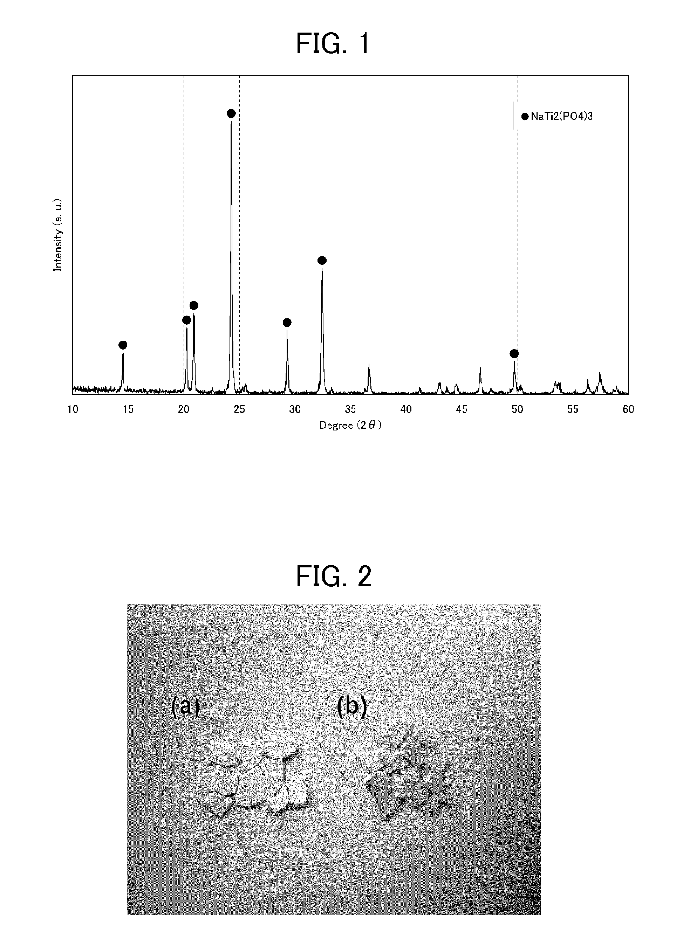

As a result, in the sintered bodies in the Examples (Nos. A1 to A6), a desired NASICON crystal was completely precipitated as shown in Table 1 and Table 2. In the XRD pattern of the sintered body in the Example (No. A1) as shown in FIG. 1, this is apparent from the vicinity of incident angle $2\theta = 24.2°$ and also from the occurrence of peak at an incident angle represented by "●".

Further, the photocatalytic characteristics of sintered bodies in the Examples (Nos. A1 to A6) were evaluated by the decoloration of methylene blue, and as shown in Tables 1 and 2, it was confirmed from the occurrence of decoloration of methylene blue by irradiation of light that any glass ceramic formed body had photocatalytic characteristics. For this reason, it was assumed that the sintered bodies in the Examples (Nos. A1 to A6) of the present invention functioned as a photocatalyst. In addition, the change in color of the sintered body in the Example (No. A1) with and without ultraviolet irradiation is shown in FIG. 2. FIG. 2a is a sintered body with ultraviolet irradiation, and FIG. 2b is a sintered body without ultraviolet irradiation. When ultraviolet rays are not irradiated, the coloration of blue in the sample by adsorption of methylene blue was apparently observed, but the coloration in the sample was not observed when ultraviolet rays are irradiated. These results supports that the decoloration of the methylene blue solution with the above-described ultraviolet irradiation caused not by adsorption of methylene blue to the sample, but certainly by the photocatalytic effects.

Example (No. A7) :

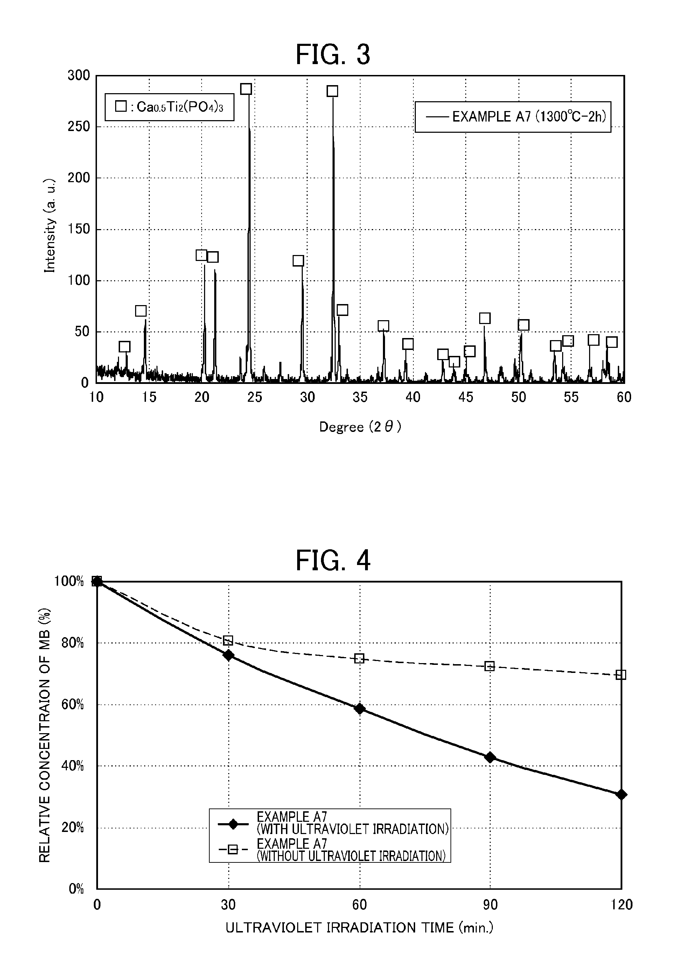

A starting raw material composed of $NH_4H_2PO_4$, $TiO_2$, and $Ca(PO_3)_2$ was mixed well such that the mixing ratio is equal to the stoichiometric ratio of the NASICON crystal $Ca_{0.5}Ti_2(PO_4)_3$, was put into a platinum crucible to heat the starting raw material at 700°C for 16 hours, and then was allowed to stand at room temperature to be cooled. The resulting starting raw material was ground with an agate mortar and further ground with planet ball mills to obtain a pulverulent body with an average particle diameter of 5 $\mu$m. 2 g of the pulverulent body was pressed at a pressure of 40 MPa for 2 minutes to form a pellet with $\varphi$20 mm, and the pellet was pressed at a pressure of 2 t for 2 minutes by using a cold isostatic press (CIP) apparatus. And then the pellet obtained was heated at 1,300°C for 2 hours to obtain a bulk sintered body. The crystal structure of the sintered body obtained was analyzed by an X-ray diffraction (XRD) method, and the same diffraction pattern as shown in FIG. 3 could be obtained. Accordingly, it was confirmed that a NASICON crystal $Ca_{0.5}Ti_2(PO_4)_3$ was produced in the sintered body.

A methylene blue decomposition activation test was performed on the above-described sintered body as follows to evaluate photocatalytic characteristics. The bulk sintered body obtained was immersed in 3 ml of a methylene blue aqueous solution (concentration 0.01 mmol/L), an ultraviolet ray at a luminous intensity of 1 mW/cm$^2$ by using a black light fluorescent lamp (FL10-BLB manufactured by Toshiba Litec Co., Ltd.) was irradiated on the sintered body, and the absorbance of the methylene blue (MB) solution was measured every 30 minutes. Here, the absorbance at each irradiation time was compared with the absorbance before the irradiation, and the ratio obtained from the comparison was used to evaluate the decomposition capacity of the MB. Further, in order to confirm the adsorption of the sample per se of the MB concentration, the same evaluation was performed without ultraviolet irradiation. As a result, as shown in FIG. 4, the sample with ultraviolet irradiation showed a reduction in MB concentration, which was larger than that of the sample without ultraviolet irradiation, and thus it was not confirmed that MB was decomposed by irradiation of ultraviolet rays.

Examples (Nos. A8 to A10):

The composition of the NASICON crystal in the Examples (Nos. A8 A10) of the present invention and the results of contact angle between the surface of the photocatalyst and the waterdrop when ultraviolet rays are irradiated for 4 hours (4 hours after ultraviolet irradiation) and when ultraviolet rays are not irradiated (before ultraviolet irradiation) are shown in Table 3.

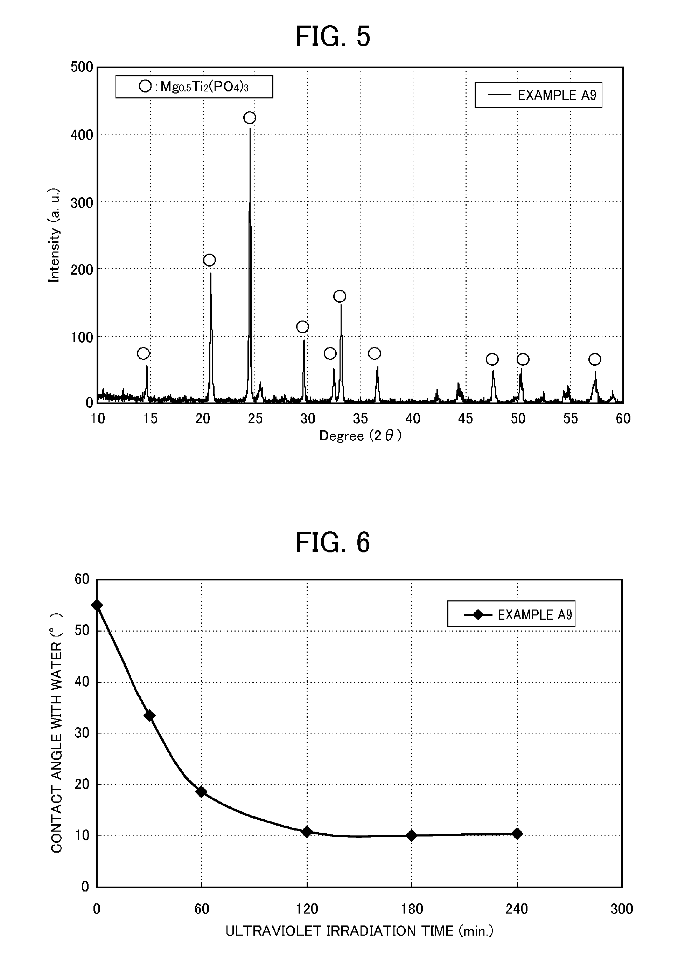

In the Examples (Nos. A8 to A10) of the present invention, a raw material composed of $NH_4H_2PO_4$, $TiO_2$, $Na_2CO_3$, $Mg(PO_3)_2$, and $Ca(PO_3)_2$ was mixed with ball mills such that the molar ratio of the primary element A, the secondary element E, and the tertiary element X is equal to the stoichiometric ratio described in each Example, calcination was performed in the air at the calcinations temperature of 700°C for 4 hours and then the raw material was ground, and sintering was performed in a temperature range from 1,000°C to 1,200°C for 12 hours. And then, the resulting raw material was ground with planet ball mills to obtain a pulverulent body with an average particle diameter of 5 $\mu$m. 2 g of the pulverulent body was taken and filled in a die formed of graphite with an internal diameter of 20 mm, and sintering was performed at 1,000°C for 5 hours to obtain a bulk sintered body while applying a pressure of 30 MPa in an upward and downward direction in the vacuum atmosphere by using a spark plasma sintering (SPS) apparatus (SPA-1030 manufactured by Sumitomo Coal Mining Co., Ltd.). The sintered body obtained was polished, and then subjected to etching treatment for 1 minute in a 4.6 wt% HF aqueous solution to obtain a sample for evaluating physical properties. The crystal structure of the sample for evaluation was analyzed by an X-ray diffraction (XRD) method, and it was confirmed that a crystal phase of each of $NaTi_2(PO_4)_3$, $Mg_{0.5}Ti_2(PO_4)_3$, and $Ca_{0.5}Ti_2(PO_4)_3$ was formed as the crystal phase. As an example, the XRD pattern of the Example (No. A9) is shown in FIG. 5.

Further, a hydrophilic property test for measuring the contact angle between the sample surface and the waterdrop was performed on the sample for evaluation by using a $\theta/2$ method. That is, water was added dropwise on the surface of the sintered body before and after ultraviolet irradiation, the height h from the surface of the sintered body to the vertex of the waterdrop and the radius r of the face contacting the test specimen of the waterdrop were measured by using a contact angle gauge (DM501 manufactured by Kyowa Interface Science Co., Ltd.), and the contact angle $\theta$ with water was obtained from the relationship equation of $\theta = 2\tan^{-1}(h/r)$.

Here, the ultraviolet ray was irradiated on the sintered body by using a black light fluorescent lamp (FL10-BLB manufactured by Toshiba Litec Co., Ltd.) with a luminous intensity of 1 mW/cm$^2$ and then samples, on which ultraviolet ray was irradiated for 0 minute (that is, not irradiated), 30 minutes, 60 minutes, 120 minutes, 180 minutes, and 240 minutes, were manufactured. As a result, from the fact that the contact angle with water had been greatly reduced by ultraviolet irradiation in any Examples, it was apparent that the sintered body had hydrophilic properties. As an example, the change in the contact angle in the Example (No. A9) by ultraviolet irradiation time is shown in FIG. 6.

[Table 3]

| | | Example | | |
|---|---|---|---|---|
| | | A8 | A9 | A10 |
| Crystal phase | | $NaTi_2(PO_4)_3$ | $Mg_{0.5}Ti_2(PO_4)_3$ | $Ca_{0.5}Ti_2(PO_4)_3$ |
| Contact angle with water (°) | Before ultraviolet irradiation | 38 | 55 | 52 |
| | 4 hours after ultraviolet irradiation | 12 | 10.4 | 9.6 |

Examples (Nos. A11 to A13):

In the Examples (Nos. A11 to A13) of the present invention, an organic metal salt solution was used as a raw material. A particulate of the composition corresponding to $NaTi_2(PO_4)_3$ in the Example (No. A11), a particulate of the composition corresponding to $Mg_{0.5}Ti_2(PO_4)_3$ in the Example (No. A12), and a particulate of the composition corresponding to $Ca_{0.5}Ti_2(PO_4)_3$ in the Example (No. A13) were each manufactured by supplying the organic metal salt solution to a spray nozzle of a nanoparticle synthesis apparatus (FCM-MINI, Hosokawa Micron Ltd.) to spray the solution in flame. In this case, the average particle diameter of the particulates formed was from 30 nm to 50 nm. Here, the kind of crystal phase was analyzed by using an X-ray diffraction (XRD) method, and as a result, $NaTi_2(PO_4)_3$ was produced in the Example (No. A11), but the crystal phases in the Examples (Nos. A12 and A13) were all amorphous.

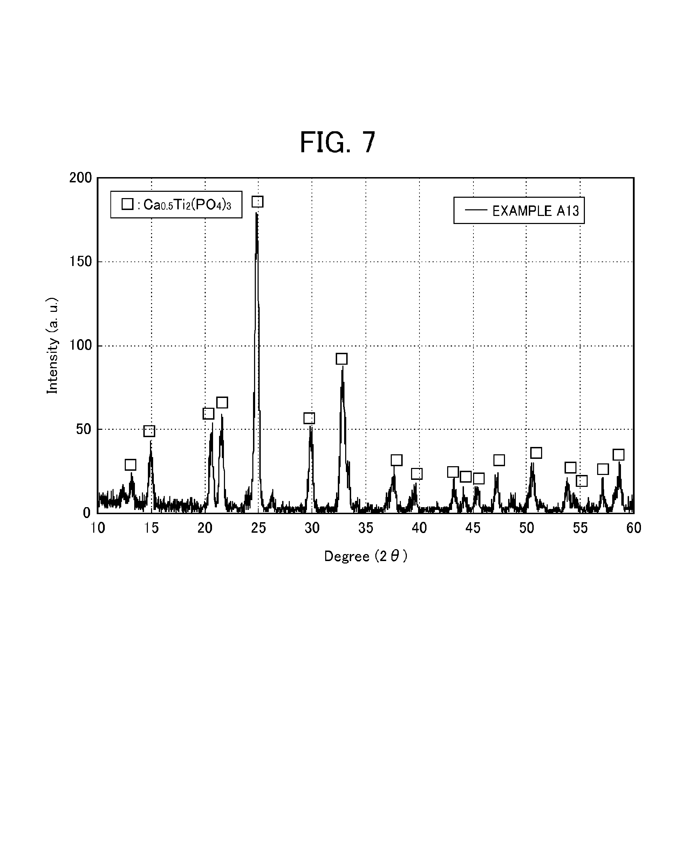

Subsequently, in order to enhance the crystallinity of the particulate in the Example (No. A11), the particulate was heated at 750°C for 30 minutes. Further, in order to produce crystals, the particulates in the Examples (Nos. A12 and A13) were heated at 800°C and 850°C, respectively for 30 minutes. As a result, it was confirmed as an example that a NASICON crystal was produced in the particulate after the heating such that an X-ray diffraction (XRD) pattern of the Example (No. A13) in FIG. 7 appears,

Further, 0.05 g of each of the particulates obtained in the Examples (Nos. A11 to A13) was taken and put into a container made of polystyrene, 3 ml of a methylene blue aqueous solution at a concentration of 0.01 mmol/L was injected into the container, and then ultraviolet ray (manufactured by Toshiba Litec Co., Ltd., model number: FL10BLB) with a luminous intensity of 1 $mW/cm^2$ was irradiated for 60 minutes. As a result, from the fact that the color of the methylene blue aqueous solution was dimmed, it was revealed that methylene blue was decomposed by ultraviolet irradiation.

Examples B1 to B25:

In Tables 4 to 7, the glass composition, heat treatment (crystallization) conditions, and the kind of main crystal phase precipitated on these glasses, of Examples B1 to B25 of the present invention are shown. In the glass ceramics in Examples B1 to 25, a high purity raw material used in the typical glass, such as an oxide, a hydroxide, a carbonate, a nitrate, a fluoride, a chloride, a metaphosphoric acid compound, and the like, corresponding to a raw material of each component, was selected and used. These raw materials were measured and uniformly mixed such that the mixing ratio became the composition ratio in each Example shown in Tables 4 to 7, was put into a platinum crucible, dissolved at a temperature range from 1,200°C to 1,600°C in an electric furnace for 1 hour to 24 hours according to the melting difficulty of the glass composition, and homogenized while being stirred to perform a complete removal of bubbles, and the like. Thereafter, the solution of glass was injected into a metal mold and slowly cooled to manufacture glass. The glass obtained was heated to the crystallization temperatures described in each Example in Tables 4 to 7 and maintained over the time described to perform crystallization. Thereafter, cooling was performed at the crystallization temperature to obtain a glass ceramic with a target crystal phase.

[Table 4]

| Example | | | B1 | B2 | B3 | B4 | B5 | B6 | B7 | B8 |
|---|---|---|---|---|---|---|---|---|---|---|
| Glass composition (% by mole) | | $SiO_2$ | 9.1 | 10 | 10 | 4.5 | 9.1 | 3 | 10 | 10 |
| | | $GeO_2$ | | | | | | | | |
| | | $P_2O_5$ | 34.1 | 30 | 30 | 34.1 | 29.5 | 32.5 | 30 | 29.9 |
| | | $B_2O_3$ | | | | 4.5 | 4.5 | | | |
| | | $Al_2O_3$ | | | | | | 2 | | |
| | | $Li_2O$ | | | | | | | | |
| | | $Na_2O$ | | | | | | | | |
| | | $K_2O$ | | | | | | | | |
| | | $MgO$ | 11.4 | 20 | 30 | 11.4 | 11.4 | 12.5 | 10 | 10 |
| | | $CaO$ | | | | | | | | |
| | | $SrO$ | | | | | | | | |
| | | $BaO$ | | | | | | | | |
| | | $ZnO$ | | | | | | | | |
| | | $TiO_2$ | 45.4 | 40 | 30 | 45.5 | 45.5 | 50 | 48 | 48 |
| | | $ZrO_2$ | | | | | | | 2 | 2 |
| | | $SnO$ | | | | | | | | |
| | | $Sb_2O_3$ | | | | | | | | 0.1 |
| | | Sum | 100 | 100 | 100 | 100 | 100 | 100 | 100 | 100 |
| External division % by weight | Pt | | | | | | | | | 0.7 |
| | Cl | | | | | | | | | 0.3 |
| Crystallization Conditions | Temperature (°C) | | 900 | 850 | 800 | 850 | 880 | 800 | 800 | 800 |
| | Time (h) | | 4 | 4 | 4 | 4 | 4 | 4 | 4 | 4 |
| Main crystal phase | | | $Mg_{0.5}Ti_2(PO_4)_3$ | | | | | | | |
| MB decomposition activation index (nmol/L/min) | | | 26 | 23 | 19 | 20 | 22 | 18 | 13.5 | 19.1 |

[Table 5]

| | | | B9 | B10 | B11 | B12 | B13 | B14 | B15 | B16 |
|---|---|---|---|---|---|---|---|---|---|---|
| Example | | | | | | | | | | |
| Glass composition (% by mole) | $SiO_2$ | | 10 | 5 | | 5 | 10 | 10 | 5 | 7 |
| | $GeO_2$ | | | | | | | | | |
| | $P_2O_5$ | | 29.9 | 35 | 35 | 35 | 30 | 30 | 30 | 30 |
| | $B_2O_3$ | | | | | | | | | |
| | $Al_2O_3$ | | | | | | | 3 | | |
| | $Li_2O$ | | | | | | | | | |
| | $Na_2O$ | | | | | | | | | 3 |
| | $K_2O$ | | | | 10 | | | | | |
| | $MgO$ | | 10 | 10 | 10 | 20 | 10 | 10 | 10 | 2 |
| | $CaO$ | | | 10 | 10 | 5 | | | 2 | |
| | $SrO$ | | | | | | | | | |
| | $BaO$ | | | 10 | | | | | | |
| | $ZnO$ | | | | | | | | | |
| | $TiO_2$ | | 48 | 30 | 35 | 35 | 47 | 47 | 50 | 58 |
| | $ZrO_2$ | | 2 | | | | 3 | | 3 | |
| | $SnO$ | | 0.1 | | | | | | | |
| | $Sb_2O_3$ | | | | | | | | | |
| | Sum | | 100 | 100 | 100 | 100 | 100 | 100 | 100 | 100 |
| External division % by weight | | Pt | 0.7 | | | | | | | 0.7 |
| | | Cl | 0.3 | | | | | | | 0.3 |
| Crystallization Conditions | Temperature (°C) | | 800 | 800 | 800 | 700 | 750 | 750 | 750 | 700 |
| | Time (h) | | 4 | 2 | 2 | 12 | 4 | 4 | 4 | 4 |
| Main crystal phase | | | $Mg_{0.5}Ti_2(PO_4)_3$ | $(Mg,Ca,Ba)_{0.5}Ti_2(PO_4)_3$ | $KTi_2(PO_4)_3$, $Ca_{0.5}Ti_2(PO_4)_3$ | $(Mg,Ca)_{0.5}Ti_2(PO_4)_3$ | $Mg_{0.5}Ti_2(PO_4)_3$ | | | $Mg_{0.5}Ti_2(PO_4)_3$, $TiO_2$ |
| MB decomposition activation index (nmol/L/min) | | | 21.8 | 5.4 | 8.8 | 8.2 | 10.5 | 8.6 | 7.8 | 7 |

[Table 6]

| Example | | | B17 | B18 | B19 | B20 | B21 |
|---|---|---|---|---|---|---|---|
| Glass composition (% by mole) | SiO$_2$ | | | 9.1 | 9.6 | 9.6 | 10 |
| | GeO$_2$ | | | | | | |
| | P$_2$O$_5$ | | 34.1 | 25.0 | 30.4 | 30.4 | 32 |
| | B$_2$O$_3$ | | 9.1 | 9.1 | | | |
| | Al$_2$O$_3$ | | | | | | |
| | Li$_2$O | | | | | | |
| | Na$_2$O | | | | | | |
| | K$_2$O | | | | | | |
| | MgO | | 11.4 | 11.4 | 12.0 | 12.0 | 12 |
| | CaO | | | | | | |
| | SrO | | | | | | |
| | BaO | | | | | | |
| | ZnO | | | | | | |
| | TiO$_2$ | | 45.4 | 45.4 | 48.0 | 46.5 | 46 |
| | ZrO$_2$ | | | | | 1.5 | |
| | SnO | | | | | | |
| | Sb$_2$O$_3$ | | | | | | |
| | Sum | | 100 | 100.0 | 100 | 100 | 100 |
| | External division % weight | Pt | | | | | |
| | | Cl | | | | | |
| Crystallization Conditions | Temperature(°C) | | 800 | 800 | 850 | 850 | 850 |
| | Time (h) | | 4 | 4 | 4 | 4 | 4 |
| Main crystal phase | | | Mg$_{0.5}$Ti$_2$(PO$_4$)$_3$ | Mg$_{0.5}$Ti$_2$(PO$_4$)$_3$ anatase | Mg$_{0.5}$Ti$_2$(PO$_4$)$_3$ $2\theta = 25.7°$ | Mg$_{0.5}$Ti$_2$(PO$_4$)$_3$ $2\theta = 25.7°$ | Mg$_{0.5}$Ti$_2$(PO$_4$)$_3$ $2\theta = 25.7°$ |
| MB decomposition activation index (nmol/L/min) | | | 12.0 | 20 | 24 | 26 | 22 |

[Table 7]

| Example | | | B22 | B23 | B24 | B25 |
|---|---|---|---|---|---|---|
| Glass composition (% by mole) | $SiO_2$ | | | | 2.8 | 4.8 |
| | $GeO_2$ | | 7.5 | | | |
| | $P_2O_5$ | | 35.0 | 35.6 | 34.7 | 30.6 |
| | $B_2O_3$ | | | | | |
| | $Al_2O_3$ | | | 4.8 | 4.6 | 4.8 |
| | $Li_2O$ | | | | | |
| | $Na_2O$ | | | | | |
| | $K_2O$ | | | | | |
| | $MgO$ | | 12.5 | 12.0 | 11.6 | 12.0 |
| | $CaO$ | | | | | |
| | $SrO$ | | | | | |
| | $BaO$ | | | | | |
| | $ZnO$ | | | | | |
| | $TiO_2$ | | 45.0 | 47.6 | 46.3 | 47.8 |
| | $ZrO_2$ | | | | | |
| | $SnO$ | | | | | |
| | $Sb_2O_3$ | | | | | |
| | Sum | | 100 | 100 | 100 | 100 |
| External division % weight | | Pt | | | | |
| | | Cl | | | | |
| Crystallization Conditions | Temperature (°C) | | 850 | 800 | 900 | 900 |
| | Time (h) | | 4 | 4 | 4 | 4 |
| Main crystal phase | | | $Mg_{0.5}(Ti,Ge)_2(PO_4)_3$ | $Mg_{0.5}Ti_2(PO_4)_3$ | $Mg_{0.5}Ti_2(PO_4)_3$ anatase | $Mg_{0.5}Ti_2(PO_4)_3$ anatase |
| MB decomposition activation index (nmol/L/min) | | | 18 | 19 | 23 | 22 |

Further, the photocatalytic characteristics of bulk samples in Examples B1 to B25 were evaluated by obtaining the decomposition activation index (nmol/l/min) of methylene blue based on Japanese Industrial Standards JIS R 1703-2: 2007.

More specifically, the decomposition activation index of methylene blue was obtained in the following sequence. 0.020 mM of a methylene blue aqueous solution (hereinafter, referred to as adsorption liquid) and 0.010 mM of a methylene blue aqueous solution (hereinafter, referred to as test liquid) were prepared. Moreover, the surface of the specimen and one opening of a quartz tube (internal diameter 10 mm, height 30 mm) were fixed with a silicone grease for high vacuum use (manufactured by Toray Dow-Corning Co., Ltd.) and the adsorption liquid was injected from the other opening of the quartz tube to fill a test cell with the adsorption liquid. Thereafter, the other opening of the quartz tube and the liquid surface of the adsorption liquid were covered with a cover glass (manufactured by Matsunami Glass Ind., Ltd., tradename: White Ground Frost No. 1), and the adsorption liquid was sufficiently adsorbed on the specimen over 12 to 24 hours while light is not allowed to touch the specimen. The absorbance of the adsorption liquid after the adsorption for light at a wavelength of 664 nm was measured by using a spectrophotometer (manufactured by JASCO Corp., model number: V-650), and the adsorption was completed at a time point when the absorbance of the adsorption liquid was larger than the absorbance of the test liquid similarly measured. In this case, the conversion factor K [$\mu$mol/L] was obtained by using the following equation (1) from values of the absorbance (Abs (0)) measured in the test liquid and methylene blue concentration (c (0) - 10 [$\mu$mol/L]).

$$K = c(0)/Abs(0) \qquad (1)$$

Subsequently, the cover glass was taken off to exchange the liquid in the quartz tube with the test liquid, and then the other opening of the quartz tube and the liquid surface of the adsorption liquid were covered with the cover glass again to irradiate an ultraviolet ray at 1.0 mW/cm². Then, the ultraviolet ray was irradiated over 60 minutes, 120 minutes, and 180 minutes, and then the absorbance for light at a wavelength of 664 nm was measured. From the value of the absorbance Abs (t) measured t minutes after the initiation of irradiation of ultraviolet light, the concentration C(t) [$\mu$mol/L] of the methylene blue test liquid t minutes after the imitation of irradiation of ultraviolet light was obtained by using the following equation (2). Here, K is the above-described conversion factor.

$$C(t) = K \times Abs(t) \qquad (2)$$

Moreover, the C(t) obtained above was used as the ordinate and the irradiation time t [min] of the ultraviolet ray was used as the abscissa to prepare a plot. In this case, the slope a [$\mu$mol/L/min] of the straight line obtained from the plot was obtained by a least square method, and the following equation (3) was used to obtain the decomposition activation index R [nmol/L/min].

$$R = |a| \times 1000 \qquad (3)$$

Further, Example B1 was used to prepare samples in which the crystallization temperature was changed in a range from 750°C to 1,000°C by a pitch of 50°C and evaluate each decomposition activation index. Herein, all of the crystallization times were set as 4 hours.

In addition, the hydrophilic properties of the photocatalytic glass ceramics obtained in Examples B1, B13 to B16, B19, B20, and B23 were evaluated by measuring the contact angle between the sample surface and the waterdrop by the $\theta$/2 method in the same manner as in the Examples (Nos. A8 to A10).

Among them, the irradiation of the ultraviolet ray in Examples 13 to 16 was performed at a luminous intensity of 10 mW/cm$^2$ for irradiation time 0 minute (no irradiation), 30 minutes, 60 minutes, and 120 minutes by using a mercury lamp.

Further, the irradiation of the ultraviolet ray in Examples B1, B19, and B20 was performed on the sample obtained by etching the surface of the glass ceramic obtained in a 0.46 wt% of a HF solution for 10 seconds at a luminous intensity of 1 mW/cm$^2$ for 80 to 100 minutes by using a black light fluorescent lamp (manufactured by Toshiba Litec Co., Ltd., model number: FL10-BLB). The irradiation of ultraviolet ray was stopped after the irradiation of the ultraviolet ray for 80 minutes to 100 minutes, and the relationship between the elapsed time after the irradiation of ultraviolet ray was stopped and the contact angle with waterdrop was also obtained.

Further, Example B23 was used to prepare samples in which the crystallization temperature was changed in a range from 800°C to 1,000°C by a pitch of 100°C and an ultraviolet ray was irradiate on each sample at a luminous intensity of 1 mW/cm$^2$ for 80 minutes to 100 minutes by using a black light fluorescent lamp (manufactured by Toshiba Litec Co., Ltd., model number: FL10-BLB) to obtain the relationship between the irradiation time and the contact angle with waterdrop. Herein, all of the crystallization times were set as 4 hours. Examples B26 to B57:

In addition, granular samples were prepared to use the samples in Example B26 to B57. In Tables 8 to 14, the glass composition, heat treatment (crystallization) conditions, and the kind of main crystal phase precipitated on the glass ceramic, of Examples B26 to B57 of the present invention are shown. The granular glass ceramic was prepared in the following sequence. First, raw materials were weighed, mixed and melted to obtain a glass melt in the same manner as in Examples B1 to B25, and then glass was manufactured by casting the glass solution in water.

Among them, in Examples B26 to B51, the glass obtained was ground and sifted with a sieve to obtain a granular glass with a size of 1 mm to 3 mm. The glass was subjected to heat treatment under conditions shown in Tables 8 to 12 to obtain a glass ceramic, and then the glass ceramic was etched in a 46 wt% HF solution for 1 minute to prepare a sample for methylene blue (MB) decomposition test.

Further, in Examples B52 to B57, the glass ceramic obtained by performing heat treatment under conditions shown in Tables 13 and 14 was ground and sifted with a sieve to obtain a granular glass ceramic with a particle diameter in a range from 0.7 mm to 1 mm. The sample was immersed in hydrofluoric acid (HF) at a concentration of 4.6% by mass for 1 minute to etch glassy materials on the surface thereof, thereby preparing a sample for methylene blue (MB) decomposition test.

1 g of each of samples for the methylene blue (MB) decomposition test in a container made of polystyrene was taken and put into 5 ml of a methylene blue (MB) aqueous solution at a concentration of 0.01 mmol/L, and each sample

was immersed in the solution in a dark place for 24 hours. Thereafter, the methylene blue (MB) aqueous solution was exchanged with a new solution at the same concentration, and the change in MB concentration was measured under conditions with ultraviolet irradiation and without ultraviolet irradiation. That is, each sample was immersed in each MB aqueous solution in a dark place or under ultraviolet irradiation. Here, a black light blue fluorescent light FL10-BLB (manufactured by Toshiba Litec Co., Ltd.) was used as a light source to irradiate an ultraviolet ray with a luminous intensity of 1 mW/cm[2] and the decomposition capacity of MB was evaluated by using the ratio of the MB concentration at a time point of 120 minutes after the irradiation to the concentration before the irradiation.

[Table 8]

| Example | | | B26 | | B27 | | B28 | | B29 | | B30 | | B31 | |
|---|---|---|---|---|---|---|---|---|---|---|---|---|---|---|
| Glass composition (% by mole) | $SiO_2$ | | | | | | | | | | | | | |
| | $GeO_2$ | | | | | | | | | | | | | |
| | $P_2O_5$ | | 37.5 | | 37.5 | | 30 | | 30 | | 25 | | 30 | |
| | $B_2O_3$ | | | | | | 10 | | 5 | | 10 | | 20 | |
| | $Al_2O_3$ | | | | | | | | | | | | | |
| | $Li_2O$ | | | | | | | | | | | | | |
| | $Na_2O$ | | | | 12.5 | | | | 3 | | 3 | | | |
| | $K_2O$ | | | | | | | | | | | | | |
| | MgO | | 12.5 | | | | 10 | | | | | | 30 | |
| | CaO | | | | | | | | | | | | | |
| | SrO | | | | | | | | | | | | | |
| | BaO | | | | | | | | | | | | | |
| | ZnO | | | | | | | | | | | | | |
| | $TiO_2$ | | 50 | | 50 | | 50 | | 62 | | 62 | | 20 | |
| | $ZrO_2$ | | | | | | | | | | | | | |
| | SnO | | | | | | | | | | | | | |
| | $Sb_2O_3$ | | | | | | | | | | | | | |
| | Sum | | 100 | | 100 | | 100 | | 100 | | 100 | | 100 | |
| External division % by weight | | Pt | | | | | | | | | | | | |
| | | Cl | | | | | | | | | | | | |
| Crystallization Conditions | Temperature (°C) | | 800 | | 850 | | 800 | | 800 | | 800 | | 800 | |
| | Time (h) | | 4 | | 4 | | 4 | | 4 | | 4 | | 4 | |
| Main crystal phase | | | $Mg_{0.5}Ti_2(PO_4)_3$ | | $NaTi_2(PO_4)_3$ | | $Mg_{0.5}Ti_2(PO_4)_3$ | | $NaTi_2(PO_4)_3$ $TiO_2$ | | $NaTi_2(PO_4)_3$ $TiO_2$ | | $Mg_{0.5}Ti_2(PO_4)_3$ | |
| UV irradiation | | | None | Yes | None | Yes | None | Yes | None | Yes | None | Yes | None | Yes |
| Relative concentration (%) of MB 120 minutes after the irradiation | | | 74.4 | 0 | 58.4 | 1.8 | 85.5 | 58.7 | 87 | 25 | 37 | 0 | 94.6 | 77.4 |

[Table 9]

| | | | B32 | | B33 | | B34 | | B35 | | B36 | | B37 | |
|---|---|---|---|---|---|---|---|---|---|---|---|---|---|---|
| Glass composition (% by mole) | SiO$_2$ | | | | | | | | | | | | | |
| | GeO$_2$ | | | | | | | | | | | | | |
| | P$_2$O$_5$ | | 30 | | 30 | | 37.5 | | 35 | | 30 | | 30 | |
| | B$_2$O$_3$ | | 10 | | | | | | | | | | | |
| | Al$_2$O$_3$ | | | | | | | | | | | | | |
| | Li$_2$O | | | | | | 12.5 | | | | | | | |
| | Na$_2$O | | 5 | | 10 | | | | | | | | 50 | |
| | K$_2$O | | | | | | | | | | | | | |
| | MgO | | | | | | | | 5 | | | | | |
| | CaO | | | | 20 | | | | | | 50 | | | |
| | SrO | | | | | | | | | | | | | |
| | BaO | | | | | | | | | | | | | |
| | ZnO | | | | | | | | 10 | | | | | |
| | TiO$_2$ | | 55 | | 40 | | 50 | | 50 | | 20 | | 20 | |
| | ZrO$_2$ | | | | | | | | | | | | | |
| | SnO | | | | | | | | | | | | | |
| | Sb$_2$O$_3$ | | | | | | | | | | | | | |
| | Sum | | 100 | | 100 | | 100 | | 100 | | 100 | | 100 | |
| | External division % by weight | Pt | | | | | | | | | | | | |
| | | Cl | | | | | | | | | | | | |
| Crystallization Conditions | Temperature (°C) | | 800 | | 800 | | 800 | | 800 | | 800 | | 800 | |
| | Time (h) | | 4 | | 4 | | 4 | | 4 | | 4 | | 4 | |
| Main crystal phase | | | NaTi$_2$(PO$_4$)$_3$ TiO$_2$ | | NaTi$_2$(PO$_4$)$_3$ TiO$_2$ | | LiTi$_2$(PO$_4$)$_3$ | | Mg$_{0.5}$Ti$_2$(PO$_4$)$_3$ | | Ca$_{0.5}$Ti$_2$(PO$_4$)$_3$ | | Na$_5$Ti(PO$_4$)$_3$ | |
| UV irradiation | | | None | Yes | None | Yes | | | | | | | | |
| Relative concentration (%) of MB 120 minutes after the irradiation | | | 65.8 | 14.5 | 67 | 3 | | | | | | | | |

[Table 10]

| Example | | | B38 | B39 | B40 | B41 | B42 |
|---|---|---|---|---|---|---|---|
| Glass composition (% by mole) | $SiO_2$ | | 9.52 | 9.52 | 9.52 | | |
| | $GeO_2$ | | | | | | |
| | $P_2O_5$ | | 30.95 | 30.95 | 30.95 | 37.5 | 37.5 |
| | $B_2O_3$ | | | | | | |
| | $Al_2O_3$ | | | | | | |
| | $Li_2O$ | | 11.90 | | | | |
| | $Na_2O$ | | | | | | |
| | $K_2O$ | | | 11.90 | | | |
| | $MgO$ | | | | | | |
| | $CaO$ | | | | | 12.5 | |
| | $SrO$ | | | | | | 12.5 |
| | $BaO$ | | | | | | |
| | $ZnO$ | | | | 11.90 | | |
| | $TiO_2$ | | 47.62 | 47.62 | 47.62 | 50 | 50 |
| | $ZrO_2$ | | | | | | |
| | $SnO$ | | | | | | |
| | $Sb_2O_3$ | | | | | | |
| | Sum | | 100.0 | 100.0 | 100.0 | 100 | 100 |
| External division % by weight | | Pt | | | | | |
| | | Cl | | | 3.58 | 1.80 | |
| Crystalli-zation Conditions | Temperature (°C) | | 850 | 850 | 850 | 850 | 850 |
| | Time (h) | | 4 | 4 | 4 | 4 | 4 |
| Main crystal phase | | | $LiTi_2(PO_4)_3$ | $KTi_2(PO_4)_3$ | $Zn_{0.5}Ti_2(PO_4)_3$ | $Ca_{0.5}Ti_2(PO_4)_3$ | $Sr_{0.5}Ti_2(PO_4)_3$ |
| UV irradiation | | | None / Yes | None / Yes | None / Yes | None / Yes | None / Yes |
| Relative concentration (%) of MB 120 minutes after the irradiation | | | 79 / 38 | 70 / 30 | 87 / 81 | 82 / 0 | 86 / 53 |

[Table 11]

| | Example | | B43 | B44 | B45 | B46 | B47 |
|---|---|---|---|---|---|---|---|
| Glass composition (% by mole) | $SiO_2$ | | | | | | |
| | $GeO_2$ | | | | | | |
| | $P_2O_5$ | | 37.5 | 37.40 | 37.47 | 37.48 | 37.49 |
| | $B_2O_3$ | | | | | | |
| | $Al_2O_3$ | | | | | | |
| | $Li_2O$ | | | | | | |
| | $Na_2O$ | | | | | | |
| | $K_2O$ | | | | | | |
| | $MgO$ | | | 12.47 | 12.49 | 12.49 | 12.50 |
| | $CaO$ | | | | | | |
| | $SrO$ | | | | | | |
| | $BaO$ | | 12.5 | | | | |
| | $ZnO$ | | | | | | |
| | $TiO_2$ | | 50 | 49.86 | 49.97 | 49.98 | 49.98 |
| | $ZrO_2$ | | | | | | |
| | $SnO$ | | | | | | |
| | $Sb_2O_3$ | | | | | | |
| | $MnO$ | | | 0.28 | | | |
| | $Ag_2O$ | | | | 0.07 | | |
| | $Cu_2O$ | | | | | 0.05 | |
| | $Fe_2O_3$ | | | | | | 0.03 |
| | $Sum$ | | | | | | |
| | External division % by weight | Pt | | | | | |
| | | Cl | | | | | |
| Crystallization Conditions | Temperature (°C) | | 850 | 850 | 850 | 850 | 850 |
| | Time (h) | | 4 | 4 | 4 | 4 | 4 |
| Main crystal phase | | | $Ba_{0.5}Ti_2(PO_4)_3$ | $Mg_{0.5}Ti_2(PO_4)_3$ $TiP_2O_7$ | $Mg_{0.5}Ti_2(PO_4)_3$ | $Mg_{0.5}Ti_2(PO_4)_3$ | $Mg_{0.5}Ti_2(PO_4)_3$ |
| UV irradiation | | | None / Yes | None / Yes | None / Yes | None / Yes | None / Yes |
| Relative concentration (%) of MB 120 minutes after the irradiation | | | 82 / 79 | 96 / 12 | 92 / 10 | 94 / 15 | 90 / 12 |

[Table 12]

| | | | B48 | | B49 | | B50 | | B51 | |
|---|---|---|---|---|---|---|---|---|---|---|
| Example | | | B48 | | B49 | | B50 | | B51 | |
| Glass composition (% by mole) | | $SiO_2$ | | | | | | | | |
| | | $GeO_2$ | | | | | | | | |
| | | $P_2O_5$ | 37.36 | | 37.34 | | 37.45 | | 37.47 | |
| | | $B_2O_3$ | | | | | | | | |
| | | $Al_2O_3$ | | | | | | | | |
| | | $Li_2O$ | | | | | | | | |
| | | $Na_2O$ | | | | | | | | |
| | | $K_2O$ | | | | | | | | |
| | | MgO | 12.45 | | 12.45 | | 12.48 | | 12.49 | |
| | | CaO | | | | | | | | |
| | | SrO | | | | | | | | |
| | | BaO | | | | | | | | |
| | | ZnO | | | | | | | | |
| | | $TiO_2$ | 49.82 | | 49.79 | | 49.94 | | 49.97 | |
| | | $ZrO_2$ | | | | | | | | |
| | | SnO | | | | | | | | |
| | | $Sb_2O_3$ | | | | | | | | 0.07 | |
| | | $Nb_2O_5$ | 0.37 | | | | | | | |
| | | $WO_3$ | | | 0.42 | | | | | |
| | | $Yb_2O_3$ | | | | | 0.12 | | | |
| | | Sum | | | | | | | | |
| External division % by weight | | Pt | | | | | | | | |
| | | Cl | | | | | | | | |
| Crystallization Conditions | Temperature (°C) | | 850 | | 850 | | 850 | | 850 | |
| | Time (h) | | 4 | | 4 | | 4 | | 4 | |
| Main crystal phase | | | $Mg_{0.5}Ti_2(PO_4)_3$ $TiP_2O_7$ | | $Mg_{0.5}Ti_2(PO_4)_3$ $TiP_2O_7$ | | $Mg_{0.5}Ti_2(PO_4)_3$ $TiP_2O_7$ | | $Mg_{0.5}Ti_2(PO_4)_3$ $TiP_2O_7$ | |
| UV irradiation | | | None | Yes | None | Yes | None | Yes | None | Yes |
| Relative concentration (%) of MB 120 minutes after the irradiation | | | 88 | 4 | 88 | 2 | 92 | 2 | 92 | 0 |

[Table 13]

| | | | B52 | | B53 | | B54 | |
|---|---|---|---|---|---|---|---|---|
| Example | | | | | | | | |
| Glass composition (% by mole) | SiO$_2$ | | | | | | 3 | |
| | GeO$_2$ | | | | | | | |
| | P$_2$O$_5$ | | 30 | | 30 | | 30 | |
| | B$_2$O$_3$ | | | | | | | |
| | Al$_2$O$_3$ | | | | | | | |
| | Li$_2$O | | | | | | | |
| | Na$_2$O | | | | | | | |
| | K$_2$O | | | | | | | |
| | MgO | | | | | | | |
| | CaO | | 35 | | 35 | | 35 | |
| | SrO | | | | | | | |
| | BaO | | | | | | | |
| | ZnO | | | | | | | |
| | TiO$_2$ | | 25 | | 30 | | 27 | |
| | ZrO$_2$ | | | | | | | |
| | SnO | | | | | | | |
| | Sb$_2$O$_3$ | | | | | | | |
| | CaF$_2$ | | 10 | | 5 | | 5 | |
| | Sum | | 100 | | 100 | | 100 | |
| External division % by weight | Pt | | | | | | | |
| | Cl | | | | | | | |
| Crystallization Conditions | Temperature (°C) | | 750 | | 750 | | 750 | |
| | Time (h) | | 4 | | 4 | | 4 | |
| Main crystal phase | | | Ca$_5$(PO$_4$)$_3$F Ca$_{0.5}$Ti$_2$(PO$_4$)$_3$ | | Ca$_5$(PO$_4$)$_3$F Ca$_{0.5}$Ti$_2$(PO$_4$)$_3$ | | Ca$_5$(PO$_4$)$_3$F Ca$_{0.5}$Ti$_2$(PO$_4$)$_3$ | |
| UV irradiation | | | None | Yes | None | Yes | None | Yes |
| Relative concentration (%) of MB 120 minutes after the irradiation | | | 83 | 26 | 75 | 2 | 78 | 3 |

[Table 14]

| | | | Example | B55 | | B56 | | B57 | |
|---|---|---|---|---|---|---|---|---|---|
| Glass composition (% by mole) | SiO$_2$ | | | | | | | | |
| | GeO$_2$ | | | | | | | | |
| | P$_2$O$_5$ | | | 30 | | 30 | | 30 | |
| | B$_2$O$_3$ | | | | | | | | |
| | Al$_2$O$_3$ | | | 3 | | | | | |
| | Li$_2$O | | | | | | | | |
| | Na$_2$O | | | | | | | 3 | |
| | K$_2$O | | | | | | | | |
| | MgO | | | | | 3 | | | |
| | CaO | | | 35 | | 32 | | 32 | |
| | SrO | | | | | | | | |
| | BaO | | | | | | | | |
| | ZnO | | | | | | | | |
| | TiO$_2$ | | | 27 | | 30 | | 30 | |
| | ZrO$_2$ | | | | | | | | |
| | SnO | | | | | | | | |
| | Sb$_2$O$_3$ | | | | | | | | |
| | CaF$_2$ | | | 10 | | 5 | | 5 | |
| | Sum | | | 100 | | 100 | | 100 | |
| External division % by weight | | Pt | | | | | | | |
| | | Cl | | | | | | | |
| Crystallization Conditions | Temperature (°C) | | | 750 | | 750 | | 750 | |
| | Time (h) | | | 4 | | 4 | | 4 | |
| Main crystal phase | | | | Ca$_5$(PO$_4$)$_3$F Ca$_{0.5}$Ti$_2$(PO$_4$)$_3$ | | Ca$_5$(PO$_4$)$_3$F Ca$_{0.5}$Ti$_2$(PO$_4$)$_3$ Mg$_{0.5}$Ti$_2$(PO$_4$)$_3$ | | Ca$_5$(PO$_4$)$_3$F Ca$_{0.5}$Ti$_2$(PO$_4$)$_3$ NaTi$_2$(PO$_4$)$_3$ | |
| UV irradiation | | | | None | Yes | None | Yes | None | Yes |
| Relative concentration (%) of MB 120 minutes after the irradiation | | | | 80 | 3 | 70 | 0 | 65 | 0 |

Here, the kind of crystal phase precipitated in the glass ceramics obtained in Examples B1 to B57 was identified by an X-ray diffraction apparatus (manufactured by Philips Inc., tradename: X'Pert-MPD).

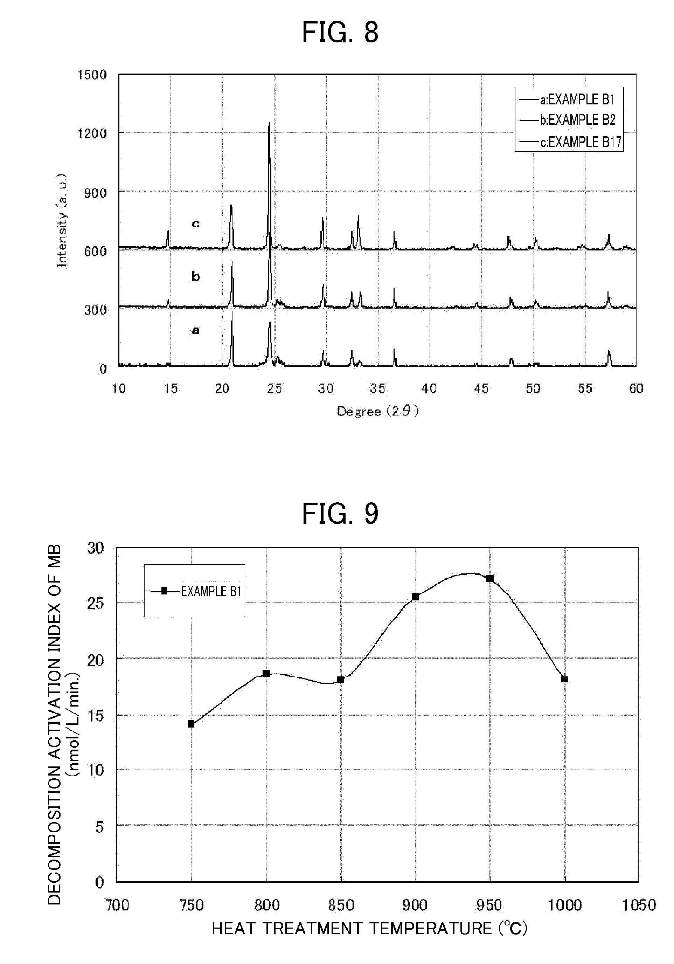

FIG. 8 illustrates the results of X-ray diffraction analysis (XRD) of the samples in Examples B1, B2, and B26. In the XRD patterns in these Examples, a peak of the Mg$_{0.5}$Ti$_2$(PO$_4$)$_3$ crystal was observed in the vicinity of incident angle 2θ = 20.9° or 24.5°, or the like.

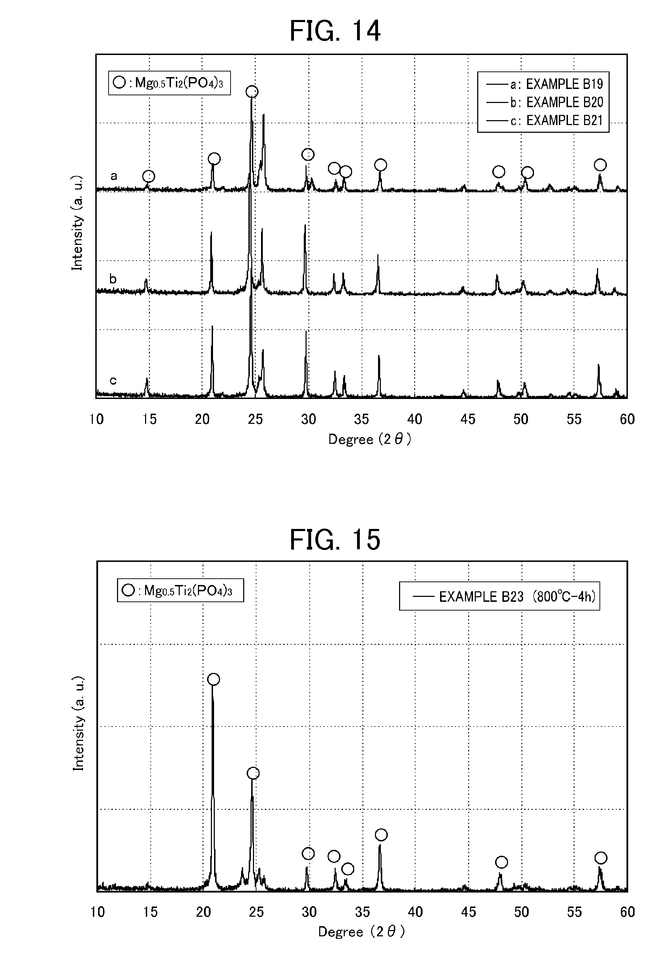

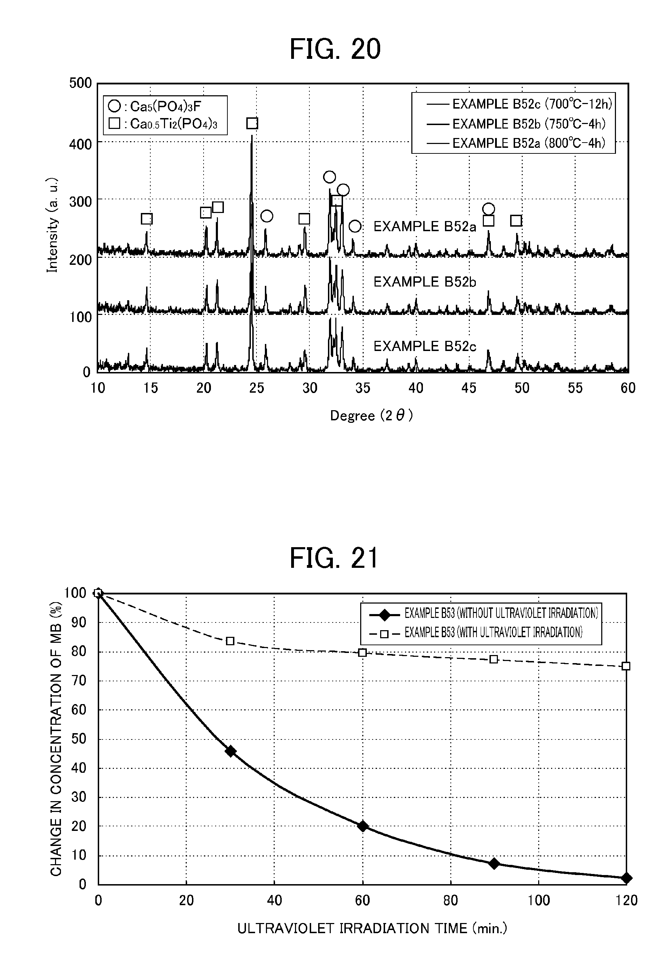

Further, as shown in Tables 4 to 14, the glass ceramics in Examples B1 to B57 contain Mg$_{0.5}$Ti$_2$(PO$_4$)$_3$ crystals, Ca$_{0.5}$Ti(PO$_4$)$_3$ crystals, Na$_5$Ti(PO$_4$)$_3$ crystals, NaTi$_2$(PO$_4$)$_3$ crystals, LiTi$_2$(PO$_4$) crystals, KTi$_2$(PO$_4$) crystals, (Mg, Ca)Ti$_2$(PO$_4$)$_3$ crystals, and (Mg, Ca, Ba)$_{0.5}$Ti$_2$(PO$_4$)$_3$ crystals, which are NASICON crystals having high photocatalytic activity, as main crystal phases. Here, FIG. 14 illustrates the XRD patterns of the glass ceramics in Examples B19 to B21, FIG. 15 illustrates the XRD pattern of the glass ceramic in Example B23, and FIG. 20 illustrates the XRD pattern of the glass ceramic in Example B52. Therefore, it is assumed that the glass ceramic of the present invention shows excellent photocatalytic activity.

In particular, as shown in Tables 13 and 14, all of the crystal phases precipitated in the glass ceramics in Examples B52 to B57 contained Ca$_5$(PO$_4$)$_3$F crystals as apatite crystals and NASICON Ca$_{0.5}$Ti$_2$(PO$_4$)$_3$ crystals having high photocatalytic activity. In addition, as a NASICON photocatalytic crystal along with the crystals, Examples B56 and B57 contained Mg$_{0.5}$Ti$_2$(PO$_4$) crystals and NaTi$_2$(PO$_4$) crystals, respectively.

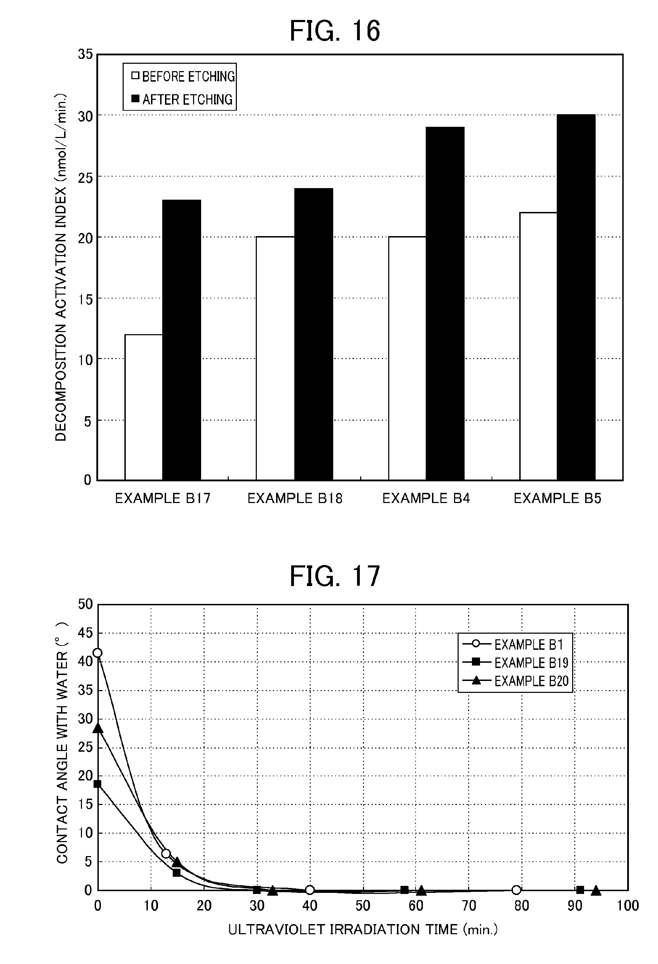

In addition, in the XRD patterns in Examples 19 to 21, as clearly shown in FIG. 14, a peak in the vicinity of 2θ = 25.7° other than a diffraction peak by the NASICON crystal phase was clearly observed. The diffraction peak has not been yet identified, but it is strongly assumed that the peak is caused by the solid solution of TiO$_2$. For that reason, as apparently shown even in FIG. 16, there was no case where photocatalytic characteristics of the glass ceramic are reduced even though the crystal phase is produced.

Further, in the XRD pattern in Example B23, it was observed that a peak in the vicinity of 2θ = 20.8° was notably exhibited and showed a strong orientation. It is assumed that this was because the glass ceramic in Example B23 contains Al$_2$O$_3$ components.

As shown in Tables 4 to 7, it was observed that the glass ceramics in Examples B1 to B25 have entirely 3 or more and specifically 7 or more in terms of decomposition activation index (nmol/l/min) of methylene blue based on Japanese Industrial Standards JIS R 1703-2:2007, and have excellent decomposition performance.

Among them, when the crystallization temperature of the sample in Example B1 is changed, the change in each decomposition activation index was as shown in FIG. 9. From the fact that there was a change in value of the MB decomposition activation index of the glass ceramic due to the crystallization temperature, it was confirmed that it is possible to enhance higher photocatalytic activity by optimizing the crystallization conditions.

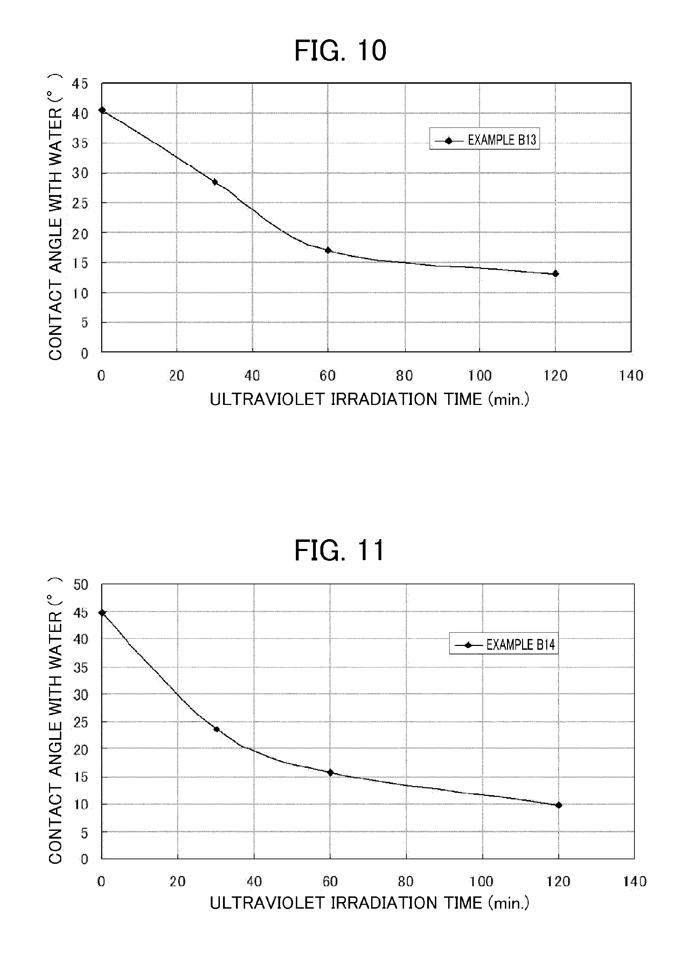

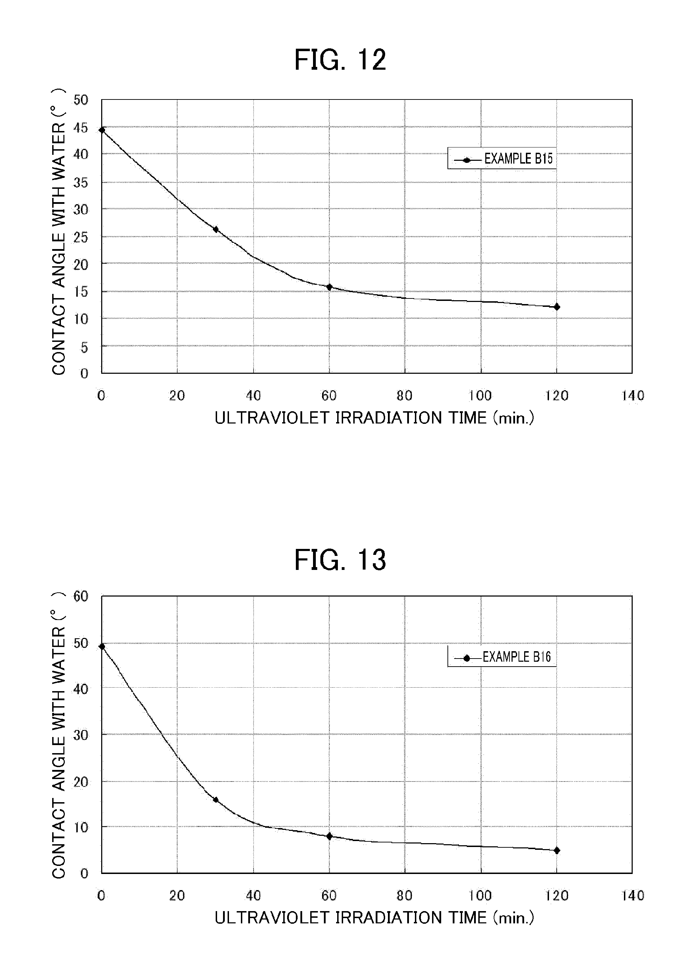

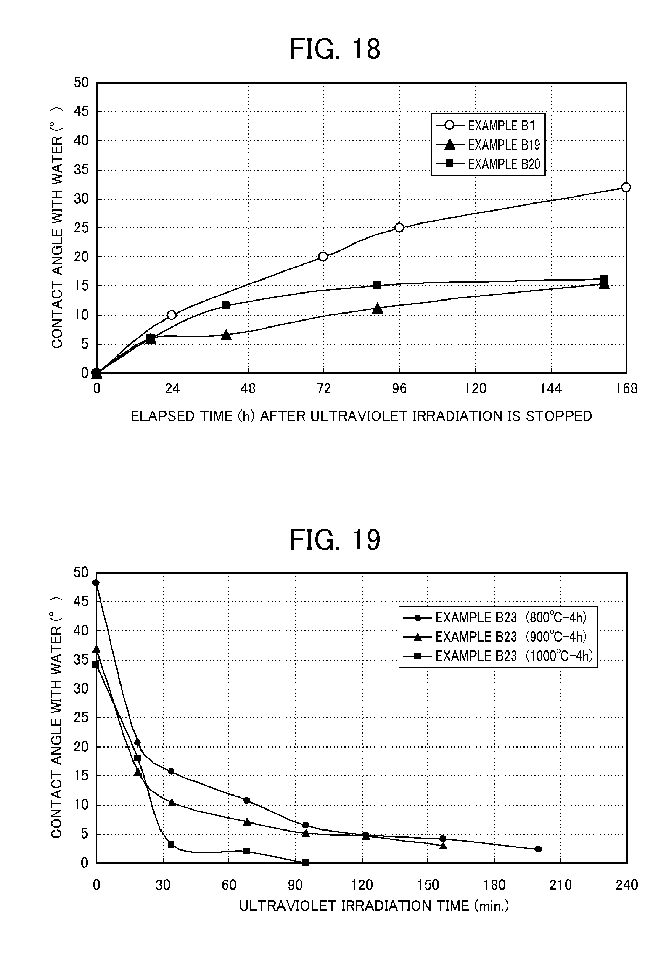

Further, the evaluation results of hydrophilic properties in Examples B13 to B16 are as shown in FIGS. 9 to 12. In addition, the evaluation results of hydrophilic properties in Examples B1, B19 and B20 are as shown in FIG. 17. Furthermore, the evaluation results of hydrophilic properties in Example B23 are shown as in FIG. 19. As shown in the drawings, it was confirmed that the contact angles with water were 30° or less by the ultraviolet irradiation for 30 minutes or more, 20° or less by the ultraviolet irradiation for 60 minutes or more, and 15° or less by the ultraviolet irradiation for 120 minutes or more, respectively. Accordingly, it was revealed that the photocatalytic glass ceramic of the present invention had high hydrophilic properties.

Here, particularly for Examples B1, B19, and B20, the relationship between the elapsed time after the ultraviolet irradiation was stopped and the contact angle with waterdrop was obtained, and as a result, it was confirmed that, as shown in FIG. 18, the contact angle with water was 20° or less for 72 hours after the ultraviolet irradiation was stopped and the contact angle with water was 30° or less for 144 hours after the irradiation of ultraviolet ray was stopped. Accordingly, it was revealed that the photocatalytic glass ceramic of the present invention continuously maintained hydrophilic properties over a long time even after the irradiation of ultraviolet rays was stopped.

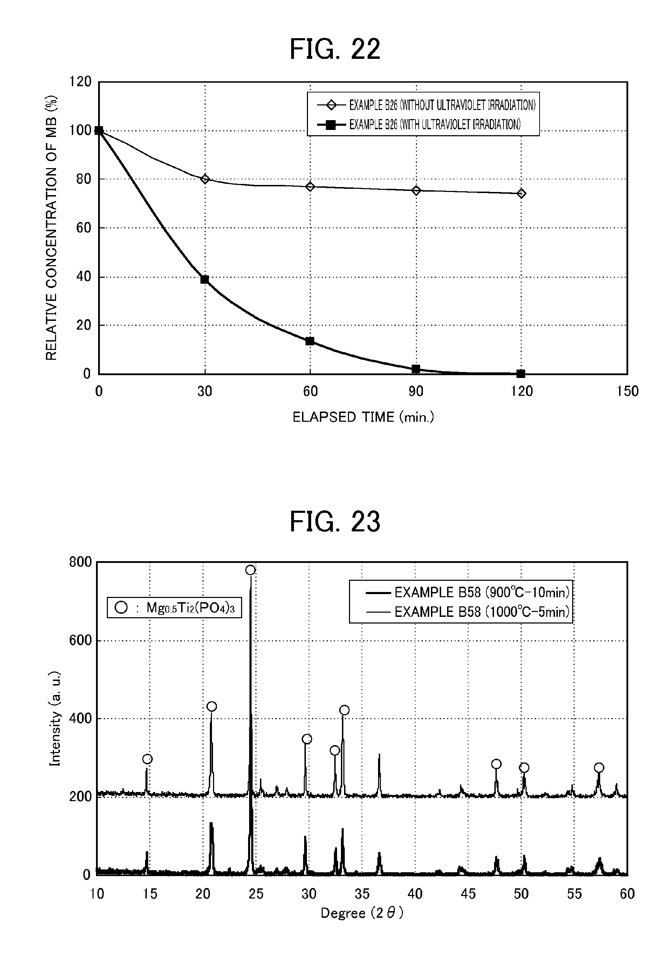

On one hand, the results of decomposition capacity of MB for the granular sample are as shown in Tables 8 to 14. As known from the results, it was shown that the sample on which ultraviolet ray was irradiated exhibited a significant reduction in concentration of MB and had significant photocatalytic characteristics. On one hand, the sample on which ultraviolet ray was not irradiated also showed a slight reduction in concentration of MB, but it is thought that this resulted from the adsorption of MB on the granular sample, not decomposition by photocatalytic activity. As an example, for the sample in Example B53, the change in relative concentration of MB over time is shown in FIG. 21. Further, for the sample in Example B26, the change in relative concentration of MB over time is shown in FIG. 22.

In particular, according to FIGS. 21 and 22, 30 minutes after the irradiation of ultraviolet rays, the relative concentration of MB with the irradiation of ultraviolet rays was reduced to 45% or less of the relative concentration of MB, while the relative concentration of MB without the irradiation of ultraviolet rays was 80% or more of the relative concentration of MB. For that reason, it was confirmed that the irradiation of ultraviolet rays greatly reduced the concentration of MB. In particular, in Example B53, it was confirmed that the relative concentration of MB 120 minutes after the irradiation of ultraviolet rays was reduced to 3% or less and significantly excellent photocatalytic action was shown even though the sample contains a small amount of the NASICON crystal. This is thought to be because MB is captured near the NASICON crystal on the surface of the glass ceramic by the adsorption performance of organic materials by the apatite crystal, and high photocatalytic activity by the NASICON crystal was more effectively exhibited.

Further, for Example B26, a test of deodorization properties was performed as follows. That is, a glass container with an internal diameter of 9.5 cm was filled with 12 g of the sample, and then the sample was put into an airtight reaction container having a volume of about 580 ml. Thereafter, about 90 ppm of acetaldehyde was injected into the airtight reaction container, acetaldehyde was adsorbed on the sample for 2 hours, and then an ultraviolet ray with an intensity of 1 mW/cm$^2$ was irradiated. The gas in the reaction container was measured at every predetermined time interval with gas chromatography (GC-84PF: Shimadzu Corp.) to observe the change. As a result, as the time for ultraviolet irradiation gets longer, it was recognized that the concentration of acetaldehyde was decreased and the concentration of carbon dioxide was increased. Specifically, the concentration of carbon dioxide produced became 150 ppm while acetaldehyde was not detected, after 3 hours of the irradiation. Therefore, it was revealed that acetaldehyde was decomposed by carbon dioxide by irradiating ultraviolet rays on the sample.

In order to observe the change in precipitated crystals when the crystallization conditions were changed, the crystallization was performed by changing the crystallization conditions (temperature and time) using the same components as in Example B52, and the X-ray diffraction analysis (XRD) was performed. That is, in Example B52a, the crystallization temperature was set as 700°C and the heat treatment time for the crystallization was set as 12 hours. Further, in Example B52b, the crystallization temperature was set as 750°C and the heat treatment time for the crystallization was set as 4 hours. In addition, in Example B52c, the crystallization temperature was set as 800°C and the heat treatment time for the crystallization was set as 4 hours.

As a result, as shown in FIG. 20, in the XRD patterns in Examples B52a to B52c, a peak of $Ca_5(PO_4)_3F$ crystals, which was represented by "O", other than in the vicinity of the incident angle $2\theta = 31.9°$, was observed. Further, a peak of $Ca_{0.5}Ti_2(PO_4)_3$ crystals, which was represented by "□", other than in the vicinity of the incident angle $2\theta = 24.5°$, was also observed. Therefore, it was assumed that the glass ceramics in Examples B52a to B52c had the adsorption action of organic materials by the apatite crystals along with excellent photocatalytic activity by the NASICON crystal and the photocatalytic activity was enhanced. Further, from the result in FIG. 20, it was revealed that the crystal structure of the glass ceramic could be controlled by changing the crystallization temperature. Here, in the comparison of crystallization temperatures 700°C, 750°C, and 800°C, it was revealed that the temperature 800°C is preferred as the crystallization temperature because the peaks of $Ca_5(PO_4)_3F$ crystals and $Ca_{0.5}Ti_2(PO_4)$ crystals are most strongly detected at 800°C.

As shown in the above-described experimental results, it was confirmed that the glass ceramics containing NASICON crystals in Examples B1 to B57 have excellent photocatalytic activity, and the photocatalytic crystal was uniformly distributed in glass, and thus there was no loss of photocatalytic functions by peeling-off and the glass ceramic could be used as an a photocatalytically functional material having excellent durability.

Example B58: Manufacture of Sintered Body by Spark Plasma Sintering Method

The glass obtained in Example B26 was ground with planet ball mills to obtain a pulverulent body with a particle size of 10 μm or less. 2 g of the pulverulent body was taken and filled in a die formed of graphite with an internal diameter of 20 mm, and sintering was performed at 900°C to 1,000°C for 5 minutes to 10 minutes to obtain a bulk sintered body while applying a pressure of 30 MPa in an upward and downward direction in the vacuum atmosphere by using a spark plasma sintering (SPS) apparatus (SPA-1030 manufactured by Sumitomo Coal Mining Co., Ltd.). The sintered body obtained was polished, and then subjected to etching treatment in a 4.6 wt% HF aqueous solution for 1 minute to obtain a sample for evaluating physical properties. As a result, as shown in the XRD pattern in FIG. 23, it was confirmed that the NASICON crystals $Mg_{0.5}Ti_2(PO_4)$ were produced in the sintered body and the sintered body was composed of glass ceramic.

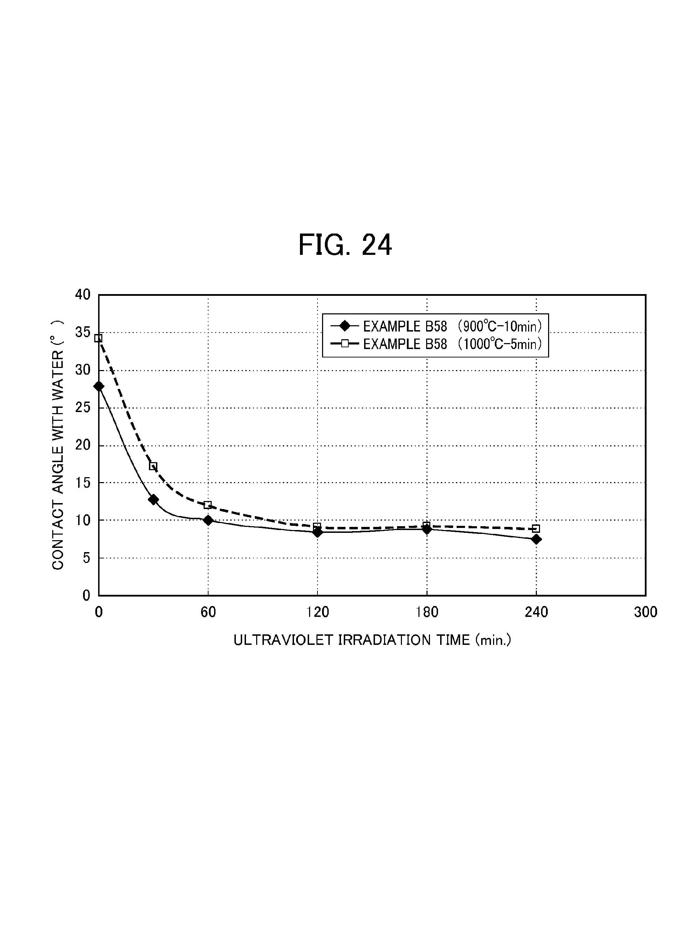

Further, hydrophilic properties were evaluated by measuring the contact angle between the sample surface and the waterdrop for the sample for evaluation by using a θ/2 method. That is, water was added dropwise on the surface of the glass before and after ultraviolet irradiation, the height h from the surface of the glass to the vertex of the waterdrop and the radius r of the face contacting a test specimen of the waterdrop were measured by using a contact angle gauge (DM501 manufactured by Kyowa Interface Science Co., Ltd.), and the contact angle θ with water was obtained from the relationship equation of θ = 2tan-1 (h/r). In addition, a black light fluorescent lamp (FL10-BLB manufactured by Toshiba Litec Co., Ltd.) was used to irradiate the ultraviolet ray with a luminous intensity of 1 mW/cm$^2$ and then samples, on which ultraviolet ray was irradiated for 0 minute (that is, not irradiated), 30 minutes, 60 minutes, 120 minutes, 180 minutes, and 240 minutes, were manufactured. As a result, as shown in FIG. 24, from the fact that the contact angle with water was reduced to approximately 10° by the irradiation of ultraviolet rays, it was shown that the sintered body has hydrophilic properties.

Example B59: Manufacture of Glass Ceramic Fiber

From the glass raw materials with the compositions described in Examples B19 and 26, a glass ceramic fiber was manufactured by using a spinning method. That is, glass raw materials were mixed well and put into a platinum pot to melt the mixture at 1,450°C to 1,500°C for 3 hours, then the melt obtained was dropped onto a rotor which was rotating at 5,000 revolution per minute, and the centrifugal force of the rotor was used to manufacture a fiber glass with a diameter of 100 μm or less. The fiber glass obtained was subjected to heat treatment at 750°C to 800°C over 30 minutes to manufacture a glass ceramic fiber.

The glass ceramic fiber was subjected to etching treatment in a 4.6 wt% HF aqueous solution for 1 minute to obtain a sample, 0.05 g of the sample was taken and put into a container made of polystyrene, 3 ml of a methylene blue (MB) aqueous solution at a concentration of 0.01 mmol/L was injected into the container, and then ultraviolet ray (manufactured by Toshiba Litec Co., Ltd., model number: FL10BLB) with a luminous intensity of 1 mW/cm$^2$ was irradiated for 60 minutes. As a result, the color of the methylene blue aqueous solution was dimmed after the irradiation of ultraviolet ray, and thus it was revealed that methylene blue was decomposed due to the irradiation of ultraviolet rays by photocatalytic characteristics of the glass ceramic fiber.

Further, for the glass ceramic fiber manufactured, the kind of precipitated crystal phase was analyzed by using x-ray diffraction (XRD), and as a result, it was confirmed that $Mg_{0.5}Ti_2(PO_4)_3$ as a NASICON crystal was precipitated in the glass ceramic fiber.

Example B60: Transport into Porous Substrate

As raw materials, $SiO_2$, $NH_4H_2PO_4$, $Al(PO_3)_3$, and $Mg(PO_4)_3$ were used to weigh and mix the raw materials uniformly such that a composition ratio of $5SiO_2$-$5Al_2O_3$-$34.5P_2O_5$-$12.5MgO$ (% by mole) was obtained, and then the mixture was introduced into a platinum crucible and melted at a temperature range of 1,450°C for 3 hours. Thereafter, the glass solution was cast into water to obtain a granular glass. In addition, the glass was ground with planet ball mills to obtain a glass powder with an average particle diameter of 5 μm. Thereafter, the glass powder was mixed with an aqueous dispersion liquid to obtain a slurry. A porous ceramic material with a surface area of 60 cm x 10 cm (manufactured by Bridgestone Co., Ltd., ceramic form) was immersed in the slurry, dried, and then sintered at 800°C for 30 minutes to obtain a complex composed of a porous ceramic. The crystal phase in the complex was analyzed by X-ray diffraction (XRD), and from the fact that a peak resulting from the NASICON crystals $Mg_{0.5}Ti_2(PO_4)$ was observed, it was known that the $Mg_{0.5}Ti_2(PO_4)$ crystals were transported on the surface of the complex. In addition, the complex was subjected to etching treatment in a 4.6% HF aqueous solution for 30 seconds to perform a deodorization test. That is, the complex was put into an airtight reaction container having a volume of about 580 ml, about 90 ppm of acetaldehyde was injected into the airtight reaction container, acetaldehyde was adsorbed on the complex for 2 hours, and then an ultraviolet ray with an intensity of 1 mW/cm$^2$ was irradiated. The gas in the reaction container was measured at every predetermined time interval with gas chromatography (GC-84PF: Shimadzu Corp.) to observe the change. As a result, from the fact that acetaldehyde was not detected at a time point of the initiation of irradiation of ultraviolet rays, it was known that acetaldehyde had been completely adsorbed on the complex. After the initiation of ultraviolet irradiation, the concentration of carbon dioxide was increased from zero to reach 185 ppm after 3 hours. Therefore, it was revealed that acetaldehyde adsorbed on the complex was almost completely decomposed by carbon dioxide.

As described above, the Examples of the present invention have been described in detail for the purpose of illustration, but the present invention is not limited to the Examples. Various modifications may be made by those skilled in the art without departing from the spirit and scope of the present invention, and are also included in the scope of the present invention. In addition, the glass ceramic of the present invention has almost the same expansion coefficient as that of silicon and the electric conductivity thereof may be widely adjusted, and thus it is possible to use the glass ceramic of the present invention as an MEMS anodically bonded to silicon or a semiconductor device member.

**Claims**

1. A photocatalyst comprising a crystal having a NASICON structure.

2. The photocatalyst according to claim 1, wherein the NASICON structure is represented by Formula $A_mE_2(XO_4)_3$ (in the formula, a primary element A is one or more selected from the group composed of Li, Na, K, Cu, Ag, Mg, Ca, Sr, and Ba; a secondary element E is one or more selected from the group composed of Zn, Al, Fe, Ti, Sn, Zr, Ge, Hf, V, Nb, and Ta; a tertiary element X is one or more selected from the group composed of Si, P, S, Mo, and W; and a coefficient m is 0 or more, and 5 or less).

3. The photocatalyst according to claim 1 or 2, further comprising: a compound crystal comprising one or more components selected from Zn, Ti, Zr, W, and P.

4. The photocatalyst according to claim 3, wherein the compound crystal comprises one or more crystals selected from $TiO_2$, $WO_3$, $ZnO$, $TiP_2O_7$, and solid solutions thereof.

5. The photocatalyst according to any one of claims 1 to 4, wherein crystals comprised in the photocatalyst have an average particle diameter in a range of 3 nm or more, and 10 $\mu$m or less.

6. The photocatalyst according to any one of claims 1 to 5, wherein a catalytic activity is exhibited by light at a wavelength from an ultraviolet region to a visible region.

7. The photocatalyst according to claim 6, wherein a decomposition activation index of methylene blue based on Japanese Industrial Standards JIS R 1703-2:2007 is 3.0 nmol/l/min or more.

8. The photocatalyst according to any one of claims 1 to 7, wherein a contact angle between a surface irradiated by light at a wavelength from the ultraviolet region to the visible region and a water drop is 30° or less.

9. The photocatalyst according to any one of claims 1 to 8, wherein a content of one or more non-metal element components selected from the group composed of F components, Cl components, Br components, S components, N components, and C components is 20.0% or less by mass based on a total mass of the photocatalyst.

10. The photocatalyst according to claim 9, wherein at least one metal particle selected from the group composed of Ag, Au, Pd, Re, and Pt is comprised in an amount of 5.0% or less by mass based on a total mass of the photocatalyst.

11. The photocatalyst according to any one of claims 1 to 10, wherein rare earth components and/or transition metal components are comprised in an amount of from 0% by mass to 20% by mass and from 0% by mass to 10% by mass, based on a total mass of the photocatalyst.

**12.** The photocatalyst according to any one of claims 1 to 8, wherein the photocatalyst consists of glass ceramic.

**13.** The photocatalyst according to claim 12, wherein the photocatalyst comprises 3% by mole to 70% by mole of one or more components selected from $SiO_2$ components, $GeO_2$ components, $P_2O_5$ components, and $B_2O_3$, 0.1% by mole to 60% by mole of one or more components selected from $Rn_2O$ components, RO components, $Cu_2O$, and $Ag_2O$, and 0.1% by mole to 90% by mole of one or more components selected from ZnO components, $Al_2O_3$ components, $Fe_2O_3$ components, $TiO_2$ components, $SnO_2$ components, $ZrO_2$ components, $HfO_2$ components, $V_2O_5$ components, $Nb_2O_5$ components, $Ta_2O_5$ components, $MoO_2$ components, and $WO_3$ components, based on a total material mass of a glass having a composition in terms of oxides (in the formula, Rn is one or more selected from Li, Na, K, Rb, and Cs, and R is one or more selected from Be, Mg, Ca, Sr, and Ba).

**14.** The photocatalyst according to claim 12 or 13, wherein the photocatalyst comprises 0% by mole to 30% by mole of $Bi_2O_3$ components and/or $TeO_2$ components, 0% by mole to 30% by mole of $Ln_2O_3$ components (Ln is one or more selected from Y, Ce, La, Nd, Gd, Dy and Yb), 0% by mole to 10% by mole of $M_xO_y$ components (M is one or more selected from Cr, Mn, Co and Ni, and each of x and y is the smallest natural number satisfying x:y = 2:(a valence of M)), and 0% by mole to 5% by mole of $As_2O_3$ components and/or $Sb_2O_3$ components, based on a total material mass of a glass having a composition in terms of oxides.

**15.** The photocatalyst according to any one of claims 12 to 14, wherein the photocatalyst comprises one or more non-metal element components selected from the group composed of F components, Cl components, Br components, S components, N components, and C components in an amount of 20% or less by mass as an external division based on a total mass of the photocatalyst in terms of oxides.

**16.** The photocatalyst according to any one of claims 12 to 15, wherein the photocatalyst comprises at least one metal component selected from the group composed of Au, Pd, Re, and Pt in an amount of 5% or less by mass based on a total mass of the photocatalyst in terms of oxides.

**17.** The photocatalyst according to any one of claims 12 to 16, further comprising: an apatite crystal.

**18.** The photocatalyst according to claim 17, wherein the apatite crystal is represented by Formula $Q_5(ZO_4)_3D$ (in the formula, Q is one or more selected from the group composed of Ca, Sr, Ba, Al, Y, La, Ti, Na, K, and Cu, Z is one or more selected from the group composed of P, Si, Al and V, and D is one or more selected from the group composed of F, Cl, Br, OH, O, S, and N.).

**19.** The photocatalyst according to any one of claims 12 to 18, wherein the photocatalyst has a powder granulated shape or fiber shape.

**20.** A slurry mixture comprising the photocatalyst according to any one of claims 1 to 19.

**21.** The slurry mixture according to claim 20, wherein a content of the photocatalyst is 2% by mass or more based on the total mixture.

**22.** A forming member comprising the photocatalyst according to any one of claims 1 to 19.

**23.** A coating comprising the photocatalyst according to any one of claims 1 to 19.

**24.** A coating film forming member formed by applying the paint according to claim 23 on a member.

**25.** The coating film forming member according to claim 24, wherein the member is composed of metal, ceramic, graphite, glass, stone, cement, concrete or combinations thereof, or a laminated body thereof.

**26.** A glass ceramic composite comprising:

a substrate; and
a glass ceramic layer provided on the substrate,

wherein the glass ceramic layer comprises the photocatalyst of any one of claims 1 to 19.

27. A glass wherein a crystal having photocatalytic activity is produced by heating to become the photocatalyst according to any one of claims 1 to 19.

28. The glass according to claim 27, wherein the glass has a powder granulated shape or fiber shape.

29. A slurry mixture comprising the glass according to claim 27 or 28.

30. A building material comprising the photocatalyst according to any one of claims 1 to 19 at least on a surface thereof.

31. A clarification material comprising the photocatalyst according to any one of claims 1 to 19 at least on a surface thereof.

# FIG. 1

# FIG. 2

## FIG. 3

□ : $Ca_{0.5}Ti_2(PO_4)_3$

—— EXAMPLE A7 (1300°C-2h)

Intensity (a. u.)

Degree (2θ)

## FIG. 4

RELATIVE CONCENTRAION OF MB (%)

EXAMPLE A7
(WITH ULTRAVIOLET IRRADIATION)

EXAMPLE A7
(WITHOUT ULTRAVIOLET IRRADIATION)

ULTRAVIOLET IRRADIATION TIME (min.)

# FIG. 5

# FIG. 6

FIG. 7

# FIG. 8

# FIG. 9

## FIG. 10

## FIG. 11

## FIG. 12

Graph: CONTACT ANGLE WITH WATER (°) vs ULTRAVIOLET IRRADIATION TIME (min.) — EXAMPLE B15

## FIG. 13

Graph: CONTACT ANGLE WITH WATER (°) vs ULTRAVIOLET IRRADIATION TIME (min.) — EXAMPLE B16

# FIG. 14

○ : Mg$_{0.5}$Ti$_2$(PO$_4$)$_3$

a : EXAMPLE B19
b : EXAMPLE B20
c : EXAMPLE B21

Intensity (a. u.)

Degree (2θ)

# FIG. 15

○ : Mg$_{0.5}$Ti$_2$(PO$_4$)$_3$

EXAMPLE B23 (800°C-4h)

Intensity (a. u.)

Degree (2θ)

## FIG. 16

## FIG. 17

## FIG. 18

## FIG. 19

# FIG. 20

Legend:
○ : $Ca_5(PO_4)_3F$
□ : $Ca_{0.5}Ti_2(PO_4)_3$

— EXAMPLE B52c (700°C-12h)
— EXAMPLE B52b (750°C-4h)
— EXAMPLE B52a (800°C-4h)

EXAMPLE B52a
EXAMPLE B52b
EXAMPLE B52c

Y-axis: Intensity (a. u.)
X-axis: Degree (2θ)

# FIG. 21

— EXAMPLE B53 (WITHOUT ULTRAVIOLET IRRADIATION)
--□-- EXAMPLE B53 (WITH ULTRAVIOLET IRRADIATION)

Y-axis: CHANGE IN CONCENTRATION OF MB (%)
X-axis: ULTRAVIOLET IRRADIATION TIME (min.)

## FIG. 22

## FIG. 23

# FIG. 24

## INTERNATIONAL SEARCH REPORT

| International application No. |
|---|
| PCT/JP2011/055710 |

**A. CLASSIFICATION OF SUBJECT MATTER**
*B01J35/02*(2006.01)i, *B01J27/18*(2006.01)i, *C09D5/16*(2006.01)i, *C09D7/12* (2006.01)i, *C09D201/00*(2006.01)i

According to International Patent Classification (IPC) or to both national classification and IPC

**B. FIELDS SEARCHED**

Minimum documentation searched (classification system followed by classification symbols)
B01J35/02, B01J27/18, C09D5/16, C09D7/12, C09D201/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus/JMEDPlus/JST7580(JDreamII), Science Direct

**C. DOCUMENTS CONSIDERED TO BE RELEVANT**

| Category* | Citation of document, with indication, where appropriate, of the relevant passages | Relevant to claim No. |
|---|---|---|
| X<br><br>A | JP 2002-200148 A (Toagosei Co., Ltd.),<br>16 July 2002 (16.07.2002),<br>claims 1, 2; paragraphs [0005], [0006], [0009], [0010]<br>(Family: none) | 1-11,20-26, 30,31<br>12-19,27-29 |
| X<br><br>A | LE POLLES G. et al., Luminescence du cuivre monovalent dans les phosphates de zirconium de structure Nasicon, C. R. Acad. Sci. Paris, Ser. 2, 1988.03.28, Vol.306 No.12, p.765-769 | 1,9-11, 20-26,30,31<br>2-8,12-19 27-29 |
| A | JP 2008-120655 A (Tohoku University),<br>29 May 2008 (29.05.2008),<br>entire text<br>(Family: none) | 1-31 |

☒ Further documents are listed in the continuation of Box C.　　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 April, 2011 (22.04.11) | 17 May, 2011 (17.05.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/055710

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-57266 A   (Tohoku University),<br>19 March 2009 (19.03.2009),<br>entire text<br>(Family: none) | 1-31 |
| A | JP 09-315837 A   (Toshiba Lighting & Technology Corp.),<br>09 December 1997 (09.12.1997),<br>entire text<br>(Family: none) | 1-31 |
| P,X | WO 2010/041760 A1   (Ohara Inc.),<br>15 April 2010 (15.04.2010),<br>entire text<br>(Family: none) | 1-31 |
| P,X | JP 2010-275175 A   (Ohara Inc.),<br>09 December 2010 (09.12.2010),<br>entire text<br>(Family: none) | 1-31 |

Form PCT/ISA/210 (continuation of second sheet) (July 2009)

**INTERNATIONAL SEARCH REPORT**

| International application No. |
| --- |
| PCT/JP2011/055710 |

| Box No. II    Observations where certain claims were found unsearchable (Continuation of item 2 of first sheet) |
| --- |

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

| Box No. III    Observations where unity of invention is lacking (Continuation of item 3 of first sheet) |
| --- |

This International Searching Authority found multiple inventions in this international application, as follows:

   The invention in claim 1 does not have novelty and a special technical feature since the invention is described in the following document 1 or 2, and consequently, the invention in claim 1 does not comply with the requirement of unity.
   The inventions in claims as indicated below are relevant to main invention.

   Claims 1 - 11, 20, 21

                      (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
    ☐ The additional search fees were accompanied by the applicant's protest and, where applicable, the payment of a protest fee.
    ☐ The additional search fees were accompanied by the applicant's protest but the applicable protest fee was not paid within the time limit specified in the invitation.
    ☐ No protest accompanied the payment of additional search fees.

Form PCT/ISA/210 (continuation of first sheet (2)) (July 2009)

**INTERNATIONAL SEARCH REPORT**

| International application No. |
| --- |
| PCT/JP2011/055710 |

Continuation of Box No.III of continuation of first sheet(2)


Document 1: JP 2002-200148 A

Document 2: LE POLLES G. et al., Luminescence du cuivre monovalent dans les phosphates de zirconium de structure Nasicon, C. R. Acad. Sci. Paris, Ser. 2, 1988.03.28, Vol.306 No.12, p.765-769

Form PCT/ISA/210 (extra sheet) (July 2009)

**EP 2 545 992 A1**

**Patent documents cited in the description**

- JP 2004283769 A
- JP 2007075678 A
- JP 2000189806 A
- JP 2008081712 A
- JP 2007230812 A
- JP 9315837 A
- JP 2008120655 A
- JP 2009057266 A